(19) Europäisches Patentamt
European Patent Office
Office européen des brevets

(11) EP 2 224 284 A1

(12) EUROPEAN PATENT APPLICATION
published in accordance with Art. 153(4) EPC

(43) Date of publication:
**01.09.2010 Bulletin 2010/35**

(21) Application number: **08859390.0**

(22) Date of filing: **12.12.2008**

(51) Int Cl.:
***G02F 1/37*** *(2006.01)*

(86) International application number:
**PCT/JP2008/072695**

(87) International publication number:
**WO 2009/075360 (18.06.2009 Gazette 2009/25)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.12.2007 JP 2007320468**
**12.12.2007 JP 2007320257**

(71) Applicants:
- **Osaka Prefecture University Public Corporation**
  **Osaka 599-8531 (JP)**
- **Sumitomo Electric Industries, Ltd.**
  **Chuo-ku**
  **Osaka-shi**
  **Osaka 540-0041 (JP)**
- **Sumitomo Electric Hardmetal Corp.**
  **Itami-shi**
  **Hyogo 664-0016 (JP)**

(72) Inventors:
- **ISHIHARA, Hajime**
  **Sakai-shi**
  **Osaka 599-8531 (JP)**
- **KUZUHARA, Satoshi**
  **Sakai-shi**
  **Osaka 599-8531 (JP)**
- **EBATA, Keiji**
  **Osaka-shi**
  **Osaka 554-0024 (JP)**
- **KURISU, Kenichi**
  **Osaka-shi**
  **Osaka 554-0024 (JP)**

(74) Representative: **HOFFMANN EITLE**
**Patent- und Rechtsanwälte**
**Arabellastrasse 4**
**81925 München (DE)**

# (54) COMPOSITE PHOTONIC STRUCTURE ELEMENT, SURFACE EMITTING LASER USING THE COMPOSITE PHOTONIC STRUCTURE ELEMENT, WAVELENGTH CONVERSION ELEMENT, AND LASER PROCESSING DEVICE USING THE WAVELENGTH CONVERSION ELEMENT

(57) A composite photonic structure element comprises a photonic crystal and multilayer films. The photonic crystal is formed by alternately laminating a plurality of sets of an active layer having a nonlinear effect for converting a fundamental wave into a second harmonic and an inactive layer having no nonlinear effect, and is constructed such that the energy of the fundamental wave coincides with a photonic bandgap end. Each of the multilayer films is formed by laminating a plurality of sets of two kinds of thin films having different refractive indexes and reflects the fundamental wave. The multilayer films are connected to both ends of the photonic crystal. The fundamental wave enters one of end faces and is reciprocally reflected between resonators having the multilayer films, so that the intensity of the fundamental wave is enhanced within the photonic crystal. The fundamental wave is converted into a second harmonic in the active layer, and the second harmonic is taken out from the other end face.

*Fig.9*

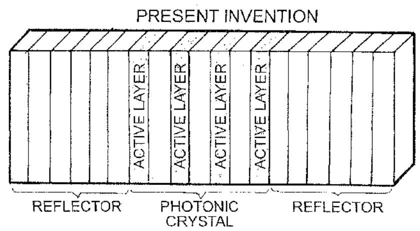


EP 2 224 284 A1

## Description

## Technical Field

The present invention relates to a composite photonic structure element which converts the wavelength of a laser beam into a double harmonic or generates a third-order nonlinear signal, a surface emitting laser using the composite photonic structure element, a wavelength conversion element, and a laser processing device using the wavelength conversion element. Nonlinear elements have widely been used to convert a fundamental wave (at a wavelength of 1.06 μm) of a YAG laser into a double harmonic (532 nm), so as utilize it for laser processing. That is a laser processing device comprising a laser for generating a fundamental wave, a wavelength conversion element for converting the fundamental wave into a second harmonic, and an optical system for converging the second harmonic and irradiating an object therewith. Materials which are transparent to the fundamental wave but nontransparent to the double harmonic can be processed by the double harmonic. Though the double harmonic is not a laser beam itself, its fundamental wave is a laser beam, whereby devices utilizing the former are also often referred to simply as laser processing devices. The double harmonic is also referred to as second harmonic, double wave, and the like.

The nonlinear optical effect is that a certain transparent crystal generates a dielectric polarization proportional to the square or higher power of an electric field. In practice, the dielectric polarization higher than the second order is very small, whereby the second-order polarization is taken into consideration. The triple harmonic can be generated by joining the double harmonic and the fundamental wave together.

The proportion of the magnitude of polarization to the square, cube, or higher power is referred to as a nonlinear optical coefficient $\chi$. There are various kinds of $\chi$. In the case of a square component to be joined, for example, when a polarization $P_k$ occurs in a k direction with respect to m and n components of an electric field $E_m(\omega_1)$, $E_n(\omega_2)$, it is expressed as $P_k(\omega_1 + \omega_2) = \chi^{(2)}{}_{kmn}E_m(\omega_1)E_n(\omega_2)$. $\omega_1$ and $\omega_2$ are angular frequencies of light. $\chi^{(2)}$ is a third-order tensor. In order for such values to exist, the crystal must be free from inversion symmetry.

For example, GaAs has $\chi^{(2)}{}_{14}$ which satisfies $P_z = \chi^{(2)}{}_{14}2E_yE_x$. This allows a second-order polarization to generate in the z direction by making a fundamental wave propagating in a direction tilted against three axes of x, y, and z enter a GaAs crystal such that a plane of polarization exists in the xy directions. For simplification, without considering orientations, the following will assume that the z direction is a propagating direction of the fundamental wave and double harmonic while the electric field has an x component.

There are many crystals without inversion symmetry. Nevertheless, those having small $\chi^{(2)}$ cannot be utilized. Only those having large $\chi^{(2)}$ are useful. It is also necessary for them to be transparent to the fundamental wave and harmonics. They are also required to be free from deliquescence and stable for long terms. Only very limited crystals have a high nonlinear optical coefficient $\chi^{(2)}$ while being transparent and exhibiting no changes over years.

There is a further difficult condition. A dielectric polarization proportional to the square of an electric field occurs along an advancing direction of light (fundamental wave with an angular frequency $\omega$), which further produces radiation. This radiation has a doubled angular frequency ($2\omega$). The fundamental wave advances in the crystal while inducing the second-order dielectric polarization and generating the double harmonic. In the crystal, the fundamental wave and the double harmonic coexist and advance in the same direction. As this conversion progresses, the fundamental wave and the double harmonic must decrease and increase, respectively, thereby keeping the total electric power constant. Since the conversion to the double harmonic is small, however, the intensity of the fundamental wave is assumed to be stable in the whole length of the nonlinear crystal. The second-order dielectric polarization caused by the fundamental wave is also assumed to be stable. This becomes a source term in a wave equation, whereby the double harmonic increases. In the following, the double harmonic will simply be referred to as double wave.

If the fundamental wave ($\omega$) and the double wave ($2\omega$) advance in the same direction while having the same spatial periodicity, the conversion from the fundamental wave into the double wave will progress unidirectionally. The double wave will be accumulated in proportion to the length of the crystal. The double wave will be enhanced as the crystal length L is longer. This is hard to occur, however.

The light velocity in a material having a refractive index of n is c/n. The electric field of light satisfies a wave equation whose velocity coefficient is c/n. The wave number k of light at an angular frequency $\omega$ is $\omega n/c$. The wave number k is a phase angle change at the time when light advances by a unit length in a medium. It can also be called a spatial angular frequency. The wave number k has a relationship of $k = 2\pi/\lambda$ with respect to the wavelength $\lambda$ in vacuum. It also has a relationship of $k = \omega n/c$ with respect to the angular frequency $\omega$.

Let $\omega$ be the angular frequency of the fundamental wave. Let $n(\omega)$ and $n(2\omega)$ be the respective refractive indexes of the fundamental wave and double wave. The wave number k of the fundamental wave is $\omega n(\omega)/c$, while the wave number w of the double wave is $2\omega n(2\omega)/c$. Since the angular frequency with respect to time is doubled, if the spatial angular frequency is doubled ($w = 2k$), the phase of the double wave will always be twice that of the fundamental wave, whereby they will exhibit the same periodicity. Only in this case, the double wave will increase as the fundamental wave progresses. For this, it is necessary that $n(\omega) = n(2\omega)$. That is, the fundamental-wave refractive index equals the double-wave refractive index. For simplicity, n(ω) and n(2ω) will also be referred to as $n_1$ and $n_2$, respectively.

However, any crystal has a finite refractive index dispersion (dn/dω). There is no material in which n(ω) = n (2ω). In most cases, dn/dω is positive, whereby n(2ω) is greater than n(ω). For example, a YANG laser has the fundamental wave $\lambda_1$ = 1.064 μm and the double wave $\lambda_2$ = 0.532 μm. Optical material crystals hardly exhibit the same refractive index for such greatly differing wavelengths.

Since the fundamental wave and double wave have different refractive indexes ($n_1 \neq n_2$), w - 2k = 0 does not hold. Though the time frequency is doubled, the spatial frequency is not doubled. w - 2k > 0. There is a discrepancy between time and space.

Let Δk be the difference between the double harmonic wave number w and 2k which is two times the fundamental-wave wave number k. Δk = w - 2k. This is not 0 in a nonlinear optical crystal. Since this is not 0, the double waves that have managed to increase cancel each other out. The intensity of the double wave only vibrates with a period of 2π/Δk in the advancing direction. The double wave will not increase no matter how long the nonlinear crystal is.

Even when there is a strong transparent monocrystal having a high nonlinearity without deliquescence, it incurs a refractive index dispersion ($n_1 \neq n_2$) and thus is unusable as an element for generating harmonics.

## Background Art

For generating a harmonic at a high efficiency, it will be sufficient if Δk = 0 in a nonlinear optical element. For this purpose, a method using a crystal exhibiting different refractive indexes for extraordinary and ordinary beams has been proposed. The fact that the refractive index differs between extraordinary and ordinary beams is referred to as birefringence. In the case of a particular crystal having a uniaxial or biaxial anisotropy, its extraordinary-beam refractive index $n_e$ and ordinary-beam refractive index $n_o$ differ from each other. These also vary depending on the angular frequency ω.

The direction of incidence of the incident fundamental wave with respect to the crystal axis is selected suitably such that the fundamental wave has an extraordinary beam component and an ordinary beam component. The double wave occurs in any of ordinary and extraordinary beam directions. The direction of occurrence depends on the nonlinear coefficient χ.

In a certain birefringent crystal, the extraordinary beam refractive index $n_e$ changes like a spheroid depending on the orientation (xy, z in the case of uniaxial anisotropy), for example. The ordinary beam refractive index $n_o$ takes a fixed value like that of a spherical surface independent of the orientation (xy, z).

Let $n_e = n_o$ in the z-axis direction and $n_e > n_o$ in the rest. Because of the refractive index dispersion, $n_e(2\omega) > n_e(\omega)$, and $n_o(2\omega) > n_o(\omega)$. For example, one direction in which $n_e(\omega) = n_o(2\omega)$ exists. There is also an orientation in which $n_e(\omega) + n_o(\omega) = 2n_o(2\omega)$. Setting the direction of polarization in an appropriate direction between the xy plane and the z axis and making linearly-polarized light enter in a direction orthogonal thereto satisfies such a condition.

It necessitates very complicated setting and adjustment of an orientation, which is very hard to do. However, only those utilizing this birefringence have been put into practice substantially uniquely as harmonic generating elements. Crystals yielding high nonlinear effects are made, and birefringence is utilized so as to approximate Δk = 0. Non Patent Literatures 1 to 7 mention various nonlinear materials. Various crystals such as LN ($LiNbO_3$), KTP ($KTiOPO_4$), BBO ($\beta$-$BaB_2O_4$), and CLBO ($CsLiB_6O_{10}$) have been proposed. The latter three are considered to be materials having a large nonlinear coefficient and birefringence, but are new materials whose crystals are very hard to grow. Since their crystal growth has a low yield, a number of crystals must be made, from which a small number of crystals exhibiting favorable performances will be chosen. The yield is very low. This incurs a high cost.

Using birefringence so as to yield $n_e(\omega) = n_o(2\omega)$ or $n_e(\omega) + n_o(\omega) = 2n_o(2\omega)$ makes it very hard to set a surface angle for cutting out the crystal. If the crystal plane shifts a little, the above will not be obtained even when there is birefringence. The plane of polarization of light must be located in a certain intermediate direction, while a laser beam is often kept from being incident on the crystal plane at right angles, which makes it hard to control the orientation of the beam and the plane of polarization. Even when once adjusted to an optimal orientation, the laser has such a high power for laser processing that optical components may be heated intensively in working environments with a lot of vibrations and noises, whereby positional and directional relationships may become out of order. Laser processing must be carried out while cooling the nonlinear optical elements and strictly managing the temperature of the working environment.

Another candidate is quasi-phase matching. It is proposed in Non Patent Literatures 6 and 8 and the like. Since the power of the double wave changes with a period of 2π/Δk as mentioned above, a multilayer film in which crystal films having their polarity reversed at intervals of π/Δk which is half the above-mentioned period are arranged is made. Since the crystal film has a polarity, the double wave advancing its phase ahead of two times the fundamental wave in the upward polarity drastically changes from sin(kz) to sin(-kz) when in the inversion polarity, whereby two times the fundamental wave advances its phase ahead of the double wave.

The double wave is also faster in an inverted crystal, so that the phase advances, but the polarity of the crystal is inverted again. The reciprocating path is inverted in the middle, so that the slower one goes ahead. Inverting the polarity at intervals of $2\pi/\Delta k$ as such exchanges the winner and looser. Lower and higher speeds alternate, so that the double waves are kept from cancelling each other out and becoming 0. Though $\Delta k$ is not 0, changing the polarity reverses the lower and higher speeds, so as to effect quasi-phase matching, thereby increasing the double wave. This occurs when alternately laminating (0001) and (000-1) thin films of GaN which is a polar dielectric, for example. Such is proposed in Non Patent Literature 8.

Thin films of (0001) and (000-1) planes of a GaN crystal are laminated at a period of $\Lambda$ = 17.2 μm. That is, C and -C thin films inverting the polarity at intervals of 8.1 μm are laminated. This inverts the polarity for each thin film, so as to retard the advancement of the phase in the z direction, thereby reversing the order of the double wave and the fundamental wave. Even if the wave number of the double wave is so large that the phase change is two times or more, it will be cancelled. The fundamental wave and double wave are thus subjected to quasi-phase matching.

Non Patent Literature 9 has proposed the concept of photonic crystal for the first time. This is a crystal in which two kinds of transparent crystals having different refractive indexes and thicknesses are alternately laminated, so that light in a certain wavelength band cannot pass therethrough. The wavelength band that is not transmissible is called a photonic bandgap (PBG). Non Patent Literature 9 calls it so because it is a forbidden band where no light can exist in analogy with states of electrons in semiconductors. One laminating layers alternately in one dimension as mentioned above is a one-dimensional photonic crystal. A two-dimensional photonic crystal in which two kinds of transparent crystals having different refractive indexes are arranged in longitudinal and lateral directions has also been proposed. A three-dimensional photonic crystal in which two kinds of transparent rectangular parallelepiped crystals having different refractive indexes are arranged in longitudinal, lateral, and height directions has also been proposed. The present invention uses a one-dimensional photonic crystal.

Forgetting the difficult phase-matching condition for a while, it has also been proposed to convert the wavelength without using nonlinear effects of nonlinear crystals. Patent Literature 1 produces a multilayer thin crystal film alternating two sets of titania and silica having different photonic bandgaps (PBG), forms a layer therebetween which changes its refractive index with time, and makes light having a wavelength $\lambda$ = 915 nm (f = 328 THz) incident thereon, so as to change the refractive index of the intermediate layer, thereby changing the light into one having a wavelength $\lambda$ = 700 nm (f = 429 THz). None of titania and silica has a nonlinear effect. This is listed here because of its statement that a wavelength is converted by a crystal having no nonlinear effect.


Non Patent Literature 1: Jun Sakuma, "Wavelength conversion to infrared and deep UV regions", Journal of Japan Laser Processing Society, Vol. 8, No. 2 (2001) p129-134

Non Patent Literature 2: Takashi Kondo, "Wavelength conversion using nonlinear optical crystal", Journal of Japan Laser Processing Society, Vol. 8, No. 2 (2001) p139-143

Non Patent Literature 3: Yusuke Mori, Masashi Yoshimura, Tomosumi Kamimura, Yap Yoke Khin, and Takatomo Sasaki, "Present state and problems of wavelength conversion crystal for generating UV laser beam", Journal of Japan Laser Processing Society, Vol. 8, No. 2 (2001) p109-113

Non Patent Literature 4: Naotada Okada, Michio Nakayama, Ryuichi Togawa, and Hiroshi Yuasa, "SHG-YAG laser and its application", Journal of Japan Laser Processing Society, Vol. 8, No. 2 (2001) p114-118

Non Patent Literature 5: Tetsuo Kojima, Susumu Konno, Shuichi Fujikawa, and Koji Yasui, "THG and FHG lasers for fine processing", Journal of Japan Laser Processing Society, Vol. 8, No. 2 (2001) p119-123

Non Patent Literature 6: Sunao Kurimura, Martin M. Fejer, Takunori Taira, Yoshiaki Uesu, and Hirochika Nakajima, "Twin-controlled crystal quartz for quasi-phase-matched wavelength conversion in ultraviolet region", OYO BUTURI, Vol. 69, No. 5, (2000) p548-552 Non Patent Literature 7: H.Yang, P.Xie, S.K. Chan, Z.Q. Zhang, LK. Sou, G.K.L. Wong, and K.S. Wong, "Efficient second harmonic generation from large band gap II-VI semiconductor phtonic crystal", Appl. Phys. Lett. vol. 87, 131106 (2005)

Non Patent Literature 8: Aref Chowdhury, Hock M. Ng, Manish Bhardwaj, and Nils G. Weimann, "Second-harmonic generation in periodically poled GaN", Appl. Phys. Lett. Vol. 83, No. 6, (11 August 2003) p1077-1079

Non Patent Literature 9: Eli Yablonovitch, "Inhibited Spontaneous Emission in Solid-State Physics and Electronics", Phy. Rev. Lett. Vol. 58, No. 20, (May 1987) p2059-2062

Patent Literature 1: Japanese Patent Application Laid-Open No. 2007-206439


## Disclosure of Invention

### Technical Problem

The sole technique put into practice for generating a double harmonic by using a nonlinear optical element is one utilizing the birefringence caused by a difference between index ellipsoids of extraordinary and ordinary beams. This is a matured technique, while being improved by manufacturing and using new kinds of crystals having higher nonlinear coefficients $\chi^{(2)}$. This is only one with practicality. By utilizing the difference in refractive index between extraordinary and ordinary beams in a crystal having a nonlinear effect, $\Delta k = w(2\omega) - 2k(\omega) = 0$. The adjustment of orientation is so subtle that the crystal is hard to manufacture. The yield in manufacturing the crystal is so low that the crystal is expensive.

Even when the crystal is formed, orientations of the laser beam and crystal are hard to adjust. Even a slight temperature change alters the refractive index and optical path length, whereby $\Delta k$ shifts from 0. Strict temperature adjustment is necessary. No vibrations and shocks are allowed, since they alter relative orientations of the light and crystal. Such conditions are hard to fulfill in a laser processing device which processes a material by concentrating an enormous power at the material. The quasi-phase matching method has not been put into practice, though various proposals have been made.

The wavelength conversion element combining two sets of photonic bandgap layers with the intermediate refractive index changing layer in Patent Literature 1 is questionable in terms of its principle. The fundamental wave and converted wave are said to have substantially the same intensity. This is because the nonlinear effect is not used. However, changing the refractive index of the intermediate layer with time alone cannot alter the light wavelength. Patent Literature 1 seems to be wrong in its principle.

A photonic crystal is a dielectric multilayer crystal in which two different kinds of materials are repeatedly laminated with their appropriate thicknesses d1 and d2 on a substrate, and is an artificial crystal. It does not transmit therethrough light in a certain wavelength region. The range of wavelength of light that cannot pass is called a photonic bandgap in analogy with energy gaps of semiconductors and insulators. Light having other wavelengths passes therethrough well.

There are many articles and patent applications concerning the photonic bandgap such as Patent Literature 1. None of them is completely clear in terms of the processing and grounds of calculations. Their accomplishments are just results of calculations. There are many inferences, which are not confirmed, often incur errors, and are not always reliable. None has been put into practice in those carrying out wavelength conversion by using the photonic bandgap.

Putting aside the problem of phase matching, the present invention aims at enhancing the field intensity by using a photonic crystal, so as to generate a double harmonic efficiently.

### Solution to Problem

For achieving the object mentioned above, the composite photonic structure element of the present invention comprises a photonic crystal formed by alternately laminating a plurality of sets of an active layer having a nonlinear effect for converting a fundamental wave into a second harmonic and an inactive layer free of the nonlinear effect, the photonic crystal being constructed such that an energy of the fundamental wave coincides with a photonic bandgap end; and multilayer films, each formed by laminating a plurality of sets of two kinds of thin films having different refractive indexes, for reflecting the fundamental wave; wherein the multilayer films are connected to both sides of the photonic crystal; wherein the fundamental wave enters from one of end faces and is reciprocally reflected between resonators equipped with the multilayer films so as to enhance an intensity within the photonic crystal; and wherein the fundamental wave is converted into the second harmonic in the active layer, and the second harmonic is taken out from the other end face.

Preferably, in the composite photonic structure element of the present invention, the photonic crystal is constructed such that an energy of the second harmonic, in addition to the energy of the fundamental wave, coincides with a photonic bandgap end.

Preferably, in the composite photonic structure element of the present invention, the active layer is a GaAs layer, while the inactive layer is an $Al_xGa_{1-x}As$ layer.

Preferably, in the composite photonic structure element of the present invention, the inactive layer is an $Al_{0.82}Ga_{0.18}As$ layer.

Preferably, in the composite photonic structure element of the present invention, the multilayer film is a laminate of $Al_yGa_{1-y}As$ and $Al_2Ga_{1-z}As$ layers.

Preferably, in the composite photonic structure element of the present invention, the multilayer film is a laminate of $Al_{0.82}Ga_{0.18}As$ and $Al_{0.24}Ga_{0.76}As$ layers.

Preferably, in the composite photonic structure element of the present invention, the fundamental wave has a wavelength near 1864 nm, while the second harmonic has a wavelength near 932 nm.

Preferably, in the composite photonic structure element of the present invention, the active layer is a ZnO layer, while the inactive layer is an $SiO_2$ layer.

Preferably, in the composite photonic structure element of the present invention, the multilayer film is a laminate of $Al_2O_3$ and $SiO_2$ layers.

Preferably, in the composite photonic structure element of the present invention, the multilayer film is a laminate of MgO and $SiO_2$ layers.

Preferably, in the composite photonic structure element of the present invention, the multilayer film is a laminate

of $Ta_2O_5$ and $SiO_2$ layers.

The surface emitting laser of the present invention is a surface emitting laser using the composite photonic structure element described in the foregoing.

A wavelength conversion element of the present invention comprises a bipolar multilayer crystal H formed by alternately laminating a plurality of sets of an active layer having a nonlinear effect for converting a fundamental wave into a second harmonic or generating a third-order nonlinear signal and an inactive layer free of the nonlinear effect; and first and second reflector multilayer films $K_1$, $K_2$, each formed by laminating a plurality of sets of two kinds of thin films having different refractive indexes, for reflecting the fundamental wave; wherein the first and second reflector multilayer films $K_1$, $K_2$ are connected to both sides of the bipolar multilayer crystal H; wherein the bipolar multilayer crystal H is constructed such that the alternately laminated plurality of sets of the active and inactive layers invert layers therewithin; wherein the fundamental wave enters from one of end faces and is reciprocally reflected between resonators equipped with the first and second reflector multilayer films $K_1$, $K_2$ so as to enhance an intensity within the bipolar multilayer crystal H; and wherein the fundamental wave is converted into the second harmonic in the active layer, and the second harmonic is taken out from the other end face.

Preferably, in the wavelength conversion element of the present invention, the bipolar multilayer crystal H is constructed such that the alternately laminated plurality of sets of the active and inactive layers invert layers in an intermediate portion located near a center in the length of the bipolar multilayer crystal H.

Preferably, in the wavelength conversion element of the present invention, the bipolar multilayer crystal H and the first and second reflector multilayer films $K_1$, $K_2$ are constructed such that, when the fundamental wave enters from the one end face, an electric field is increased in the first reflector multilayer film $K_1$, the electric field is increased on the first reflector multilayer film $K_1$ side of the bipolar multilayer crystal H, the electric field is maximized in the intermediate portion of the bipolar multilayer crystal H, the electric field is decreased on the second reflector multilayer film $K_2$ side of the bipolar multilayer crystal H, the electric field is decreased in the second reflector multilayer film $K_2$, and a transmitted wave having substantially the same intensity as that of the fundamental wave having entered therein is emitted from the other end face.

A laser processing device of the present invention comprises a laser for generating a fundamental wave having a wavelength $\lambda$, the wavelength conversion element described in the foregoing, and an optical system for converging the second harmonic and irradiating an object therewith.

Another wavelength conversion element of the present invention comprises a bipolar multilayer crystal H formed by alternately laminating a plurality of sets of an active layer having a nonlinear effect for converting a fundamental wave at a wavelength $\lambda$ into a second harmonic at a wavelength $\lambda/2$, a refractive index n with respect to the fundamental wave, and a thickness d and an inactive layer, free of the nonlinear effect, having a refractive index m with respect to the fundamental wave and a thickness e, the plurality of laminated sets being joined together such as to invert layers in an intermediate portion located near a center; and first and second reflector multilayer films $K_1$, $K_2$, each formed by laminating a plurality of sets of two kinds of thin films having different refractive indexes and being free of the nonlinear effect, for reflecting the fundamental wave; wherein the first and second reflector multilayer films $K_1$, $K_2$ are connected to both sides of the bipolar multilayer crystal H, so as to constitute a $K_1HK_2$ structure; wherein the bipolar multilayer crystal H and the first and second reflector multilayer films $K_1$, $K_2$ are constructed such that, when the fundamental wave enters from one of end faces, an electric field is increased in the first reflector multilayer film $K_1$, the electric field is increased on the first reflector multilayer film $K_1$ side of the bipolar multilayer crystal H, the electric field is maximized in the intermediate portion of the bipolar multilayer crystal H, the electric field is decreased on the second reflector multilayer film $K_2$ side of the bipolar multilayer crystal H, the electric field is decreased in the second reflector multilayer film $K_2$, and a transmitted wave having substantially the same intensity as that of the fundamental wave having entered therein is emitted from the other end face; and wherein the fundamental wave enhanced in the active layer in the bipolar multilayer crystal H is caused to generate the second harmonic, and the second harmonic is taken out from the other end face.

Preferably, in the wavelength conversion element of the present invention, the phase change of the fundamental wave per active layer $p = 27\pi nd/\lambda$, the phase change of the fundamental wave per inactive layer $q = 2\pi me/\lambda$, and the refractive index difference square fraction $b = (m - n)^2/mn$ obtained by dividing the square of the refractive index difference by the product of the refractive indexes satisfy $\cos(p + q) > 1 + (b/2)\sin p \sin q$ or $\cos(p + q) < -1 + (b/2)\sin p \sin q$.

Preferably, in the wavelength conversion element of the present invention, the sum (p + q) of the phase changes p and q is near an integer multiple of $2\pi$ ($2\pi v$ where v is a positive integer), while the absolute value of the difference $|(p + q) - 2\pi v)|$ between the sum (p + q) and $2\pi v$ is smaller than the square root $b^{1/2}$ of the refractive index difference square fraction b.

Preferably, in the wavelength conversion element of the present invention, the sum (p + q) of the phase changes p and q is near $2\pi$, the phase change p is near $3\pi/2$, the phase change q is near $\pi 2$, the absolute value of the difference between the phase change p and $3\pi/2$ satisfies $|p - 3\pi/2| < b^{1/2}$, and the absolute value of the difference between the phase change q and $\pi/2$ satisfies $q - \pi/2| < b^{1/2}$.

Preferably, in the wavelength conversion element of the present invention, the sum (p + q) of the phase changes p and q is near $4\pi$, the phase change p is near $7\pi/2$ or $5\pi/2$, the phase change q is near $\pi/2$ or $3\pi/2$, the absolute value of the difference between the phase change p and $7\pi/2$ or $5\pi/2$ is less than the square root $b^{1/2}$, and the absolute value of the difference between the phase change q and $\pi/2$ or $3\pi/2$ is less than the square root $b^{1/2}$.

Preferably, in the wavelength conversion element of the present invention, the sum (p + q) of the phase changes p and q is near a half-integer multiple of $2\pi((2v + 1)\pi$ where v is 0 or a positive integer), while the absolute value of the difference $|(p + q) - (2v + 1)\pi|$ between the sum (p + q) and $(2v + 1)\pi$ is less than the square root $b^{1/2}$ of the refractive index difference square fraction b.

Preferably, in the wavelength conversion element of the present invention, the sum (p + q) of the phase changes p and q is near $\pi$, the phase change p is near $\pi/2$, the phase change q is near $\pi/2$, the absolute value of the difference between the phase change p and $\pi/2$ satisfies $|p - \pi/2| < b^{1/2}$, and the absolute value of the difference between the phase change q and $\pi/2$ satisfies $|q - \pi/2| < b^{1/2}$.

Preferably, in the wavelength conversion element of the present invention, the sum (p + q) of the phase changes p and q is near $3\pi$, the phase change p is near $3\pi/2$ or $5\pi/2$, the phase change q is near $3\pi/2$ or $\pi/2$, the absolute value of the difference between the phase change p and $3\pi/2$ or $5\pi/2$ is less than the square root $b^{1/2}$, and the absolute value of the difference between the phase change q and $3\pi/2$ or $\pi/2$ is less than the square root $b^{1/2}$.

Preferably, in the wavelength conversion element of the present invention, combinations of two kinds of thin films in the first and second reflector multilayer films $K_1$, $K_2$ are in reverse to each other, the combination of two kinds of thin films is reversed in the intermediate portion of the bipolar multilayer crystal, the first reflector multilayer film $K_1$ and the bipolar multilayer crystal have a common order of higher and lower refractive indexes in a front portion located closer to the first reflector multilayer $K_1$ than the intermediate portion, the second reflector multilayer film $K_2$ and the bipolar multilayer crystal have a common order of higher and lower refractive indexes in a rear portion located closer to the second reflector multilayer $K_2$ than the intermediate portion, and the relationship between the higher and lower refractive indexes is reversed between the front and rear portions.

Another laser processing device of the present invention comprises a laser for generating a fundamental wave having a wavelength $\lambda$, the wavelength conversion element described in the foregoing, and an optical system for converging the second harmonic and irradiating an object therewith.

In one aspect of the present invention, the composite photonic structure element of the present invention comprises a photonic crystal formed by alternately laminating two kinds of thin films constituted by an active layer having a nonlinear effect and an inactive layer free of the nonlinear effect, and reflectors which are disposed on both sides thereof and each formed by alternately laminating two kinds of inactive thin films. This is a nonlinear optical element having a structure in which the photonic crystal is held between resonators. This forms a triple structure of reflector + photonic crystal + reflector.

A fundamental-wave laser beam is introduced from one side, so as to generate a strong electric field of the fundamental wave in the active layer of the photonic crystal held between the resonators, such that a second harmonic nonlinearly changed in the active layer is efficiently taken out from the other side.

The photonic crystal has such a property as to keep light in a certain wavelength range from passing therethrough, while thus forbidden wavelength band is called a photonic bandgap (PBG). For enhancing the fundamental-wave electric field, the wavelength of the fundamental wave is caused to coincide with a photonic bandgap end. The present invention may solely be based on the condition that the fundamental-wave wavelength = photonic bandgap end. More preferably, the wavelength of the second harmonic is also caused to coincide with another photonic bandgap end. Depending on the refractive index of thin-film materials, the second harmonic wavelength may fail to coincide with the photonic bandgap end. In this case, the condition that the fundamental-wave wavelength = photonic bandgap end is sufficient. The thickness and refractive index of the resonators (reflectors) in which two kinds of thin films are laminated are determined such as to reflect the fundamental wave selectively.

In another aspect of the present invention, the wavelength conversion element of the present invention comprises a bipolar multilayer crystal H constituted by a multilayer film, formed by alternately laminating two kinds of thin films made of an active layer having a nonlinear effect and an inactive layer free of the nonlinear effect, exhibiting an amplitude enhancing effect; and reflectors K, K disposed on both sides thereof and each made of a multilayer film formed by alternately laminating two kinds of inactive thin films. This is a nonlinear optical element having a KHK structure in which the bipolar H is held between the resonators K, K. This has a triple structure of reflector K + bipolar multilayer crystal H + reflector K. The bipolar multilayer crystal H is a temporary name as will be explained later.

The wavelength conversion element of the present invention is constructed such that a fundamental-wave laser beam is introduced from one side of the composite crystal KHK having such a triple structure, a strong electric field of the fundamental wave is generated in the active layer of the bipolar multilayer crystal H held between the resonators K, K, and a second harmonic nonlinearly changed in the active layer is efficiently taken out from the other side.

In still another aspect of the present invention, the laser processing device using the wavelength conversion element of the present invention comprises a laser for generating a fundamental wave; a wavelength conversion element, constituted by a bipolar multilayer crystal held between resonators, for converting the fundamental wave emitted from the laser into a second harmonic; and an optical system for converging the second harmonic and irradiating an object therewith.

The bipolar multilayer crystal having a nonlinear effect is formed by alternately laminating two kinds of thin films transmitting the fundamental wave and second harmonic therethrough (transparent to the fundamental wave and second harmonic) and acts to enhance the electric field amplitude of light in a certain wavelength range when the refractive index and film thickness satisfy a certain condition. Since the fundamental wave is enhanced, the second harmonic manyfold greater than that available when simply inputting the fundamental wave into a nonlinear crystal is obtained. However, the condition that no backward wave exists at the end limits the enhancement of the electric field amplitude. Therefore, the bipolar multilayer crystal is held between the reflectors of multilayer films. Each of the bipolar multilayer crystal and reflectors is a dielectric multilayer film in which two kinds of dielectric thin films are combined. Two kinds of thin films having different thicknesses and refractive indexes are laminated on a substrate. Each of them is required to be an optical crystal transparent to the fundamental wave and second harmonic.

One kind of thin films constituting the bipolar multilayer crystal H has a nonlinear effect, while the other is free of the nonlinear effect. For distinguishing them from each other, thin films having the nonlinear effect are referred to as active layers, while those free of the nonlinear effect are referred to as inactive layers. Both of the two kinds of thin films constituting the reflectors are free of the nonlinear effect.

A fundamental-wave laser beam entering one reflector K from an end face thereof is converted into a second harmonic by the active layer of the bipolar multilayer crystal H. Since the fundamental wave is enhanced, a strong second harmonic is generated. The strong second harmonic is taken out from an end face on the opposite side. The active layers are confined in the bipolar multilayer crystal. The second harmonics cancel each other out because of the wave number difference $\Delta k$ between the fundamental wave and second harmonic only in the thickness of the active layer. The layers free of the nonlinear effect are not concerned with the cancellation of second harmonics. The mutual cancellation of second harmonics due to $\Delta k \neq 0$ is lower when the total thickness (total length) of active layers is smaller. Therefore, phase mismatching is smaller.

## Advantageous Effects of Invention

In one aspect of the present invention, the present invention sets a photonic crystal formed by laminating a plurality of thin films constituted by two kinds composed of active and inactive layers having different refractive indexes and thicknesses such that the fundamental-wave energy coincides with a photonic bandgap end or the fundamental-wave energy and the second harmonic energy coincide with two photonic bandgap ends and uses an optical crystal in which resonators, constituted by dielectric multilayer films, for reflecting the fundamental wave are disposed on both sides of the photonic crystal, whereby the electric field of the fundamental wave can be multiplied remarkably.

From the enhanced fundamental wave, the second harmonic is produced under action of the active layer having the nonlinear effect. Since the electric field of the fundamental wave is strong, a considerably large second harmonic can be obtained even when lowered by phase mismatching.

In still another aspect of the present invention, the present invention holds a bipolar multilayer crystal H formed by laminating a plurality of thin films constituted by two kinds composed of active and inactive layers having different refractive indexes and thicknesses such that the sum of phase differences is near an integer multiple of $\pi$ while each phase difference is near a half-integer multiple of $\pi$ and that the front and rear sides thereof are conjugate to each other (the relationship between the front and rear sides of two layers is reversed) between reflectors $K_1$, $K_2$ formed by laminating a plurality of two kinds of inactive thin films having different refractive indexes and thicknesses such that the sum of phase differences is near an integer multiple of $\pi$ while each phase difference is near a half-integer multiple of $\pi$ and that they are complex conjugate to each other, so as to yield a $K_1HK_2$ structure, thus absorbing the whole incident wave G, thereby enhancing the electric field in the first half portion, maximizing the electric field in the center portion, and lowering the electric field in the second half portion, so as to emit a transmitted wave T having the same intensity as that of the incident wave.

The nonlinear conversion active layer in the middle outputs a double wave. Since the fundamental wave is large, the double harmonic also becomes large. Since the total thickness of the active layers ($\Sigma d$) is small, however, the product $\Delta k(\Sigma d)$ of the wave number difference $\Delta k$ = w - 2k and the total thickness of the active layers ($\Sigma d$) can be made smaller than $\pi$. Since the phase mismatch $\Delta k(\Sigma d)$ can be made small, a strong second harmonic can be taken out.

## Brief Description of Drawings

**[Fig. 1]** is an explanatory view for illustrating the structure of a monolayer film in which an active layer having a refractive index n, a thickness d, and boundaries $z_0$, $z_1$ is held between vacuums 1, 2 on both sides and notations of parameters;

**[Fig. 2]** is an explanatory view for illustrating definitions of a forward-wave electric field $F_j$, a backward-wave electric field $B_j$, a wave number $k_j$, and the like in the jth thin film in a multilayer crystal having N thin layers with boundaries, at $z_0$, $z_1$, ..., $z_j$, ..., $z_N$;

**[Fig. 3]** is an explanatory view for illustrating wave numbers, refractive indexes, and the like of a first kind thin film $U_i$ (odd number) and a second kind thin film $W_i$ (even number) in the ith set of multilayer crystals in which M sets of first kind thin films $U_i$ and second kind thin films $W_i$ are alternately laminated, where n, d, $F_{ui}$, and $B_{ui}$ are the refractive index, thickness, forward-wave electric field amplitude, and backward-wave electric field amplitude of the first kind thin film $U_i$, respectively; m, e, $F_{wi}$, and $B_{wi}$ are the refractive index, thickness, forward-wave electric field amplitude, and backward-wave electric field amplitude of the second kind thin film $W_i$, respectively; s = n/m and r = m/n; g is the wave change g = exp(ip) caused by the phase change $p = \omega nd/c = 2\pi nd/\lambda$ of the electric field intensity in the first kind thin film $U_i$; and h is the wave change h = exp(iq) caused by the phase change $q = \omega me/c = 2\pi me/\lambda$ of the electric field intensity in the second kind thin film $W_i$;

**[Fig. 4]** is a graph illustrating a change in a second harmonic caused by a GaAs nonlinear effect due to the thickness of a GaAs monolayer film when a fundamental wave is incident thereon, where the abscissa and ordinate indicate the thickness (nm) and the intensity of the second harmonic, respectively;

**[Fig. 5]** is a schematic structural diagram of a photonic crystal formed by laminating a plurality of GaAs layers having a nonlinear effect and $Al_{0.82}Ga_{0.18}As$ layers free of the nonlinear effect; for actual calculations, 40 cycles of GaAs (active layer) having a thickness of 82 nm and AlGaAs (inactive layer) having a thickness of 215.5 nm are alternately laminated so as to yield a photonic crystal having a total thickness of 11900 nm; the substrate is undepicted;

**[Fig. 6]** is a transmission spectrum of the photonic crystal of Fig. 5, where the abscissa and ordinate indicate the light energy (eV) and the transmission, respectively; a continuous band near 0.7 eV where the transmission becomes 0 and a continuous band near 1.35 eV are photonic bandgaps;

**[Fig. 7]** is a graph illustrating a power distribution (square of the electric field) of a fundamental wave (0.665 eV) within the photonic crystal of Fig. 5 when light having an energy corresponding to the photonic bandgap of 0.665 eV enters from one end thereof, where mountains and valleys of gratings represent GaAs (active layer) and AlGaAs (inactive layer); the mountains indicate GaAs (active layer) enhancing the fundamental-wave power correspondingly; the valleys indicate AlGaAs (inactive layer) lowering the fundamental-wave power;

**[Fig. 8]** is a graph illustrating a power distribution (square of the electric field) of a second harmonic (1.330 eV) within the photonic crystal of Fig. 5 when light having an energy corresponding to the photonic bandgap of 0.665 eV enters from one end thereof, where mountains and valleys of gratings represent GaAs (active layer) and AlGaAs (inactive layer); the mountains indicate GaAs (active layer) enhancing the double-harmonic power correspondingly; the valleys indicate AlGaAs (inactive layer) further enhancing the double-harmonic power in synchronization therewith; it is substantially 0 at boundaries;

**[Fig. 9]** is a schematic structural view of a photonic crystal equipped with resonators in accordance with an example of the present invention, in which reflective films formed by alternately laminating AlGaAs/AlGaAs films are attached to both sides of a photonic crystal formed by alternately laminating GaAs/AlGaAs films; it is constituted by a photonic crystal having a total thickness of 11900 nm formed by alternately laminating 40 cycles of GaAs (active layer) having a thickness of 82 nm and AlGaAs (inactive layer) having a thickness of 215.5 nm and two reflectors each formed by laminating 20 cycles (6310 nm) of $Al_{0.24}Ga_{0.76}As$ having a thickness of 155.3 nm and $Al_{0.82}Ga_{0.18}As$ having a thickness of 160.2 nm, so as to have a structure (with a total thickness of 24200 nm) in which the photonic crystal is held between the reflectors on both sides);

**[Fig. 10]** is a graph illustrating, when light having an energy of 0.6 eV to 0.74 eV enters from one end of a crystal element in accordance with the example of the present invention having a structure in which the photonic crystal is held between the reflectors illustrated in Fig. 9 on both sides, the transmission and the second harmonic intensity at the other end; the abscissa is the energy (eV) of light; the left and right ordinates indicate the transmission and the second harmonic intensity, respectively; the photonic bandgap is at 0.655 to 0.72 eV; only one second harmonic peak exists at 0.665 eV within the photonic bandgap; the harmonic intensity is represented by coordinates of the fundamental-wave energy; all the remaining peaks are transmission peaks;

**[Fig. 11]** is a graph illustrating, when light having an energy of 0.665 eV enters from one end of the crystal element in accordance with the example of the present invention having a structure in which the photonic crystal is held between the reflectors illustrated in Fig. 9 on both sides, the intensity (power) of the fundamental wave (0.665 eV) within the photonic crystal; mountains and valleys of gratings indicate where GaAs (active layer: mountain) and AlGaAs (inactive layer: valley) exist; the fundamental-wave power is high in the active layers (mountains) but near 0 in the inactive layers.

**[Fig. 12]** is a schematic structural view of a crystal in accordance with a comparative example forming a combined structure (having a total thickness of 24520 nm) of a monolayer film and resonators in which a GaAs (active layer) monolayer film having a thickness of 3280 nm held between $Al_{0.82}Ga_{0.18}As$ (inactive layers), each having a thickness of 4310 nm, on both sides so as to yield a total thickness of 11900 nm is further held between two reflectors, each formed by laminating 20 cycles of $Al_{0.24}Ga_{0.76}As$ having a thickness of 155.3 nm and $Al_{0.82}Ga_{0.18}As$ having a thickness of 160.2 nm, on both sides; the substrate is not depicted;

**[Fig. 13]** is a graph illustrating, when light having an energy of 0.6 eV to 0.74 eV enters from one end of the crystal element in accordance with the comparative example having a structure in which a $GaAs/Al_{0.82}Ga_{0.18}As$ film is held between reflectors on both sides as illustrated in Fig. 12, the transmission and the second harmonic intensity at the other end; the abscissa is the energy (eV) of light; the left and right ordinates indicate the transmission and the second harmonic intensity, respectively; the photonic bandgap at 0.655 to 0.72 eV is lost; only one second harmonic peak exists at 0.665 eV within the photonic bandgap; the peak is about $1.6 \times 10^{-5}$; it is about $10^{-3}$ of that in the example of the present invention (photonic + resonators) illustrated in Fig. 10 and weak;

**[Fig. 14]** is a graph illustrating, when a fundamental wave having an energy of 0.665 eV enters from one end of the crystal element in accordance with the comparative example having a structure in which a GaAs/AlGaAs film is held between reflectors on both sides as illustrated in Fig. 12, the electric field intensity of the fundamental wave in the GaAs/AlGaAs layer; mountains and valleys represent GaAs/AlGaAs; the mountains indicate GaAs, where the fundamental-wave intensity is uniform and weak; the valleys indicate AlGaAs, where the fundamental-wave intensity is uniform and stronger; the fundamental wave is seen to be weaker, i.e., about 1/9 that of Fig. 11;

**[Fig. 15]** is a graph studying how the second harmonic increases/decreases when, to both sides of a basic photonic crystal made of 40 cycles of GaAs/AlGaAs, the same combinations of photonic crystals or resonators (reflectors) are added so as to yield a total of 150 cycles; the lower broken curve G1 represents a change in the electric field of the second harmonic when the cycles of the photonic crystal in the same set are increased, while the upper solid cure G2 represents a change in the electric field of the second harmonic when the cycles of reflectors in the same set are increased;

**[Fig. 16]** is a graph studying how the second harmonic increases/decreases when, to both sides of a basic photonic crystal made of 40 cycles of GaAs/AlGaAs, the same combination of photonic crystals or resonators (reflectors) are added to a total of 150 cycles, and a fundamental wave is incident on a (100) GaAs plane so as to form 45° therewith; the lower broken curve G3 represents a change in the electric field of the second harmonic when the cycles of the same combinations of photonic crystals are increased, while the upper solid cure G4 represents a change in the electric field of the second harmonic when the cycles of reflectors are increased;

**[Fig. 17]** is a view illustrating a composite photonic structure in a second embodiment;

**[Fig. 18]** is a chart illustrating performances of the composite photonic structure in accordance with the second embodiment;

**[Fig. 19]** is a chart illustrating performances of a structure constituted by a ZnO monolayer film [Performance Comparison A];

**[Fig. 20]** is a chart illustrating performances of a structure constituted by a photonic crystal of ZnO layer/$SiO_2$ layer without DBR resonators [Performance Comparison B];

**[Fig. 21]** is a chart illustrating performances of a structure in which a ZnO monolayer film having a total film thickness equivalent to that of the photonic crystal is held between DBR resonators [Performance Comparison C];

**[Fig. 22]** is a chart illustrating performances of a quasi-phase matching ZnO bulk structure [Performance Comparison D];

**[Fig. 23]** is a view illustrating a composite photonic structure in a third embodiment;

**[Fig. 24]** is a chart illustrating performances of the composite photonic structure in accordance with the third embodiment;

**[Fig. 25]** is a view illustrating a composite photonic structure in a fourth embodiment;

**[Fig. 26]** is a chart illustrating performances of the composite photonic structure in accordance with the fourth embodiment;

**[Fig. 27]** is an explanatory view for illustrating definitions of a forward-wave electric field $F_j$, a backward-electric field $B_j$, a wave number $k_j$, and the like in the jth thin film in a multilayer crystal having N thin layers with boundaries at $z_0, z_1, ..., z_j, ..., z_N$;

**[Fig. 28]** is an explanatory view for illustrating wave numbers, refractive indexes, and the like of a first kind thin film $U_i$ (odd number) and a second kind thin film $W_i$ (even number) in the ith set of multilayer crystals in which M sets of first kind thin films $U_i$ and second kind thin films $W_i$ are alternately laminated, where n, d, $F_{ui}$, and $B_{ui}$ are the refractive index, thickness, forward-wave electric field amplitude, and backward-wave electric field amplitude of the first kind thin film $U_i$, respectively; m, e, $F_{wi}$, and $B_{wi}$ are the refractive index, thickness, forward-wave electric field amplitude, and backward-wave electric field amplitude of the second kind thin film $W_i$, respectively; s = n/m and r = m/n; g is the wave change g = exp(ip) caused by the phase change $p = \omega nd/c = 2\pi nd/\lambda$ of the electric field intensity in the first kind thin film $U_i$; and h is the wave change h = exp(iq) caused by the phase change $q = \omega me/c = 2\pi me/\lambda$ of the electric field intensity in the second kind thin film $W_i$;

**[Fig. 29]** is a graph illustrating that, when an incident wave G = 1 is incident on one end in a bipolar multilayer crystal H constituted by a $(UW)^M(WU)^M$ or $(WU)^M(UW)^M$ multilayer film, the electric field of a forward wave increases therewithin like a bipolar function in the first half, so as to reach its maximum value $\cosh M\Phi$ in the Mth set, and thereafter decreases like a bipolar function, so that a transmitted wave T = 1 exits from the other end;

**[Fig. 30]** is a graph illustrating that, when an incident wave G = 1 is incident on one end of conjugate reflectors $K_1K_2$ constituted by an $(XZ)^N$ reflector and a $(ZX)^N$ reflector or a $(ZX)^N$ reflector and an $(XZ)^N$ reflector, the electric field of a forward wave increases therewithin like a bipolar function in the first half, so as to reach its maximum value $\cosh N\Theta$ in the Nth set, and thereafter decreases like a bipolar function, so that a transmitted wave T = 1 exits from the other end;

**[Fig. 31]** is a graph illustrating that, when an incident wave G = 1 is incident on one end of a $K_1HK_2$ multilayer film of the present invention constituted by a reflector $K_1$, a bipolar multilayer crystal H, and a reflector $K_2$, the electric field of a forward wave increases therewithin like a bipolar function in the first half, so as to reach its maximum value $\cosh(N\Theta + M\Phi)$ at the center of the bipolar multilayer crystal H, and thereafter decreases like a bipolar function, so that a transmitted wave T = 1 exits from the other end;

**[Fig. 32]** is a view illustrating a mirror-symmetric composite photonic structure in Example 2 of a fifth embodiment;

**[Fig. 33]** is a view for explaining a third-order nonlinear effect generated by the mirror-symmetric composite photonic structure in Example 2 of the fifth embodiment;

**[Fig. 34]** is a view illustrating a surface emitting laser using the composite photonic structure element in accordance with any of the first to fourth embodiments; and

**[Fig. 35]** is a laser processing device equipped with a wavelength conversion element having the mirror-symmetric composite photonic structure of the fifth embodiment.

## Reference Signs List

λ...wavelength of light; c...light velocity in vacuum; ω... angular frequency of light; E... electric field (x-directional component alone); j...layer number; $E_j$...fundamental-wave electric field of the jth layer; $D_i$... second-harmonic electric field of the ith layer; G... incident-wave amplitude; R... reflected-wave amplitude; T...transmitted-wave amplitude; F... forward-wave amplitude; $F_j$...forward-wave amplitude of the jth layer; B...backward-wave amplitude; $B_j$...backward-wave amplitude of the jth layer; $U_i$...frst layer of the ith set; $W_i$...second layer of the ith set; n...refractive index of the first layer; m...refractive index of the second layer; k...wave number of the fundamental wave; w...wave number of the second harmonic; p...phase change in the first layer; q...phase change in the second layer; g...wave change caused by the phase change in the first layer; h...wave change caused by the phase change in the second layer; r...m/n; s...n/m; z...coordinate of the advancing direction of light; L...effective thickness of the crystal (excluding the substrate); G(z, ξ)... Green's function

K...reflector multilayer film (dielectric multilayer film); $K_1$...first reflector; $K_2$... second reflector; λ... wavelength of light; c...light velocity in vacuum; ω...angular frequency of light; k...wave number of the fundamental wave; w...wave number of the second harmonic; E... electric field (x-directional component alone); j ... layer number; $E_j$...fundamental-wave electric field of the jth layer; $D_i$... second-harmonic electric field of the ith layer; H... bipolar multilayer crystal; G... incident-wave amplitude; R...reflected-wave amplitude; T...transmitted-wave amplitude; F...forward-wave amplitude; $F_j$...forward-wave amplitude of the jth layer; B...backward-wave amplitude; $B_j$...backward-wave amplitude of the jth layer; U...first kind layer of the bipolar multilayer crystal; W...second kind layer of the bipolar multilayer crystal; $U_i$...first kind layer in the ith set of the bipolar multilayer crystal; $W_i$...second kind layer in the ith set of the bipolar multilayer crystal; n...refractive index of the first kind layer in the bipolar multilayer crystal; m...refractive index of the second kind layer in the bipolar multilayer crystal; p... phase change in the first kind layer in the bipolar multilayer crystal; q...phase change in the second kind layer in the bipolar multilayer crystal; g...wave change caused by the phase change in the first kind layer in the bipolar multilayer crystal; h...wave change caused by the phase change in the second kind layer in the bipolar multilayer crystal; r...m/n; s...n/m; b...$(m - n)^2/mn$; Φ...multiplication factor by one set in the bipolar multilayer crystal; X... first kind layer of the reflector; Z... second kind layer of the reflector; $X_i$...first kind layer in the ith set in the reflector; $Z_i$...second kind layer in the ith set in the reflector; ν...refractive index of the first kind layer of the reflector; μ....refractive index of the second kind layer of the reflector; a...phase change in the first kind layer in the reflector; y...phase change in the second kind layer in the reflector; ξ...wave change caused by the phase change in the first kind layer in the reflector; η...wave change caused by the phase change in the second kind layer in the reflector,; ρ... μ/ν; σ...νμ; β...$(\nu-\mu)^2/\nu\mu$; Θ...multiplication factor by one set in the reflector; κ... $-[2\pi(2\omega)^2\chi^{(2)}]/[w(2k - w)c^2]$; $\chi^{(2)}$...second-order nonlinear coefficient; z... coordinate of the advancing direction of light; L... effective thickness (length) of the crystal (excluding the substrate); G(z, ξ)...Green's function

## Description of Embodiments

In the following, preferred embodiments of a composite photonic structure element in accordance with the present invention, a surface emitting laser and wavelength conversion element using the composite photonic structure element, and a laser processing device equipped with the wavelength conversion element will be explained in detail.

First Embodiment

To begin with, the first embodiment of the present invention will be explained. The following explanation will start from a model which is easy to see for understanding the present invention.

1. Electric field of a monolayer film

First, a steady-state electric field relationship occurring in the case of a monolayer film will be studied. As illustrated in Fig. 1, there are a vacuum 1, an intermediate layer, and a vacuum 2. Let z, x, and y axes be the advancing direction of light, the upward coordinate, and the coordinate upward perpendicular to the paper plane. Here, for simplification, layers are supposed to align in the z direction with their boundaries being parallel to the xy plane, though oblique incidence may occur. A plane wave is given, whereby only an x component $E_x$ exists in the electric field. Since there is no contortion, only $E_x$ exists in all the layers. Variables do not include x and y, since they are the same in the x and y directions. Letting t be time, the electric field can be expressed as $E_x(z, t)$. Without dealing with transient phenomena, steady-state solutions are determined. Therefore, only steady-state solutions of a wave equation are concerned. The time dependency is exp(-jωt) in each layer. Here, j is an imaginary unit, while ω is the fundamental-wave angular frequency. This time term is common and thus will not be denoted here. It will be sufficient if only a spatial amplitude $E_x$ (z) relationship is determined.

No current flows through the boundaries, whereby curlE = 0, curlH = 0. The connecting condition at the boundary layers (parallel to the xy plane) is that the tangential directions of the electric and magnetic fields are reserved. The electric field is $E_x$, which is continuous at the boundary layers. As the magnetic field, only $H_y$ exists. This is given by the partial differential of $E_x$ with respect to z and reserved, whereby the differential of $E_x$ with respect to z is continuous. That is, the electric field $E_x$ and the first-order differential $dE_x/dz$ are reserved at the layer boundaries.

Subscripts are hard to write in patent specifications. For simplifying the descriptions, the sign of component x will be omitted. Let the electric fields in the vacuum 1, intermediate layer, and vacuum 2 be $E_0$, $E_1$, and $E_2$, respectively. Electric field amplitudes will be expressed by signs other than E.

Let G and R be the x-directional electric field amplitudes of the incident wave (forward wave) and reflected wave (backward wave) in the vacuum 1 (on the entrance side), respectively; F and B be the electric field amplitudes of the forward and backward waves in the intermediate layer, respectively; and T be the electric field amplitude of the transmitted wave (forward wave) in the vacuum 2 (on the exit side). The advancing directions of wave fronts are indicated by arrows. These are directions of wave-number vectors k. The electric field direction is the x direction. The arrows must not be taken as electric field vectors.

Let the vacuum light velocity be c, the refractive index in vacuum be 1 ($n_0$ = 1), the wavelength of light be λ, the angular frequency be ω, and the wave number be k = ω/c = 2π/λ. Let the refractive index of a medium be n, the wave number in the medium is nk = ωn/c. Let the refractive index and wave front of the intermediate layer be n and nk (= ωn/c), respectively. Let the two boundaries be $z_0$ (= 0) and $z_1$, respectively. Assuming that the thickness of the intermediate layer is d (which must not be mixed up with the differential sign), $z_1$ = d.

$$\text{Vacuum 1: } E_0 = G\exp(jkz) + R\exp(-jkz) \qquad (1)$$

$$\text{Intermediate layer: } E_1 = F\exp(jnkz) + B\exp(-jnk(z - z_1)) \qquad (2)$$

$$\text{Vacuum 2: } E_2 = T\exp(jk(z - z_1)) \qquad (3)$$

The backward wave B in the intermediate layer and the forward wave (transmitted wave) T in the vacuum 2 occur from the second boundary $z_1$, whereby (z - $z_1$).

From Maxwell's connecting conditions ($E_0$ = $E_1$ and $dE_0/dz$ = $dE_1/dz$) at the first boundary ($z_0$ = 0):

$$G + R = F + B\exp(jnkz_1) \qquad (4)$$

$$G - R = nF - nB\exp(jnkz_1) \qquad (5)$$

Here, for simplification, $g = \exp(jnkz_1) = \exp(jnkd)$. Thus:

$$G + R = F + gB \qquad (6)$$

$$G - R = nF - ngB \qquad (7)$$

From Maxwell's connecting conditions ($E_1 = E_2$ and $dE_1/dz = dE_2/dz$) at the second boundary ($z_1 = d$):

$$gF + B = T \qquad (8)$$

$$ngF - nB = T \qquad (9)$$

The simultaneous equations composed of expressions (6) to (9) are solved:

$$F = 2(n + 1)G/[(n + 1)^2 - (n - 1)^2g^2] \qquad (10)$$

$$B = 2(n - 1)gG/[(n + 1)^2 - (n - 1)^2g^2] \qquad (11)$$

$$T = 4ngG/[(n + 1)^2 - (n - 1)^2g^2] \qquad (12)$$

$$R = 2(n^2 - 1)(g^2 - 1)G/[(n + 1)^2 - (n - 1)^2g^2] \qquad (13)$$

Even when the incident wave G is constant, the values of F, B, T, and R vary depending on g. The forward wave F and backward wave B in the intermediate layer and the forward wave (transmitted wave) in the vacuum 2 attain the minimum values at $g^2 = -1$. This means that the thickness d of the intermediate layer is a (1/4 + integer) multiple of the wavelength. By contrast, the reflected wave R attains its maximum value. Light is hard to enter the intermediate layer.

That is, the thickness d is an integer multiple of the wavelength $2\pi c/n\omega$ when $g^2 = +1$ and $g = +1$. At this time, F, B, and T attain their maximum values:

$$F_{max} = (n + 1)G/2n \qquad (14)$$

$$B_{max} = (n - 1)G/2n \qquad (15)$$

$$T_{max} = G \qquad (16)$$

The square (power) of the electric field in the intermediate layer is maximized here. The reflected wave R is 0. The light quantity (square of amplitude) in the intermediate layer is determined by F and B, but cannot exceed G even at the maximum. When $g^2 = +1$ and $g = -1$, F is at its maximum, whereas B and T are minimized. When $g = -1$, the thickness d is a half-integer (1/2 + integer) multiple of the wavelength.

$$F_{max} = (n + 1)G/2n. \qquad (16)$$

$$B_{min} = -(n - 1)G/2n. \qquad (17)$$

$$T_{min} = -G. \qquad (18)$$

The reflected wave R becomes 0 when $g^2 = 1$. Here, the whole light reaches the intermediate layer. Even in this case, the incident wave power is not exceeded. When there is only one intermediate layer, the light power (the square of the electric field) in the intermediate layer cannot be made higher than that of the incident wave G.

Increasing the number of thin films may enhance the electric field in the intermediate layer. Based on such an expectation, a dielectric multilayer film structure will be considered.

2. Dielectric multilayer film

Suppose that N layers having different refractive indexes n and thicknesses d exist between vacuums on both sides as illustrated in Fig. 2. The layers are sequentially numbered 1, 2, ..., j, ..., N. The j in the jth and that of the imaginary unit must not be mixed up with each other. Let $k_j$, $F_j$, and $B_j$ be the wave number of light, forward-wave amplitude, and backward-wave amplitude in the jth layer, respectively. The electric fields $E_j$, $E_{j+1}$ in the jth and (j + 1)th layers are:

$$E_j = F_j \exp(jk_j(z - z_{j-1})) + B_j \exp(-jk_j(z - z_j)) \qquad (19)$$

$$E_{j+1} = F_{j+1} \exp(jk_{j+1}(z - z_j)) + B_{j+1} \exp(-jk_{j+1}(z - z_{j+1})) \qquad (20)$$

Since the left boundary (start point) and right boundary (end point) of the jth layer are $z_{j-1}$ and $z_j$, respectively, the forward and backward waves employ their shifts $(z - z_{j-1})$, $(z - z_j)$ from the start and end points, respectively, as variables, thereby expressing wave functions.

It may be a little hard to understand because of different starting points of wave functions but can intuitively be said that, when the backward wave B and the forward wave F are the same (B = F), the square (power) of the electric field is a cos function whose center coordinate is the midpoint $(z_{j-1} + z_j)/2$ of the jth layer. The square power is large in this case. When the backward wave B and the forward wave F have opposite polarities (B = -F), the power is a sin function whose center coordinate is the midpoint. The square power is near 0. When the backward wave B is faster than the forward wave by 90° (B = -jF), their electric fields enhance each other. When the backward wave B is slower than the forward wave by 90° (B = +jF), their electric fields suppress each other.

In view of reservations of electric field values and differentials, the boundary condition at the boundary $z_j$ between the jth and (j + 1)th layers is:

$$F_j g_j + B_j = F_{j+1} + g_{j+1} B_{j+1} \quad (21)$$

$$n_j g_j F_j - n_j B_j = n_{j+1} F_{j+1} - n_{j+1} g_{j+1} B_{j+1} \quad (22)$$

$$g_j = \exp(jk_j d_j) \quad (23)$$

There are (2N + 1) boundaries, so that the number of boundary conditions is 2N + 1. Only the incident wave G is known, while 2N of $F_j$ and $B_j$ and the transmitted wave T are unknowns. Since the number of unknowns is 2N + 1, all the unknowns can be determined by solving them. Letting $s_j = n_j/n_{j+1}$, the following recurrence formulas are obtained:

$$F_{j+1} = [g_j(1 + s_j)/2]F_j + [(1 - s_j)/2]B_j \quad (24)$$

$$B_{j+1} = [g_j(1 - s_j)/2g_{j+1}]F_j + [(1 + s_j)/2g_{j+1}]B_j \quad (25)$$

They hold true from j = 0, assuming that the amplitudes at j = 0 are $F_0$ = G and $B_0$ = R.

$$F_1 = [g_0(1 + s_0)/2]G + [(1 - s_0)/2]R. \quad (26)$$

$$B_1 = [g_0(1 - s_0)/2g_1]G + [(1 + s_0)/2g_1]R. \quad (27)$$

Since there is only the transmitted wave T after the Nth layer, $F_{N+1}$ = T and $B_{N+1}$ = 0 when = N + 1.

$$T = [g_N(1 + s_N)/2]F_N + [(1 - s_N)/2]B_N. \quad (28)$$

$$0 = [g_N(1 - s_N)/2]F_N + [(1 + s_N)/2]B_N. \quad (29)$$

In this way, expressions (24) and (25) are recurrence formulas holding true when j = 0 to N + 1. Since R has not been known in practice, the condition that j = N + 1 (29) retroacts, so as to determine R.

Such accurate recurrence formulas are obtained. Since $\{n_j\}$, $\{d_j\}$, and G have been known, (2N + 1) amplitudes should be calculable.

Though $\{n_j\}$ and $\{d_j\}$ can be given arbitrarily, this will complicate calculations and yield only numerical solutions. The numerical solutions cannot easily change the condition. They do not clarify principles. Analytical solutions are demanded.

The present invention combines a photonic crystal with reflective layers. Each of them is formed by alternately laminating two kinds of thin films having different refractive indexes and thicknesses. The layer structures of both of them will be explained.

A case where two kinds of thin films U, W having different thicknesses are alternately laminated by the respective same thicknesses will now be considered. When the two kinds of thin films are alternately laminated, accurate calculations can be performed. Assume that the ith set of thin films is constituted by $U_i$ and $W_i$, while there are M such sets. Since each set is constituted by two layers, the number of layers is 2M. The set number i ranges from 1 to M.

The first kind thin film U has a refractive index n and a thickness d, while $F_{ui}$ and $B_{ui}$ denote its forward- and backward-wave amplitudes in the ith set, respectively. The second kind thin film W has a refractive index m and a thickness e, while $F_{wi}$ and $B_{wi}$ denote its forward- and backward-wave amplitudes in the ith set, respectively.

Fig. 3 illustrates this case. U and W are odd- and even-numbered layers, respectively.

$$s = n/m. \qquad (30)$$

$$r = m/n. \qquad (31)$$

$$g = \exp(j\omega nd/c) = \exp(2\pi jnd/\lambda). \qquad (32)$$

$$h = \exp(j\omega me/c) = \exp(2\pi jme/\lambda). \qquad (33)$$

Here, sr = 1; g denotes the wave change caused by the phase change of light $\omega nd/c = 2\pi nd/\lambda$ in the odd-numbered film (first kind); h denotes the wave function change caused by the phase change of light $\omega me/c = 2\pi me/\lambda$ in the even-numbered film (second kind).

Let the respective phase changes in the first and second kind layers U, W be:

$$p = \omega nd/c = 2\pi nd/\lambda \qquad (34)$$

$$q = \omega me/c = 2\pi me/\lambda \qquad (35)$$

They allow g and h to be written as:

$$g = \exp(jp) \qquad (36)$$

$$h = \exp(jq) \qquad (37)$$

Each of the absolute values of phase components g and h is 1.

By rewriting $s_j$, $g_j$, and $g_{j+1}$ in expressions (24) and (25) as s, g, and h, respectively, the recurrence formulas determined from the boundary condition between the $U_i$ and $W_i$ layers are:

$$F_{wi} = [g(1 + s)/2]F_{ui} + [(1 - s)/2]B_{ui} \quad (38)$$

$$B_{wi} = [g(1 - s)/2h]F_{ui} + [(1 + s)/2h]B_{ui} \quad (39)$$

This means that the relationship of the two is determined by a matrix of 2 × 2. The value of the relational determinants is gs/h. By rewriting $s_{j+1}$, $g_{j+1}$, and $g_j$ in expressions (24) and (25) as r, h, and g, respectively, the recurrence formulas determined from the boundary condition between the $W_i$ and $U_{i+1}$ layers are:

$$F_{ui+1} = [h(1 + r)/2]F_{wi} + [(1 - r)/2]B_{wi} \quad (40)$$

$$B_{ui+1} = [h(1 - r)/2g]F_{wi} + [(1 + r)/2g]B_{wi} \quad (41)$$

This also means that the relationship of the two is determined by a matrix of 2 × 2. The value of the relational determinants is hr/g. The recurrent formulas between the $U_i$ and $U_{i+1}$ layers are determined while skipping $W_i$ therebetween. This can be seen from the product of matrixes of expressions (38) to (41).

Thus:

$$F_{ui+1} = [(gh/4)(2 + r + s) + (g/4h)(2 - r - s)]F_{ui} + (1/4)(r - s)[h - (1/h)]B_{ui}$$
$$= [g\cos q + j(g/2)(r + s)\sin q]F_{ui} + (j/2)(r - s)\sin q B_{ui} \quad (42)$$
$$B_{ui+1} = -(1/4)[(h - (1/h)]F_{ui} + (1/4gh)(2 + r + s) + (h/4g)(2 - r - s)]B_{ui} =$$
$$-(j/2)(r - s)\sin q F_{ui} + [(1/g)\cos q - j(1/2g)(r + s)\sin q]B_{ui} \quad (43)$$

The recurrent formulas between the $U_i$ and $U_{i+1}$ layers can simply be expressed by a matrix of 2 × 2, too.

**[Math. 1]**

$$\begin{pmatrix} g\cos q + j(g/2)(r+s)\sin q & (j/2)(r-s)\sin q \\ -(j/2)(r-s)\sin q & g^*\cos q - j(g^*/2)(r+s)\sin q \end{pmatrix} \quad (44)$$

Those marked with * on their shoulders are complex conjugates. r + s = (m/n) + (n/m) > 2. Hence, the absolute value of diagonal terms is greater than 1. The value of the determinant is 1. Therefore, it can be written by sinh and cosh as follows:

$$\sinh\Theta = (1/2)(r - s)\sin q \quad (45)$$

$$\cosh\Theta = \{\cos^2 q + [(r+s)^2 \sin^2 q]/4\}^{1/2} \qquad (46)$$

$\cosh^2\Theta - \sinh^2\Theta = 1$ holds. By introducing an angle u:

$$\sin u = (r+s)\sin q / 2\cosh\Theta \qquad (47)$$

$$\cos u = \cos q / \cosh\Theta \qquad (48)$$

Since g = exp(jp), the determinant for determining the relationship between $U_j$ and $U_{j+1}$ is:

**[Math. 2]**

$$\begin{pmatrix} \cosh\Theta \exp(i(u+p)) & i\sinh\Theta \\ -i\sinh\Theta & \cosh\Theta\exp(-i(u+p)) \end{pmatrix} \qquad (49)$$

This is a unitary matrix of 2 × 2.

Its characteristic equation is:

$$\Lambda^2 - 2\cos(u+p)\cosh\Theta\Lambda + 1 = 0 \qquad (50)$$

Depending on whether the value of $\cos(u+p)\cosh\Theta$ is greater than 1 or not, there are two cases.

(a) Where $\cos(u+p)\cosh\Theta < 1$

The characteristic value in this case is:

$$\Lambda = \cos(u+p)\cosh\Theta \pm j(1 - \cos^2(u+p)\cosh^2\Theta)^{1/2} \qquad (51)$$

Since $|\Lambda| = 1$, N conversions are expressed by $\Lambda|^N$ by appropriate conversions, which just indicates rotations because the absolute value is constant.

(b) Where $\cos(u+p)\cosh\Theta > 1$

The characteristic value in this case is:

$$\Lambda = \cos(u+p)\cosh\Theta \pm (\cos^2(u+p)\cosh^2\Theta - 1)^{1/2} \qquad (52)$$

The greater characteristic value Λ is greater than 1, whereas the smaller characteristic value ($\Lambda|^{-1}$]) is between 0 and 1. Therefore, N conversions are expressed by $\Lambda|^N$ or $\Lambda|^{-N}$ by appropriate conversions, while the value of amplitude keeps increasing as N rises, since Λ is a real number greater than 1 so that there is no rotation. This provides a photonic bandgap (PBG).

The present invention provides resonators combining two dielectric multilayer reflectors on both sides of a photonic crystal. Therefore, a condition under which reflection is caused in a multilayer film is considered. This is when each of U and W layers has a thickness of a 1/4 wavelength. Here, $p = \pi/2$, $q = \pi/2$, $g = \exp(j\pi/2) = j$, and $h = j$. Taking only the U layers into consideration, the relationship between the $U_{i+1}$ and $U_i$ layers is determined. In the matrix of expression (44), $g = j$, $g^* = -j$, $\sin q = 1$, and $\cos q = 0$.

[Math. 3]

$$\begin{pmatrix} -(r+s)/2 & j(r-s)/2 \\ -j(r-s)/2 & -(r+s)/2 \end{pmatrix} \quad (53)$$

This is a matrix for determining the relationship between the $U_{i+1}$ and $U_i$ layers in the reflection ($g = j$, $h = j$, $p = \pi/2$, and $q = \pi/2$). The value of the determinant is 1. The expression becomes simple in the case of reflection. Assuming that $\cosh\Theta = (r + s)/2$ and $\sinh\Theta = (r - s)/2$, the above-mentioned matrix becomes:

[Math. 4]

$$\begin{pmatrix} -\cosh\Theta & j\sinh\Theta \\ -j\sinh\Theta & -\cosh\Theta \end{pmatrix} \quad (54)$$

Since $\cosh(A + B) = \cosh A \cosh B + \sinh A \sinh B$, and $\sinh(A + B) = \sinh A \cosh B + \cosh A \sinh B$, the ith power of the reflection matrix is:

[Math. 5]

$$\begin{pmatrix} (-1)^i \cosh i\Theta & -(-1)^i j\sinh i\Theta \\ (-1)^i j\sinh i\Theta & (-1)^i \cosh i\Theta \end{pmatrix} \quad (55)$$

This is a matrix for combining $F_i$ and $B_i$ of the ith set layer with G and R of the incident light. One set of reflective layers ($U_i + W_i$) increases $\Theta$ by 1. The inverse matrix of expression (55) is one substituting $\Theta$ with $-\Theta$. The first, second, ..., ith, ..., and Mth reflective layer sets simply act to set variables of sinh and cosh in the matrix to $\Theta$, $2\Theta$, ..., $i\Theta$, ..., and $M\Theta$, respectively. $\Theta$ increases one by one as the reflective layer advances rightward, and decreases one by one as the reflective layer goes back leftward. Whether the amplitude increases or decreases is determined by whether $\Theta$ is positive or negative in the reflective layer. Let $(r - s)$ be positive. Since $r = m/n$, $s = n/m$, and $rs = 1$, $r > 1 > s$, whereby $m > n$. That is, the refractive index n of the first kind layer U is lower than the refractive index m of the second kind layer W. As i increases, $\cosh i\Theta$ and $\sinh i\Theta$ become greater. They attain substantially the same value. Let incident light enter from the left side. The light is transmitted to the right side of the reflector having the M sets of layers.

[Math. 6]

$$\begin{pmatrix} (-1)^M \cosh M\Theta & -(-1)^M j\sinh M\Theta \\ (-1)^M j\sinh M\Theta & (-1)^M \cosh M\Theta \end{pmatrix} \quad (56)$$

All the matters are determined from the fact that the transmitted wave T is constituted by a forward wave alone without a backward wave. The vector of the transmitted amplitude is ${}^t(T, 0)$, where t is a sign of a transposed matrix. When the incident-wave vector is

$${}^t(\cosh M\Theta, -j\sinh M\Theta), \qquad (57)$$

there is no transmitted backward wave. Also,

$$T = (-1)^M(\cosh^2 M\Theta - \sinh^2 M\Theta) = (-1)^M. \qquad (58)$$

Though the incident wave G = coshMΘ and thus is a value much greater than 1, the transmitted light T = 1. This means that the former is substantially reflected. That is, the layers in the Mth set function as a reflector.

However, the present invention is constructed such that a photonic crystal is disposed behind one reflector, and another reflector is disposed behind the photonic crystal. There is a condition that no backward wave exists behind the last reflector. There is no condition that no backward wave exists behind the photonic crystal, since the reflector is disposed there. A backward wave can exist behind the first reflector (left side), since the photonic crystal is there. Then, a condition that the reflected wave amplitude is 0 (R = 0) can be imposed on the entrance side. This makes:

$$F_M = (-1)^M \cosh M\Theta \qquad (59)$$

$$B_M = (-1)^M j\mathrm{sih} M\Theta \qquad (60)$$

in the last stage of the Mth set in the reflector, so that they are multiplied instead of decaying. This means that the first reflector does not reflect the input wave anymore. The whole incident wave power is fed into the reflector. The latter does not function as a reflector but as an absorption plate. The fundamental-wave power absorbed by a large amount is further multiplied by the photonic crystal. The photonic crystal by itself yields a low multiplication factor, since the condition that the backward wave is 0 exists immediately thereafter. However, the second reflector is placed behind the photonic crystal in the present invention. Though the fundamental-wave intensity is restored at the end of the second reflector where the backward wave is 0 and the forward wave is 1, the amplitude is increased as coshMΘ and -jsinhMΘ at the beginning of the second reflector. When seen from the photonic crystal, forward and backward waves having large amplitudes such as F = coshMΘ and B = jsinhMΘ exist at the beginning, and those having large amplitudes such as F = coshMΘ and B = ˍjsinhMΘ also exist at the end. This means that the end amplitude of the photonic crystal alone is greatly released from the condition of (1, 0). This enhances the amplification effect by the photonic crystal. The gist of the present invention lies in this point. This is so, though it may seem hard to see.

Meanwhile, the fundamental-wave power is converted into a second harmonic in proportion to the nonlinear

optical coefficient $\chi^{(2)}$. How the second harmonic can be produced from the fundamental wave will now be explained. A Maxwell's equation is written in the cgs system of units and formed into a wave equation. The electric flux density is

$$E + 4\pi P. \qquad (61)$$

Since the wave is assumed to be a plane wave propagating in the z direction, x- and y-directional differentials are 0, whereby it can be written as

$$(\delta^2E/\delta z^2) - (n^2/c^2)(\delta^2E/\delta t^2) = 4\pi/c^2(\delta P/\delta t). \qquad (62)$$

This is an equation for determining a second harmonic, while its left side represents the electric field of the second harmonic. While the electric field of the fundamental wave has been studied so far, the second-wave electric field will now be taken into consideration. Since the fundamental-wave electric field has been expressed by E so far, the second-harmonic electric field will be denoted by D so as not to be mixed up with the former. D is for double. This D differs from the electric flux density mentioned above. Since the number of signs is limited, the electric field of the double harmonic will be denoted by D but must not be mixed up with the electric flux density. Since the second-harmonic electric field has only the x-directional component, x will be omitted. The time derivative is $-2j\omega$. Since the wave number of the fundamental wave is k, the wave number of the second harmonic will be denoted by w in order to distinguish it from the former. Second-order differentiation with respect to time gives $-4\omega^2$. The wave number of the second harmonic is $w = 2n\omega/c$. Here, n is the refractive index with respect to the double wave B. However, the right side of expression (62) is the dielectric polarization $P(2\omega)$ of the double harmonic produced by the fundamental wave. The dielectric polarization $P(2\omega)$ of the double frequency produces the double-harmonic electric field by radiation.

The right side is a source term of the light propagation expression on the left side. It is concerned with a steady-state solution. The time derivative is determined. Expression (62) becomes

$$(\delta^2D/\delta z^2) + w^2D = 4\pi/c^2(\delta P/\delta t). \qquad (63)$$

$$(\delta^2G/\delta z^2) + w^2G = \delta(z - \xi). \qquad (64)$$

The right side is a $\delta$ function. Since both sides should equal each other when integrated, the first-order derivative of G must have a certain discontinuity. Under the condition that the integral of $\delta G/\delta z$ is 1, Green's function $G(z, \xi)$ becomes

$$G(z, \xi) = (j/2w)\exp(jw|z - \xi|). \qquad (65)$$

The second harmonic E(z) is calculated by integrating source $4\pi/c^2(\delta^2P/\delta t^2)$ multiplied with Green's function.

$$D(z) = \int 4\pi/c^2(\delta^2P/\delta t^2)G(z, \xi)d\xi. \qquad (66)$$

P is the second-order dielectric polarization caused by the nonlinear effect and thus yields only a multiplier ($-2j\omega$) upon second-order differentiation with respect to time. The inside of the integral becomes $-4\pi(2\omega)^2P/c^2$. The second-order dielectric polarization P can be written as

$$P = \chi^{(2)}E(z)E(z). \quad (67)$$

E(z) is the fundamental-wave electric field calculated so far. The second harmonic D(z) at z is given by superposing electric fields caused by the springing of the second-order dielectric polarization from all the active layers.

The contribution of the jth layer will be considered. The electric field $E_j$ of the jth layer is constituted by a forward wave $F_j$ and a backward wave $B_j$. It looks like expression (19), but the subscript j in $E_j$, $F_j$, $B_j$, and $k_j$ is omitted in order to reduce complexity. When calculating the second harmonic within the jth layer, both of the cases where z - ξ is positive and negative must be calculated.

$$E = F\exp[jk(z - z_{j-1})] + B\exp[-jk(z - z_j)]. \quad (68)$$

However, the second harmonic by the forward wave on the outside (z > L, where L is the crystal length) is important. Therefore, only the square of the forward wave $F_j$ is taken into account.

Hence, the second harmonic caused by the forward wave is calculated. The dielectric polarization of the jth layer by the forward wave is given by

$$P = \chi^{(2)}FF\exp[2jk(z - z_j)]. \quad (69)$$

Its resulting second harmonic $D_j(z)$ at z point ($z > z_j$) is calculated by

$$D_j(z) = -\int[4\pi(2\omega)^2/c^2]\, \chi^{(2)}F^2\exp[2jk(\xi - z_j)]G(z, \xi)d\xi. \quad (70)$$

Substituting Green's function G(z, ξ) into the above yields

$$D_j(z) = [-4\pi(2\omega)^2\chi^{(2)}/c^2]F^2(j/2w)\int\exp(jw|z - \xi|)\exp[2jk(\xi - z_j)]d\xi. \quad (71)$$

The integration range is from $z_{j-1}$ to $z_j$. Since the second harmonic is determined where z is greater than $z_j$, z - ξ > 0 in the integration range.

$$D_j(z) = [-4\pi(2\omega)^2\chi^{(2)}/c^2][F^2/2w(2k - w)]\{\exp[jw(z - z_j)] - \exp[jw(z - z_{j-1}) + 2jk(z_{j-1} - z_j)]\}. \quad (72)$$

Since $z_j - z_{j-1}$ is the thickness $d_j$ of the jth layer ($z_{j-1} - z_j = - d_j$),

$$D_j(z) = [-4\pi(2\omega)^2\chi^{(2)}/c^2][F^2/2w(2k - w)]\exp(jwz)[\exp(-jwz_j) - \exp(-jwz_{j-1} - 2jkd_j)]. \quad (73)$$

In practice, F has the subscript j attached thereto. Summing with respect to j can yield the intensity D(z) of the second harmonic at z. Letting

$$b = -[2\pi(2\omega)^2\chi^{(2)}]/w(2k - w)c^2, \qquad (74)$$

$$D(z) = b\exp(jwz)\sum F_j^2[\exp(-jwz_j) - \exp(-jwz_{j-1} - 2jkd_j)]. \qquad (75)$$

The denominator of b includes (2k - w). If 2k - w = 0, the denominator becomes 0. At this time, the inside of [...] also becomes 0, thereby yielding no divergence. Expression (75) is a strict equation. However, it includes the square of amplitude $F_j^2$, which is not a fixed value, and thus cannot easily be integrated.

Example 1

Example 1 of the first embodiment of the present invention will now be explained.

If the example of the present invention is explained from the beginning, its effects will be hard to see. Therefore, cases of a monolayer film and a photonic crystal will be explained preliminarily before setting forth the composite photonic crystal of photonic + resonators in accordance with the present invention. Further, a comparative example holding a GaAs monolayer film between resonators will be explained.

1. Case of a GaAs monolayer film (Fig. 4)

Fig. 4 illustrates a change in the intensity of a double harmonic obtained when varying the thickness L of a GaAs monolayer film. The abscissa is the film thickness L (nm). The ordinate is the intensity of the double harmonic. The fundamental wave is an infrared beam at a wavelength of 1864 nm (161 THz) having an energy of 0.665 eV. The double harmonic is a near-infrared beam at a wavelength of 932 nm (322 THz) having an energy of 1.33 eV.

GaAs has refractive indexes $n_1$ = 3.37 and $n_2$ = 3.44 with respect to the fundamental wave and the double harmonic, respectively. The fundamental-wave wave number k = $1.136 \times 10^7$ $m^{-1}$, while the double-wave wave number w = $2.319 \times 10^7$ $m^{-1}$. $\Delta k = w - 2k$ = 4,7 × 105 $m^{-1}$. $2\pi/\Delta k$= $1.33 \times 10^{-5}$ m = 13300 nm.

The second harmonic increases with the film thickness L while vibrating. Such fine waves occur because of the interference effect. The intensity of the second harmonic in the monolayer film is maximized near the film thickness of 7000 nm. It becomes about $2.3 \times 10^{-7}$. This is the intensity of the double wave normalized by assuming that the intensity of the fundamental wave is 1. It starts to decrease at 7000 nm or above. The double wave becomes 0 at 13300 nm. Thereafter, it starts to increase again.

Even when a nonlinear effect exists, the monolayer film of GaAs cannot generate a sufficient double wave under strong influence of the fact that $\Delta k$ is not 0. The most favorable nonlinear element as the monolayer film is obtained when a GaAs thin film whose L = 7000 nm is used. Even in this case, the intensity of the second harmonic is only 2.3 $\times 10^{-7}$ times that of the fundamental wave, which is insufficient.

2. GaAs/$Al_{0.82}Ga_{0.18}As$ alternate multilayer photonic crystal (Figs. 5, 6, 7, and 8)

Fig. 5 is a schematic view of a photonic crystal formed by alternately laminating thin films of GaAs and $Al_{0.82}Ga_{0.18}As$. Though not depicted, there is a substrate in practice. GaAs and $Al_{0.82}Ga_{0.18}As$ (hereinafter simply abridged as AlGaAs) have thicknesses of 82 nm and 215.5 nm, respectively. The thickness of one cycle is 297.5 nm. They were laminated by 40 cycles. The phase angle is obtained by multiplying the quotient of the effective thickness (nd) divided by the wavelength $\lambda$ with $2\pi$ (360°). The phase angle = 364 nd/$\lambda$.

**[Table 1]**

| | Refractive index n | Thickness d | Phase angle |
|---|---|---|---|
| GaAs | 3.37~3.44 | 82nm | 53.3°~109° |
| AlGaAs | 2. 92~2.98 | 21.5. 5nm | 121°~248° |

Assuming that light having an energy of 0.6 eV ($\lambda$ = 2060 nm) to 1.46 eV ($\lambda$ = 840 nm) is incident on one end of the photonic crystal, Fig. 6 illustrates the results of calculation concerning the ratio (transmission) of the power of light exiting from the final end to that of the incident wave. The abscissa is the photon energy (eV).

The wavelength of light λ (nm) is the quotient of 1239.8 divided by the photon energy (eV). When the photon energy is changed, the transmission varies by vibrating strongly. The transmission is 0 within the range of 0.66 eV to 0.72 eV. Such a wavelength band where the transmission continuously becomes 0 is called a photonic bandgap (PBG). The transmission is also 0 within the range of 1.33 eV to 1.39 eV. This range is also a photonic bandgap. The present invention makes the energies of the fundamental wave and second harmonic coincide with photonic bandgap ends, thereby enhancing the electric field. Alternatively, as a second-best solution, only the fundamental-wave energy is caused to coincide with a photonic bandgap end, so as to enhance the electric field.

This is a photonic crystal designed for a nonlinear element whose fundamental wave and double harmonic are at 0.665 eV (λ = 1860 nm) and 1.330 eV (λ = 930 nm), respectively. Hence, it is designed such that the fundamental-wave energy and double-harmonic energy just coincide with the ends ofphotonic bandgaps (PBG).

The refractive indexes of GaAs and AlGaAs with respect to light whose wavelength/energy falls within this range are unclear. There are no reliable measurement values of refraction with respect to all the wavelengths in this range. Therefore, the following changes in the dielectric constant are assumed. The dielectric constant is the square of the refractive index.

$$\text{GaAs dielectric constant} = 0.7 \times (\text{light energy}) + 10.9.$$

$$\text{AlGaAs dielectric constant} = 0.5 \times (\text{light energy}) + 8.2.$$

In the case where the light energy is 0.665 eV (fundamental wave at 1.86 μm), for example, the GaAs dielectric constant is 11.37. Its square root yields the refractive index, which is 3.37. At 0.665 eV (1.86 μm), the AlGaAs dielectric constant is 8.53. Its square root yields the refractive index, which is 2.92.

In the case where the light energy is 1.33 eV (double wave at 0.93 μm), for example, the GaAs dielectric constant is 11.83. Its square root yields the refractive index, which is 3.44. At 1.33 eV, the AlGaAs dielectric constant is 8.86. Its square root yields the refractive index, which is 2.98. It is unclear whether or not the dielectric constants are represented by linear expressions of light energy such as those mentioned above in practice. However, the refractive indexes of GaAs and AlGaAs at these wavelengths are still uncertain. Calculation is not able when the refractive index is unknown. Therefore, the above approximation formulas are used.

When the light energy ranges from 0.665 eV to 1.33 eV, the refractive index of GaAs varies from 3.37 to 3.44. The refractive index of AlGaAs varies from 2.92 to 2.98.

The phase angle is obtained by multiplying the quotient of the effective thickness (nd) divided by the wavelength with 360°. This is 360nd/λ. Light within the range inside of the photonic bandgap cannot be transmitted. Here, the fundamental wave and the double harmonic are caused to coincide with respective ends of two photonic bandgaps (PBG1, 2). It is designed such that the fundamental wave = PBG1 end, while the double wave = PBG2 end. From this, the GaAs thickness of 82 nm and the AlGaAs thickness of 215.5 nm are determined.

Fig. 7 is a graph illustrating a change in the electric field of the fundamental wave occurring within the layers when the fundamental wave is made incident on one side of the GaAs/AlGaAs photonic crystal produced as mentioned above such that the fundamental wave and the double wave coincide with the photonic bandgap ends. The abscissa is the total thickness of thin films. The fundamental wave is an infrared beam having an energy of 0.665 eV and a wavelength of 1864 nm (frequency of 161 THz). GaAs is an active layer having a nonlinear effect. AlGaAs is an inactive layer free of the nonlinear effect.

With respect to light at 0.665 eV (wavelength of 1864 nm), GaAs and AlGaAs have refractive indexes of 3.37 and 2.92, respectively.

On the background of the same graph, raised and depressed gratings are illustrated. Mountain and valley portions represent the active GaAs and inactive AlGaAs layers, respectively. The fundamental-wave electric field is made greater and smaller in the active GaAs and inactive AlGaAs layers, respectively. They are determined such that the forward-wave amplitude F and the backward-wave amplitude B have the same polarity (substantially B = F) in the active layers. The forward-wave amplitude F and the backward-wave amplitude B have different polarities (substantially B = -F) in the active layers. The electric field thus becomes stronger and weaker alternately, since the purpose is to enhance the electric field in the active layers.

As the film thickness (number of layers) increases, the fundamental-wave electric field becomes stronger. Here, the incident fundamental-wave power G = 1. At 5 cycles (about 1300 nm), the fundamental wave within the GaAs active layers is about 2 times. At 8 cycles (about 2000 nm), the intensity of the fundamental wave in the GaAs active layers is about 3 times. At 20 cycles (a thickness of about 6000 nm), the intensity of the fundamental wave is about 5 times that of the incident wave. The maximum value of the fundamental-wave intensity is 5 times. When the fundamental-wave intensity is 5 times, the double-wave intensity should become 25 times. Though such enhancement is obtained, the fundamental-wave intensity starts to decrease when 20 cycles are exceeded. At 29 cycles (a thickness of about 8200 nm), the intensity decreases to 4 times. At 40 cycles (about 12000 nm), the intensity decreases to 1. This yields no multiplication effect at all.

This element is not effective in enhancing the fundamental wave, since the fundamental wave finally exits therefrom at 1. The double wave is a superposition of portions issued from the individual layers. Since $\Delta k$ is not 0, the double harmonic cannot be enhanced by increasing the length L of the element. Since this is a photonic crystal having a total length (total thickness) of 12000 nm, cutting it in the middle (at 6000 nm) may appear to be appropriate, which is not so in reality. Cutting in the middle changes the boundary condition, whereby the fundamental wave at the final end is still small when cut in the middle.

Fig. 8 is a graph illustrating the magnitude of the second harmonic produced by the fundamental wave in the layers of the GaAs/AlGaAs photonic crystal illustrated in Fig. 5. The abscissa is the z-directional position in the length (total thickness) L of the crystal. The ordinate is the intensity of the second-harmonic (double-wave) electric field. The double wave is produced by the fundamental wave within the layers. Therefore, its distribution is the same as that of the fundamental wave in Fig. 7. Taking the double harmonic in the single GaAs layer as 1, the intensity is expressed relative thereto. The double waves advance rightward to the outside while being superposed on each other.

The double-harmonic intensity increases with the distance z while vibrating. Mountains and valleys of gratings are also written on the background. The mountains represent the GaAs active layers, while the valleys represent the AlGaAs layers. The fundamental-wave electric field is greater in the active layers, but smaller in the inactive layers. On the contrary, the double wave is weaker in the GaAs active layers, but stronger in the AlGaAs inactive layers.

Since the active layers change the fundamental wave into the double harmonic, it will be better if the fundamental wave is stronger. The double harmonic is only required to occur, and may exist greatly in the AlGaAs layer. It advances in the direction of increasing z and exits to the outside.

The intensity of the double harmonic increases along the z direction. At about 6000 nm (about 20 cycles), it attains the maximum value (about 12 times). At 12000 nm, the double harmonic becomes substantially 0. This does not mean that the double harmonic fails to exit to the outside. The double wave of Fig. 8 is produced by the fundamental wave within the same layer, and is a superposition of such in practice. At 6000 nm, however, the double harmonic is about 12 times and thus is still insufficient.

3. Photonic crystal with resonators (present invention: Figs. 9, 10, and 11)

Resonators (two reflectors) are further attached to both sides, so as to yield a photonic crystal with resonators. Fig. 9 is a view of such a photonic crystal equipped with the resonators (reflectors) on both sides.

That is, the photonic crystal with resonators illustrated in Fig. 9 comprises a photonic crystal and reflectors. The photonic crystal is formed by alternately laminating a plurality of sets of an active layer with a fixed thickness having a nonlinear effect for converting a fundamental wave into a second harmonic and an inactive layer with another fixed thickness free of the nonlinear effect, while being constructed such that the energy of the fundamental wave coincides with a photonic bandgap end. In this embodiment, the active layer is a GaAs layer, while the inactive layer is constituted by an $Al_xGa_{1-x}As$ layer, which is more specifically an $Al_{0.82}Ga_{0.18}As$ layer. The photonic crystal may be constructed such that the second-harmonic energy coincides with a photonic bandgap end in addition to the fundamental-wave energy. The reflectors, each of which is made of a multilayer formed by laminating a plurality of sets of two kinds of thin films having different refractive indexes and is adapted to reflect the fundamental wave, constitute the resonators. In this embodiment, the multilayer film is constructed as a laminate of $Al_yGa_{1-y}As$ and $Al_zGa_{1-z}As$ layers, more specifically as a laminate of $Al_{0.82}Ga_{0.18}As$ and $Al_{0.24}Ga_{0.76}As$ layers.

As illustrated in Fig. 9, the reflectors (multilayer films) are connected to both sides of the photonic crystal. A fundamental wave near a wavelength of 1864 nm is incident on one end face of the photonic crystal with resonators and reciprocally reflected between the resonators having the multilayer films, thereby enhancing its intensity within the photonic crystal. The fundamental wave is converted into a second harmonic near a wavelength of 932 nm in an active layer which is a GaAs layer, and the resulting second harmonic is taken out from the other end face of the photonic crystal. Here, "near" in the description "near a wavelength of 1864 nm" means a wavelength region obtained by adding a full width at half maximum to each of the front and rear sides of a center wavelength where the transmission of the element attains a peak value when changing the wavelength. The same holds in the following explanations. The photonic crystal with resonators in accordance with the first embodiment of the present invention will now be explained in further detail with reference to Fig. 9.

Each resonator is constructed as a multilayer film formed by alternately laminating 20 cycles (20 + 20 layers) of $Al_{0.24}Ga_{0.76}As$ and $Al_{0.82}Ga_{0.18}As$ layers.

Let the dielectric constant of $Al_{0.24}Ga_{0.76}As$ be 0.6 × (energy) + 9.8. At 0.665 eV (λ = 1864 nm), the dielectric constant is 10.199, whereby the refractive index is 3.19. At 1.33 eV (λ = 932 nm), the dielectric constant is 10.598, whereby the refractive index is 3.26.

Let the dielectric constant of $Al_{0.82}Ga_{0.18}As$ be 0.5 × (energy) + 8.2. At 0.665 eV (λ = 1864 nm), the dielectric constant is 8.532, whereby the refractive index is 2.92. At 1.33 eV (λ = 932 nm), the dielectric constant is 8.865, whereby the refractive index is 2.98.

**[Table 2]**

| Mixed crystal | Refractive index n | Thickness d |
|---|---|---|
| $Al_{0.24}Ga_{0.76}As$ | 3.19~3.26 | 155.3nm |
| $Al_{0.82}Ga_{0.18}As$ | 2.92~2.98 | 160.2nm |

With respect to the fundamental wave (1864 nm), the phase angle of the $Al_{0.24}Ga_{0.76}As$ layer is 360nd/λ = 95.6°.

With respect to the fundamental wave (1864 nm), the phase angle of the $Al_{0.82}Ga_{0.18}As$ layer is 360me/λ = 90.3°. In each case, the phase angle is about 90° (1/4 wavelength). That is, it is a reflector selectively reflecting the fundamental wave.

However, the photonic crystal is disposed therebehind, while a backward wave exists at the end, whereby the incident wave is easily fed into the inside. It acts like an absorption plate instead of a reflector for the incident wave, but serves as a reflector for the fundamental wave therewithin.

Attaching such reflectors to both sides of the photonic crystal constructs resonators. This further enhances the electric field of the fundamental wave in the intermediate layer. The double wave produced by a nonlinear conversion is also enhanced.

The crystal of Fig. 9 is constructed by the left resonator comprising 20 cycles (40 layers), the photonic crystal comprising 40 cycles (80 layers), and the right resonator comprising 20 cycles (40 layers). This raises the reflectance with respect to the fundamental wave. The following table lists the layer composition, refractive index with respect to the fundamental wave, thickness, and layer number sequentially from the left.

**[Table 3]**

| | Refractive index n | Thickness d | Layer No. |
|---|---|---|---|
| $Al_{0.24}Ga_{0.76}As$ | 3.19 | 155.3 nm | 1 |
| $Al_{0.82}Ga_{0.18}As$ | 2.92 | 160.2 nm | 2 |
| . . . | . . . | . . . | . . . |
| $Al_{0.24}Ga_{0.76}As$ | 3.19 | 155.3 nm | 39 |
| $Al_{0.82}Ga_{0.18}As$ | 2.92 | 160.2 nm | 40 |
| GaAs | 3.37 | 82 nm | 41 |
| $Al_{0.82}Ga_{0.18}As$ | 2.92 | 215.5 nm | 42 |
| . . . | . . . | . . . | . . . |
| GaAs | 3.37 | 82 nm | 119 |
| $Al_{0.82}Ga_{0.18}As$ | 2.92 | 215.5 nm | 120 |
| $Al_{0.24}Ga_{0.76}As$ | 3.19 | 155.3 nm | 1.21 |
| $Al_{0.82}Ga_{0.18}As$ | 2.92 | 160.2 nm | 122 |
| . . . | . . . | . . . | . . . |
| $Al_{0.24}Ga_{0.76}As$ | 3.19 | 155.3 nm | 159 |
| $Al_{0.82}Ga_{0.18}As$ | 2.92 | 160.2 nm | 160 |

The layers numbered 1 to 40 constitute the first reflector, 41 to 120 the photonic crystal, 121 to 160 the second reflector. The total thickness is (155.3 + 160.2) × 20 + (82 + 215.5) × 40 + (155.3 + 160.2) × 20 = 24520 nm. In terms of coordinates, z = 0 to 6310 nm in the left resonator (first reflector), z = 6310 to 18210 nm in the photonic crystal, and z = 18210 to 24520 nm in the right resonator (second reflector).

Fig. 10 illustrates the spectrum of transmission of the photonic crystal with resonators and the magnitude of second harmonic. A photonic bandgap exists at 0.655 eV to 0.72 eV. Another photonic bandgap exists near 1.330 eV, which is outside of the range of Fig. 10. The fundamental wave at 0.665 eV and the double wave at 1.33 eV coincide with photonic bandgap ends. The transmission becomes 1 for discrete energies. The transmission is low with respect to most of energies. The second-harmonic intensity becomes greater at 0.665 eV within the photonic bandgap. It is about 0.01 ($10^{-2}$). Otherwise, the second harmonic intensity is substantially 0. The second harmonic is about $10^6$ times that in the case of the GaAs monolayer film (L = 3280 nm with the second harmonic of $10^{-8}$).

Fig. 11 illustrates the increase in the electric field intensity of the fundamental wave (1864 nm) in the photonic crystal portion (z = 6310 nm to 18210 nm) in the crystal composed of the resonators and the photonic crystal. The fundamental wave is enhanced in the same parts as the active layers (GaAs). At z = 12000 nm, the fundamental-wave intensity is as high as 180 times that of the incident wave.

While the fundamental-wave intensity increases to 5 times that of the incident wave in the case of the photonic crystal alone (without resonators) of Fig. 7, the fundamental wave is enhanced to 180 times that of the incident wave in the present invention constituted by the resonators + photonic crystal (at z = about 12000 nm). That is, the fundamental-wave multiplication effect is 30 to 40 times that of the photonic crystal alone. When the fundamental-wave intensity is 180 times, the double-wave intensity should be enhanced to about 30000 times. It is local enhancement, but is sufficiently large and will remain without cancellation even if superposed.

<u>4. GaAs monolayer crystal with resonators (Comparative Example: Figs. 12, 13, and 14)</u>

While the photonic crystal enhanced the fundamental wave by 5 times, the photonic + resonator crystal of the present invention enhanced the fundamental wave by 180 times. It is wondered whether their difference of 36 times is an effect specific to the resonator or not.

Therefore, a comparative example in which a GaAs monolayer film having the same thickness (3280 nm) as the total film thickness (82 nm × 40) of GaAs in the photonic crystal with resonators is held between resonators will be considered. The photonic crystal of Fig. 9 is substituted by GaAs/AlGaAs in which halves (4310 nm each) of the total thickness (215.5 nm × 40 layers = 8620 nm) of inactive layers $Al_{0.82}Ga_{0.18}As$ are attached to both sides of GaAs. The same resonators are attached to both sides, so as to form a GaAs monolayer film with resonators.

Fig. 12 is a view of such a GaAs crystal equipped with resonators on both sides. Each resonator is a multilayer film formed by alternately laminating 20 cycles (20 + 20 layers) of an $Al_{0.24}Ga_{0\cdot76}As$ layer having a thickness of 155.3 nm and an $Al_{0.82}Ga_{0.18}As$ layer having a thickness of 160.2 nm.

Fig. 13 illustrates the light energy (eV) vs. transmission (right ordinate) and double-wave intensity (left ordinate) in the GaAs layer crystal with resonators. The double harmonic appears (by about $1.6 \times 10^{-5}$) only at 0.665 eV (represented by the fundamental-wave energy). This is about 1/50 that of the above-mentioned photonic + resonators (about 0.008).

Fig. 14 is a graph illustrating the magnitude of the fundamental-wave electric field in the thickness direction (z) of the GaAs/AlGaAs part in the GaAs layer crystal with resonators. The ranges of 6000 to 10500 nm and 14000 to 18100 nm indicated by valleys are the AlGaAs layers. The range of 10500 to 14000 nm indicated by a mountain corresponds to the GaAs layers. The peak of the fundamental-wave power in the GaAs layer is about 20 times that of the incident wave. Within the resonators, the fundamental-wave electric field is substantially constant without increasing with z.

Therefore, the 180-times increase in the fundamental wave, though locally, as in the present invention can be attributed to the synergic effect of the photonic crystal and resonators.

<u>Example 2</u>

Example 2 of the first embodiment of the present invention will now be explained.

<u>Example 2: Change in the second harmonic when Increasing the total number of layers (Fig. 15)</u>

To both sides of a GaAs/AlGaAs basic photonic crystal constituted by 40 cycles, photonic crystals having the same combination or resonators (reflectors) were added; a fundamental wave was made incident on one end at right angles, and how the second harmonic occurring on the opposite side increased or decreased was studied.

1. Basic photonic crystal (GaAs/AlGaAs)

The active and inactive layers are made of GaAs and $Al_{0.79}Ga_{0.21}As$, respectively. They are 40 layers each, thus yielding 40 cycles.
$Al_{0.79}Ga_{0.21}As$ dielectric constant = 0.9 × (light energy) + 8.3.
GaAs film thickness = 140 nm.
$Al_{0.79}Ga_{0.21}As$ film thickness = 147.5 nm.
40-cycle film thickness = 11500 nm.
Second harmonic intensity = $1 \times 10^{-10}$.

2. When increasing the number of layers of the same photonic crystal (broken curve G1 in the lower part of Fig. 15)

$Al_{0.79}Ga_{0.21}As$ dielectric constant = 0.9 × (light energy) + 8.3.
GaAs film thickness = 140 nm.
$Al_{0.79}Ga_{0.21}As$ film thickness = 147.5 nm.
150-cycle film thickness = 43125 nm.

Cycles were increased in the photonic crystal having the same composition as that of the basic photonic crystal. There were no resonators. The total number of cycles was increased from the basic 40 cycles to 150 cycles. The change in the second-harmonic electric field in this case was studied. This is represented by broken curve G1 in the lower part of Fig. 15. The abscissa is the total number of cycles (half the number of layers). It increases up to 73 cycles ($4 \times 10^{-8}$) and then decreases to $6 \times 10^{-9}$ at 103 cycles. From there, it increases up to 107 cycles to become about $3 \times 10^{-8}$. Thereafter, the second harmonic decreases as the thickness increases. From 122 cycles, it starts to increase gradually. It is $5 \times 10^{-8}$ at 150 cycles. The second harmonic does not increase no matter how much the active layer GaAs is increased. This is because the active layer as a whole becomes so thick that second harmonics cancel each other out.

3. When increasing the number of layers of resonators solid curve G2 in the upper art of Fig. 15

Resonators each constituted by an $Al_{0.79}Ga_{0.21}As/Al_{0.21}Ga_{0.79}As$ multilayer reflector were disposed on both sides of a 40-cycle basic photonic crystal, so as to increase the number of cycles of the resonator (in accordance with the technical idea of the present invention) from 0 to 110 cycles (150 cycles in total).
$Al_{0.21}Ga_{0.79}As$ dielectric constant = 1.7 × (light energy) + 9.1.
$Al_{0.79}Ga_{0.21}As$ dielectric constant = 0.9 × (light energy) + 8.3.
$Al_{0.21}Ga_{0.79}As$ film thickness = 147.6 nm.
$Al_{0.79}Ga_{0.21}As$ film thickness = 161.6 nm.
150-cycle film thickness = 11500 + 33946 = 45446 nm.

The change in the second-harmonic electric field is represented by solid curve G2 in the upper part of Fig. 15. The abscissa is the total number of cycles (half the number of layers). It increases up to 54 cycles ($6 \times 10^{-9}$) and then decreases to $2 \times 10^{-9}$ at 62 cycles. From there, it increases up to 82 cycles to become about $2 \times 10^{-7}$. Thereafter, the second harmonic decreases as the thickness increases up to 89 cycles. Then, it increases to about $1 \times 10^{-5}$ at 109 cycles. From there, it decreases to $4 \times 10^{-6}$ at 118 cycles. Then, it increases again. It becomes about $4 \times 10^{-4}$ at 137 cycles. Since the reflectors are made thicker without widening the active layers, second harmonics are kept from cancelling each other out, so that the gain by reflection increases. It remarkably exhibits the merit of the present invention having a structure in which the photonic is held between the reflectors.

Example 3

Example 3 of the first embodiment of the present invention will now be explained.

Example 3: Change in the second harmonic when increasing the total number of layers (Fig. 16)

To both sides of a GaAs/AlGaAs basic photonic crystal constituted by 40 cycles, photonic crystals having the same combination or resonators (reflectors) were added; a fundamental wave was made incident on one end, and how the second harmonic occurring on the opposite side increased or decreased was studied. The tensor of susceptibility of GaAs was supposed to be a component which exists in practice. A case where the fundamental wave was obliquely incident on the GaAs (100) plane at 45° was assumed.

1. Basic photonic crystal (GaAs/AlGaAs)

The active and inactive layers are made of GaAs and $Al_{0.79}Ga_{0.21}As$, respectively. They are 40 layers each, thus yielding 40 cycles.
$Al_{0.79}Ga_{0.21}As$ dielectric constant = 0.9 × (light energy) + 8.3.
GaAs film thickness = 140 nm.
$Al_{0.79}Ga_{0.21}As$ film thickness = 155 nm.
40-cycle film thickness = 11800 nm.
Second harmonic intensity = 4 × $10^{-12}$.

2. When increasing the number of layers of the same photonic crystal (broken curve G3 in the lower part of Fig. 16)

$Al_{0.79}Ga_{0.21}As$ dielectric constant = 0.9 × (light energy) + 8.3.
GaAs film thickness = 140 nm.
$Al_{0.79}Ga_{0.21}As$ film thickness = 155 nm.
150-cycle film thickness = 44250 nm.
Cycles were increased in the photonic crystal having the same composition as that of the basic photonic crystal. There were no resonators. The total number of cycles was increased from the basic 40 cycles to 150 cycles. The change in the second-harmonic electric field in this case was studied. This is represented by broken curve G3 in the lower part of Fig. 16. The abscissa is the total number of cycles (half the number of layers). It increases up to 50 cycles (6 × $10^{-11}$) and then decreases to 1 × $10^{-11}$ at 60 cycles. From there, it increases up to 83 cycles to become about 7 × $10^{-10}$. This is the maximum. Thereafter, the second harmonic decreases when the thickness of film increases. While forming low mountains at 109 and 137 cycles, it is 1 × $10^{-10}$ at 150 cycles. The second harmonic does not increase no matter how much the active layer GaAs is increased. This is because the active layer as a whole becomes so thick that second harmonics cancel each other out.

3. When increasing the number of layers of resonators (broken curve G4 in the upper part of Fig. 16)

Resonators each constituted by an $Al_{0.79}Ga_{0.21}As/Al_{0.21}Ga_{0.79}As$ multilayer reflector were disposed on both sides of a 40-cycle basic photonic crystal, so as to increase the number of cycles of the resonator (in accordance with the technical idea of the present invention) from 0 to 110 cycles (150 cycles in total).
$Al_{0.21}Ga_{0.79}As$ dielectric constant = 1.7 × (light energy) + 9.1.
$Al_{0.79}Ga_{0.21}As$ dielectric constant = 0.9 × (light energy) + 8.3.
$Al_{0.21}Ga_{0.79}As$ film thickness = 146 nm.
$Al_{0.79}Ga_{0.21}As$ film thickness = 160 nm.
150-cycle film thickness = 11800 + 33660 = 45460 nm.
The change in the second-harmonic electric field is represented by solid curve G4 in the upper part of Fig. 16. The abscissa is the total number of cycles (half the number of layers). It increases up to 58 cycles (6 × $10^{-10}$) and then decreases to 1 × $10^{-10}$ at 63 cycles. From there, it increases up to 80 cycles to become about 1 × $10^{-8}$. Then, it decreases up to 84 cycles as the film thickness increases. Thereafter, it increases to about 4 × $10^{-7}$ at 106 cycles. Then, it decreases to 6 × $10^{-6}$ at 127 cycles. It becomes the minimum at 137 cycles and then increases. It becomes about 4 × $10^{-5}$ at 150 cycles. Since the reflectors are made thicker without widening the active layers, second harmonics are kept from cancelling each other out, so that the gain by reflection increases. It remarkably exhibits the merit of the present invention having a structure in which the photonic is held between the reflectors.

Second Embodiment

The second embodiment of the present invention will now be explained. Fig. 17 illustrates a composite photonic structure in the second embodiment of the present invention.
The composite photonic structure in the second embodiment illustrated in Fig. 17 comprises a photonic crystal and reflectors (multilayer films or DBR resonators). The photonic crystal is formed by alternately laminating a plurality of sets of an active layer with a fixed thickness having a nonlinear effect for converting a fundamental wave into a second harmonic and an inactive layer with another fixed thickness free of the nonlinear effect, while being constructed such that the energy of the fundamental wave coincides with a photonic bandgap end. In this embodiment, the active and inactive layers are constructed by ZnO and $SiO_2$ layers, respectively. The photonic crystal may be constructed such that the second-harmonic energy coincides with a photonic bandgap end in addition to the fundamental-wave energy. The reflectors, each of which is made of a multilayer film formed by laminating a plurality of sets of two kinds of thin films having different refractive indexes and is adapted to reflect the fundamental wave, constitute the resonators. In the second embodiment, the multilayer film is constructed as a laminate of $Al_2O_3$ and $SiO_2$ layers.

The film thicknesses, numbers of layers, total film thicknesses, refractive indexes, and numbers of cycles of the photonic crystal and reflectors and the total crystal length in the second embodiment are as follows:

1. In the active layers (ZnO layers) in the photonic crystal:

    Film thickness: 176.7 nm
    Number of layers: 30
    Total film thickness: 5301.0 nm (176.7 nm $\times$ 30 layers = 5301.0 nm)
    Refractive index for fundamental wave: 1.93
    Refractive index for second harmonic: 2.02

2. In the inactive layers ($SiO_2$ layers) in the photonic crystal:

    Film thickness: 101.4 nm
    Number of layers: 29
    Total film thickness: 2940.6 nm (101.4 nm $\times$ 29 layers = 2940.6 nm)
    Refractive index for fundamental wave: 1.45
    Refractive index for second harmonic: 1.46

3. Number of cycles in the photonic crystal: 30
4. In the $Al_2O_3$ layers in the reflector:

    Film thickness: 153.6 nm
    Number of layers: 20
    Total film thickness: 3072.0 nm (153.6 nm $\times$ 20 layers = 3072.0 nm)
    Refractive index for fundamental wave: 1.75
    Refractive index for second harmonic: 1.77

4. In the $SiO_2$ layers in the reflector:

    Film thickness: 185.7 nm
    Number of layers: 20
    Total film thickness: 3714.0 nm (185.7 nm $\times$ 20 layers = 3714.0 nm)
    Refractive index for fundamental wave: 1.45
    Refractive index for second harmonic: 1.46

5. The number of cycles in the reflectors: 20 cycles each in the front and rear, 40 cycles in total
6. Total crystal length: 21.9 $\mu$m

As illustrated in Fig. 17, the DBR resonators are connected to both sides of the photonic crystal. A fundamental wave near a wavelength of 1064 nm enters the photonic crystal with resonators from one end face such that its s-polarized light is incident on the crystal plane at right angles, and is reciprocally reflected between resonators each having a multilayer film, whereby the intensity of the fundamental wave is enhanced within the photonic crystal. The fundamental wave is converted into a second harmonic near a wavelength of 532 nm in an active layer which is a ZnO layer, and the resulting second harmonic is taken out from the other end face of the photonic crystal.

Performances of the composite photonic structure in accordance with the second embodiment illustrated in Fig. 17 will now be explained. The following will explain excellent performances of the composite photonic structure in accordance with the second embodiment by setting forth results of comparing performances of the composite photonic structure explained in the foregoing (Fig. 18), a structure made of a ZnO monolayer film (performance comparison A, Fig. 19), a structure constituted by a photonic crystal of $ZnO/SiO_2$ layers alone without DBR resonators (performance comparison B, Fig. 20), a structure in which a ZnO monolayer film having the same total thickness as that of the photonic crystal is held between DBR resonators (performance comparison C, Fig. 21), and a quasi-phase matching ZnO bulk structure (performance comparison D, Fig. 22) with reference to Figs. 18 to 22.

<u>Performances of the composite photonic structure in accordance with the Second embodiment</u>

Fig. 18 is a chart illustrating performances of the composite photonic structure in accordance with the second embodiment. In Fig. 18, the abscissa and ordinate indicate the conversion efficiency and the fundamental-wave power (FW Power ($kW/cm^2$)), respectively. For more clearly representing performances of the composite photonic structure in the second embodiment, Fig. 18 separately shows the cases (a) where neither fluctuation nor absorption exists, (b) where a 5% fluctuation is added, (c) where an absorption of Im[n] = 0.001 (i.e., absorption in blue) is added, and (d) where an absorption of Im[n] = 0.001 is further added to the 5% fluctuation. That is, the case (a) is an ideal case where no decay occurs, whereas the cases (b), (c), and (d) purposely assume states with inferior performances. The fluctuation in a typical manufacturing process is about 1 to 2% with an absorption factor of 0.001. That is, the fluctuation is assumed to have a ratio much greater than that in the typical manufacturing process.

Curve G5 represents a performance in the case (a) where neither fluctuation nor absorption exists, in which the conversion efficiency reaches as high as 0.65% when the fundamental-wave power is 9 $kW/cm^2$. Curve G6 represents a performance in the case (b) where the 5% fluctuation is added, in which the conversion efficiency reaches as high as 0.6% when the fundamental-wave power is 9 $kW/cm^2$. Curve G7 represents a performance in the case (c) where the absorption of Im[n] = 0.001 is added, in which the conversion efficiency reaches as high as 0.4% when the fundamental-wave power is 9 $kW/cm^2$. Curve G8 represents a performance in the case (d) where the absorption of Im[n] = 0.001 is further added to the 5% fluctuation, in which the conversion efficiency reaches as high as 0.3% when the fundamental-wave power is 9 $kW/cm^2$. Thus, the composite photonic structure in accordance with the second embodiment exhibits such an excellent performance that the conversion efficiency is at least 0.3% when the fundamental-wave power is 9 $kW/cm^2$ not only in the ideal case (a) with no decay but also in the cases (b), (c), and (d) purposely assuming states with inferior performances. Such excellent performances of the composite photonic structure of the second embodiment will become clearer with reference to the following performance comparisons A to D.

Performance comparison A: a structure made of a ZnO monolayer alone

Fig. 19 is a chart illustrating performances of a structure made of a ZnO monolayer alone without DBR resonators. As a reference for comparison, the performance comparison A employs a performance in a case where the ZnO monolayer has a thickness of 3 μm, which is the same as the coherence length, and exhibits the highest efficiency as a unitary structure. For more clearly comparing performances, Fig. 19 separately shows the cases (a) where neither fluctuation nor absorption exists and (b) where an absorption of Im[n] = 0.001 is added. That is, the case (a) is an ideal case where no decay occurs, whereas the case (b) assumes an absorption factor in a typical manufacturing process.

Curve G9 represents a performance in the case (a) where neither fluctuation nor absorption exists, in which the conversion efficiency reaches only $1.4 \times 10^{-8}$ % when the fundamental-wave power is 9 $kW/cm^2$. Curve G10 represents a performance in the case (b) where the absorption of Im[n] = 0.001 is added, in which the conversion efficiency is further worsened, so as to become only $1.3 \times 10^{-8}$ % when the fundamental-wave power is 9 $kW/cm^2$. These performances are much worse than those of the composite photonic structure illustrated in Fig. 18 to such an extent as not to be compared therewith.

Performance comparison B: a structure made of a photonic crystal of $ZnO/SiO_2$ layers alone without DBR resonators

Fig. 20 is a chart illustrating performances of a structure made of a photonic crystal of $ZnO/SiO_2$ layers alone without DBR resonators. As a reference for comparison, the performance comparison B employs a performance in a case where the photonic crystal structure of $ZnO/SiO_2$ layers is provided by the number of cycles equivalent to that in the case of the composite photonic structure. That is, since the composite photonic structure uses 20 cycles of a reflector + 30 cycles of a photonic crystal + 20 cycles of a reflector (see Fig. 17), the performance comparison B employs a performance in the case where 70 cycles of the photonic crystal of $ZnO/SiO_2$ layers are provided as a reference for comparison. For more clearly comparing performances, Fig. 20 separately shows the cases (a) where neither fluctuation nor absorption exists and (b) where an absorption of Im[n] = 0.001 is added. That is, the case (a) is an ideal case where no decay occurs, whereas the case (b) assumes the absorption factor in a typical manufacturing process.

Curve G11 represents a performance in the case (a) where neither fluctuation nor absorption exists, in which the conversion efficiency reaches only $1.6 \times 10^{-5}$ % when the fundamental-wave power is 9 $kW/cm^2$. Curve G12 represents a performance in the case (b) where the absorption of Im[n] = 0.001 is added, in which the conversion efficiency is further worsened, so as to become only $6 \times 10^{-6}$ % when the fundamental-wave power is 9 $kW/cm^2$. These exhibit performances better than those of the performance comparison A illustrated in Fig. 19. However, they are still much worse than those of the composite photonic structure illustrated in Fig. 18 to such an extent as not to be compared therewith.

Performance comparison C: a structure in which a ZnO monolayer film having a total film thickness equivalent to that of the photonic crystal is held between DBR resonators

Fig. 21 is a chart illustrating performances of a structure in which a ZnO monolayer film having a total film thickness equivalent to that of the photonic crystal is held between DBR resonators. As a reference for comparison, this performance comparison C employs a performance in a case where a ZnO monolayer film having a total film thickness equivalent to that of the ZnO layers acting as the active layers in the above-mentioned composite photonic structure, i.e., 5301.0 nm, is held between DBR resonators each made of 20 cycles of a reflector in the front and rear thereof as in the above-mentioned composite photonic structure. For more clearly comparing performances, Fig. 21 separately shows the cases (a) where neither fluctuation nor absorption exists and (b) where an absorption of Im[n] = 0.001 is added. That is, the case (a) is an ideal case where no decay occurs, whereas the case (b) assumes the absorption factor in a typical manufacturing process.

Curve G13 represents a performance in the case (a) where neither fluctuation nor absorption exists, in which the conversion efficiency is 0.00035% when the fundamental-wave power is 9 $kW/cm^2$. Curve G14 represents a performance in the case (b) where the absorption of Im[n]=0.001 is added, in which the conversion efficiency is further worsened, so as to become 0.00032% when the fundamental-wave power is 9 $kW/cm^2$. These exhibit performances better than those of the performance comparison A illustrated in Fig. 19 or the performance comparison B illustrated in Fig. 20. However, they are still much worse than those of the composite photonic structure illustrated in Fig. 18 to such an extent as not to be compared therewith.

Performance comparison D: a quasi-phase matching ZnO bulk structure

Fig. 22 is a chart illustrating performances of a quasi-phase matching ZnO bulk structure. As a reference for comparison, the performance comparison D employs a performance in the case where the crystal length is 30 mm as a condition under which a quasi-phase matching ZnO bulk structure exhibits the best performances. For more clearly comparing performances, Fig. 22 separately shows the cases (a) where neither fluctuation nor absorption exists, (b) where an fluctuation of 0.1% (i.e., 3 nm) is added, and (c) an absorption of Im[n] = 0.00001 is added. That is, a fluctuation with a ratio much lower than about 1 to 2% which is a fluctuation in a typical manufacturing process and an absorption with a ratio much lower than 0.001 which is an absorption factor in a typical manufacturing process are assumed. In this regard, it should be noted that the above-mentioned performances of the composite photonic structure in accordance with the second embodiment assume a fluctuation with a ratio much greater than that of the fluctuation in a typical manufacturing process and an absorption factor in a typical manufacturing process.

Curve G15 represents a performance in the case (a) where neither fluctuation nor absorption exists, in which the conversion efficiency is nearly 1% when the fundamental-wave power is 9 $kW/cm^2$. At first glance, this result appears equivalent or superior to that of the composite photonic structure in accordance with the second embodiment of the present invention. However, it should be noted that a long crystal length of 30 mm in total must be provided in order for a quasi-phase matching ZnO bulk structure to exhibit such a performance. In the composite photonic structure in accordance with the second embodiment of the present invention, by contrast, the total crystal length is 21.9 $\mu$m, which is much shorter than 30 mm mentioned above. Therefore, the composite photonic structure in accordance with the second embodiment of the present invention can be considered overwhelmingly advantageous in terms of element size while exhibiting substantially the same performance.

The case (a) supposing that neither fluctuation nor absorption exists at all assumes only an ideal condition, whereas fluctuation or absorption inevitably occurs to a certain extent in actual manufacturing processes. Curve G16 exhibits a performance in the case (b) where the 0.1% fluctuation is added, in which the conversion efficiency is drastically worsened, so as to fail to reach 0.1 % when the fundamental-wave power is 9 $kW/cm^2$. When this result is compared with curve G6 of the composite photonic structure illustrated in Fig. 18, the composite photonic structure in accordance with the second embodiment of the present invention is seen to exhibit a much better performance than that of the quasi-phase matching ZnO bulk structure, notwithstanding the fact that a fluctuation with a ratio much greater than that in a typical manufacturing process is assumed.

Curve G17 exhibits a performance in the case (c) where the absorption of Im[n] = 0.00001 is added, in which the conversion efficiency is drastically worsened, so as to fail to reach 0.01% when the fundamental-wave power is 9 $kW/cm^2$. When this result is compared with curve G7 of the composite photonic structure illustrated in Fig. 18, the composite photonic structure in accordance with the second embodiment of the present invention is seen to exhibit a much better performance than that of the quasi-phase matching ZnO bulk structure, which is supposed to incur an absorption with a ratio much lower than that in a typical manufacturing process, notwithstanding the fact that the absorption in the typical manufacturing process is assumed.

In view of the foregoing results, the quasi-phase matching ZnO bulk structure exhibits favorable performances only when provided with a crystal length of more than 1000 times that of the composite photonic structure in accordance with the second embodiment of the present invention under an ideal condition that neither fluctuation nor absorption exists at all. This is only an ideal condition, whereas the reduction in conversion efficiency becomes a serious problem in the quasi-phase matching ZnO bulk structure in an actual state where the fluctuation or absorption occurs in practice. By contrast, the composite photonic structure in accordance with the second embodiment of the present invention is seen to exhibit an excellent performance even when a fluctuation with a ratio much greater than that in reality or a practical absorption is assumed.

Third Embodiment

The third embodiment of the present invention will now be explained. Fig. 23 illustrates the composite photonic structure in the third embodiment of the present invention.

The composite photonic structure in the third embodiment illustrated in Fig. 23 comprises a photonic crystal and reflectors (multilayer films or DBR resonators). The photonic crystal is formed by alternately laminating a plurality of sets of an active layer with a fixed thickness having a nonlinear effect for converting a fundamental wave into a second harmonic and an inactive layer with another fixed thickness free of the nonlinear effect, while being constructed such that the energy of the fundamental wave coincides with a photonic bandgap end. In this embodiment, the active and inactive layers are constructed by ZnO and $SiO_2$ layers, respectively. The photonic crystal may be constructed such that the second-harmonic energy coincides with a photonic bandgap end in addition to the fundamental-wave energy. The reflectors, each of which is made of a multilayer formed by laminating a plurality of sets of two kinds of thin films having different refractive indexes and is adapted to reflect the fundamental wave, constitute the resonators. In the second embodiment, the multilayer film is constructed as a laminate of MgO and $SiO_2$ layers.

The film thicknesses, numbers of layers, total film thicknesses, refractive indexes, and numbers of cycles of the photonic crystal and reflectors and the total crystal length in the third embodiment are as follows:

1. In the active layers (ZnO layers) in the photonic crystal:

   Film thickness: 176.7 nm
   Number of layers: 30
   Total film thickness: 5301.0 nm (176.7 nm $\times$ 30 layers = 5301.0 nm)
   Refractive index for fundamental wave: 1.93
   Refractive index for second harmonic: 2.02

2. In the inactive layers ($SiO_2$ layers) in the photonic crystal:

   Film thickness: 101.4 nm
   Number of layers: 29
   Total film thickness: 2940.6 nm (101.4 nm $\times$ 29 layers = 2940.6 nm)
   Refractive index for fundamental wave: 1.45
   Refractive index for second harmonic: 1.46

3. Number of cycles in the photonic crystal: 30
4. In the MgO layers in the reflector:

   Film thickness: 154.8 nm
   Number of layers: 20
   Total film thickness: 3096.0 nm (154.8 nm $\times$ 20 layers = 3096.0 nm)
   Refractive index for fundamental wave: 1.72
   Refractive index for second harmonic: 1.74

4. In the $SiO_2$ layers in the reflector:

   Film thickness: 186.9 nm
   Number of layers: 20
   Total film thickness: 3738.0 nm (186.9 nm $\times$ 20 layers = 3738.0 nm)
   Refractive index for fundamental wave: 1.45
   Refractive index for second harmonic: 1.46

5. The number of cycles in the reflectors: 20 cycles each in the front and rear, 40 cycles in total

6. Total crystal length: 21.904 μm

As illustrated in Fig. 23, the DBR resonators are connected to both sides of the photonic crystal. A fundamental wave near a wavelength of 1064 nm enters the photonic crystal with resonators from one end face such that its s-polarized light is incident on the crystal plane at right angles, and is reciprocally reflected between resonators each having a multilayer film, whereby the intensity of the fundamental wave is enhanced within the photonic crystal. The fundamental wave is converted into a second harmonic near a wavelength of 532 nm in an active layer which is a ZnO layer, and the resulting second harmonic is taken out from the other end face of the photonic crystal.

Performances of the composite photonic structure in accordance with the third embodiment

Fig. 24 is a chart illustrating performances of the composite photonic structure in accordance with the third embodiment. In Fig. 24, the abscissa and ordinate indicate the conversion efficiency and the fundamental-wave power (FW Power ($kW/cm^2$)), respectively. For more clearly representing performances of the composite photonic structure in the third embodiment, Fig. 24 separately shows the cases (a) where neither fluctuation nor absorption exists, (b) where a 5% fluctuation is added, (c) where an absorption of Im[n] = 0.001 (i.e., absorption in blue) is added, and (d) where an absorption of Im[n] = 0.001 is further added to the 5% fluctuation. That is, the case (a) is an ideal case where no decay occurs, whereas the cases (b), (c), and (d) purposely assume states with inferior performances. The fluctuation in a typical manufacturing process is about 1 to 2% with an absorption factor of 0.001. That is, the fluctuation is assumed to have a ratio much greater than that in the typical manufacturing process.

Curve G18 represents a performance in the case (a) where neither fluctuation nor absorption exists, in which the conversion efficiency reaches as high as 0.2% when the fundamental-wave power is 9 $kW/cm^2$. Curve G19 represents a performance in the case (b) where the 5% fluctuation is added, in which the conversion efficiency reaches as high as 0.19% when the fundamental-wave power is 9 $kW/cm^2$. Curve G20 represents a performance in the case (c) where the absorption of Im[n] = 0.001 is added, in which the conversion efficiency reaches as high as 0.1 % when the fundamental-wave power is 9 $kW/cm^2$. Curve G21 represents a performance in the case (d) where the absorption of Im[n] = 0.001 is further added to the 5% fluctuation, in which the conversion efficiency reaches as high as 0.08% when the fundamental-wave power is 9 $kW/cm^2$. Thus, the composite photonic structure in accordance with the third embodiment exhibits such an excellent performance that the conversion efficiency is at least 0.08% when the fundamental-wave power is 9 $kW/cm^2$ not only in the ideal case (a) with no decay but also in the cases (b), (c), and (d) purposely assuming states with inferior performances.

Excellent performances of the composite photonic structure of the third embodiment in which the DBR resonator is constructed as a laminate of MgO and $SiO_2$ layers are slightly inferior to those of the composite photonic structure illustrated in Fig. 18 of the second embodiment. However, they are seen to be much better than the comparison subjects A, B, C, and D illustrated in Figs. 19 to 22 of the second embodiment.

Fourth Embodiment

The fourth embodiment of the present invention will now be explained. Fig. 25 illustrates the composite photonic structure in the fourth embodiment of the present invention.

The composite photonic structure in the fourth embodiment illustrated in Fig. 25 comprises a photonic crystal and reflectors (multilayer films or DBR resonators). The photonic crystal is formed by alternately laminating a plurality of sets of an active layer with a fixed thickness having a nonlinear effect for converting a fundamental wave into a second harmonic and an inactive layer with another fixed thickness free of the nonlinear effect, while being constructed such that the energy of the fundamental wave coincides with a photonic bandgap end. In this embodiment, the active and inactive layers are constructed by ZnO and $SiO_2$ layers, respectively. The photonic crystal may be constructed such that the second-harmonic energy coincides with a photonic bandgap end in addition to the fundamental-wave energy. The reflectors, each of which is made of a multilayer formed by laminating a plurality of sets of two kinds of thin films having different refractive indexes and is adapted to reflect the fundamental wave, constitute the resonators. In the second embodiment, the multilayer film is constructed as a laminate of $Ta_2O_5$ and $SiO_2$ layers.

The film thicknesses, numbers of layers, total film thicknesses, refractive indexes, and numbers of cycles of the photonic crystal and reflectors and the total crystal length in the fourth embodiment are as follows:

1. In the active layers (ZnO layers) in the photonic crystal:

Film thickness: 176.7 nm
Number of layers: 30
Total film thickness: 5301.0 nm (176.7 nm × 30 layers = 5301.0 nm)

Refractive index for fundamental wave: 1.93
Refractive index for second harmonic: 2.02

2. In the inactive layers ($SiO_2$ layers) in the photonic crystal:

Film thickness: 101.4 nm
Number of layers: 29
Total film thickness: 2940.6 nm (101.4 nm $\times$ 29 layers = 2940.6 nm)
Refractive index for fundamental wave: 1.45
Refractive index for second harmonic: 1.46

3. Number of cycles in the photonic crystal: 30
4. In the $Ta_2O_5$ layers in the reflector:

Film thickness: 130.2 nm,
Number of layers: 10
Total film thickness: 1302.0 nm (130.2 nm $\times$ 10 layers = 1302.0 nm)
Refractive index for fundamental wave: 2.09
Refractive index for second harmonic: 2.21

4. In the $SiO_2$ layers in the reflector:

Film thickness: 186.9 nm
Number of layers: 10
Total film thickness: 1869.0 nm (186.9 nm $\times$ 10 layers = 1869.0 nm)
Refractive index for fundamental wave: 1.45
Refractive index for second harmonic: 1.46

5. The number of cycles in the reflectors: 10 cycles each in the front and rear, 20 cycles in total
6. Total crystal length: 14.584 $\mu$m

As illustrated in Fig. 25, the DBR resonators are connected to both sides of the photonic crystal. A fundamental wave near a wavelength of 1064 nm enters the photonic crystal with resonators from one end face such that its s-polarized light is incident on the crystal plane at right angles, and is reciprocally reflected between resonators each having a multilayer film, whereby the intensity of the fundamental wave is enhanced within the photonic crystal. The fundamental wave is converted into a second harmonic near a wavelength of 532 nm in an active layer which is a ZnO layer, and the resulting second harmonic is taken out from the other end face of the photonic crystal.

Performances of the composite photonic structure in accordance with the fourth embodiment

Fig. 26 is a chart illustrating performances of the composite photonic structure in accordance with the fourth embodiment. In Fig. 26, the abscissa and ordinate indicate the conversion efficiency and the fundamental-wave power (FW Power ($kW/cm^2$)), respectively. For more clearly representing performances of the composite photonic structure in the fourth embodiment, Fig. 26 separately shows the cases (a) where neither fluctuation nor absorption exists, (b) where a 5% fluctuation is added, (c) where an absorption of Im[n] = 0.001 (i.e., absorption in blue) is added, and (d) where an absorption of Im[n] = 0.001 is further added to the 5% fluctuation. That is, the case (a) is an ideal case where no decay occurs, whereas the cases (b), (c), and (d) purposely assume states with inferior performances. The fluctuation in a typical manufacturing process is about 1 to 2% with an absorption factor of 0.001. That is, the fluctuation is assumed to have a ratio much greater than that in the typical manufacturing process.

Curve G22 represents a performance in the case (a) where neither fluctuation nor absorption exists, in which the conversion efficiency reaches as high as 0.22% when the fundamental-wave power is 9 $kW/cm^2$. Curve G23 represents a performance in the case (b) where the 5% fluctuation is added, in which the conversion efficiency reaches as high as 0.21% when the fundamental-wave power is 9 $kW/cm^2$. Curve G24 represents a performance in the case (c) where the absorption of Im[n] = 0.001 is added, in which the conversion efficiency reaches as high as 0.2% when the fundamental-wave power is 9 $kW/cm^2$, Curve G25 represents a performance in the case (d) where the absorption of Im [n] = 0.001 is further added to the 5% fluctuation, in which the conversion efficiency reaches as high as 0.17% when the fundamental-wave power is 9 $kW/cm^2$. Thus, the composite photonic structure in accordance with the fourth embodiment exhibits such an excellent performance that the conversion efficiency is at least 0.17% when the fundamental-wave power is 9 $kW/cm^2$ not only in the ideal case (a) with no decay but also in the cases (b), (c), and (d) purposely assuming states with inferior performances.

Excellent performances of the composite photonic structure of the third embodiment in which the DBR resonator is constructed as a laminate of $Ta_2O_5$ and $SiO_2$ layers while the number of cycles in the DBR resonators is only half that in each of the second and third embodiments are slightly inferior to those of the composite photonic structure illustrated in Fig. 18 of the second embodiment. However, they are seen to be much better than the comparison subjects A, B, C, and D illustrated in Figs. 19 to 22 of the second embodiment.

Additional Matters to First to Fourth Embodiments

The foregoing explanations concerning the first to fourth embodiments represent a case using GaAs/AlGaAs ($Al_{0.82}Ga_{0.18}As$ in particular) or $ZnO/SiO_2$ as a material for constructing a photonic crystal by way of example. However, the present invention is not limited to the above-mentioned materials. That is, the composite photonic structure element of the present invention can be constructed by using any of ZnSe/ZnMgS, $Al_{0.3}Ga_{0.7}As/Al_2O_3$, $SiO_2$/AlN, GaAs/AlAs, GaN/AlN, $ZnS/SiO_2$, $ZnS/YF_3$, and GaP/AlP as a material for constructing the photonic crystal. Though detailed explanations concerning performances are omitted, performances similar to those of the composite photonic structure elements of the present invention explained in the first to fourth embodiments are exhibited when the composite photonic structure element of the present invention is constructed by using the materials mentioned above.

Using the composite photonic structure elements explained in the first to fourth embodiments, surface emitting lasers, light-emitting diodes, laser diodes, and the like can be made. As an example of them, Fig. 34 illustrates a surface emitting laser 1 using a composite photonic structure element (13, 14, 15) explained in the first to fourth embodiments. In this surface emitting laser 1, making light incident at right angles on the composite photonic structure element (13, 14, 15) formed on a substrate 12 can yield an exit beam 17 perpendicular to the substrate 12. In Fig. 34, numbers 11 and 16 indicate electrodes, 13 and 15 DBR resonators, 14 a photonic crystal.

Fifth Embodiment

In the following, the fifth embodiment of the present invention will be explained in order of its dielectric multilayer film, bipolar multilayer crystal, and resonators (reflectors).

1. Dielectric multilayer film

Suppose that N layers having different refractive indexes n and thicknesses d exist between vacuums on both sides. The layers are sequentially numbered 1, 2, ..., j, ..., N. The j in the jth and that of the imaginary unit must not be mixed up with each other. The direction in which the layers align is assumed to be the light propagating direction and referred to as the z direction. The electric field of light is supposed to be a plane wave and have only an x component. A tangential component of the electric field and a tangential component of the magnetic field are continuous to each other at a boundary. The tangential component of the magnetic field is the derivative of the electric field x component with respect to z. Therefore, the boundary condition is that the electric field and its derivative are continuous to each other at the boundary. Let $n_j$, $d_j$, $z_{j-1}$, $z_j$, $k_j$, $F_j$, and $B_j$ be the refractive index, thickness, front boundary, rear boundary, wave number of light, forward-wave electric field amplitude, and backward-wave electric field amplitude in the jth layer, respectively. Assuming that the wave number in vacuum is k, the wave number in the jth layer is $k_j = n_jk$. Arrows indicate directions of propagation of the forward and backward waves. The electric fields do not orient in these directions. The electric fields $E_j$, $E_{j+i}$ in the jth and (j + 1)th layers are:

$$E_j = F_j\exp(jk_j(z - z_{j-1})) + B_j\exp(-jk_j(z - z_j)) \qquad (1\text{–}5)$$

$$E_{j+1} = F_{j+1}\exp(jk_{j+1}(z - z_j)) + B_{j+1}\exp(-jk_{j+1}(z - z_{j+1})) \qquad (2\text{–}5)$$

Since the left boundary (start point) and right boundary (end point) of the jth layer are $z_{j-1}$ and $z_j$, respectively, the forward and backward waves employ their shifts $(z - z_{j-1})$, $(z - z_j)$ from the start and end points, respectively, as variables, thereby expressing wave functions.

It may be a little hard to understand because of different starting points of wave functions but can intuitively be said that, when the backward wave B and the forward wave F are the same (B = F), the square (power) of the electric field is a cos function whose center coordinate is the midpoint $(z_{j-1} + z_j)/2$ of the jth layer. The square power is large in this case. When the backward wave B and the forward wave F have opposite polarities (B = -F), the power is a sin function whose center coordinate is the midpoint. The square power is near 0. When the backward wave B is faster than the forward wave by 90° (B = -jF), their electric fields enhance each other. When the backward wave B is later than the forward wave by 90° (B = +jF), their electric fields suppress each other.

In view of reservations of electric field values and differentials, the boundary condition at the boundary $z_j$ between the jth and (j + 1)th layers is:

$$F_j g_j + B_j = F_{j+1} + g_{j+1} B_{j+1} \quad (3\text{–}5)$$

$$n_j g_j F_j - n_j B_j = n_{j+1} F_{j+1} - n_{j+1} g_{j+1} B_{j+1} \quad (4\text{–}5)$$

$$g_j = \exp(jk_j d_j) \quad (5\text{–}5)$$

There are (2N + 1) boundaries, so that the number of boundary conditions is 2N + 1. Only the incident wave G is known, while 2N of $F_j$ and $B_j$ and the transmitted wave T are unknowns. Since the number of unknowns is 2N + 1, all the unknowns can be determined by solving them. Letting $s_j = n_j/n_{j+1}$, the following recurrence formulas are obtained:

$$F_{j+1} = [g_j(1 + s_j)/2]F_j + [(1 - s_j)/2]B_j \quad (6\text{–}5)$$

$$B_{j+1} = [g_j(1 - s_j)/2g_{j+1}]F_j + [(1 + s_j)/2g_{j+1}]B_j \quad (7\text{–}5)$$

These hold true from j = 0, assuming that the amplitudes at j = 0 are $F_0$ = G and $B_0$ = R.

$$F_1 = [g_0(1 + s_0)/2]G + [(1 - s_0)/2]R. \quad (8\text{–}5)$$

$$B_1 = [g_0(1 - s_0)/2g_1]G + [(1 + s_0)/2g_1]R. \quad (9\text{–}5)$$

Since there is only the transmitted wave T after the Nth layer, $F_{N+1}$, = T and $B_{N+1}$ = 0 when j = N + 1.

$$T = [g_N(1 + s_N)/2]F_N + [(1 - s_N)/2]B_N. \quad (10\text{–}5)$$

$$0 = [g_N(1 - s_N)/2]F_N + [(1 + s_N)/2]B_N. \quad (11\text{–}5)$$

In this way, expressions (6-5) and (7-5) are recurrence formulas holding true when j = 0 to N + 1. Since R has not been known in practice, the condition that, = N + 1 (11) retroacts, so as to determine R.

Such accurate recurrence formulas are obtained. Since $\{n_j\}$, $\{d_j\}$, and G have been known, (2N + 1) amplitudes should be calculable.

Though $\{n_j\}$ and $\{d_j\}$ can be given arbitrarily, this will complicate calculations and yield only numerical solutions. The numerical solutions cannot easily change the condition. They do not clarify principles. Analytical solutions are demanded.

The present invention becomes KHK combining a bipolar multilayer crystal H with reflective layers K, K. Each of K and H is formed by alternately laminating two kinds of thin films having different refractive indexes and thicknesses. The layer structures of both of them will be explained.

A case where two kinds of thin films U, W having different thicknesses are alternately laminated by the respective same thicknesses will now be considered. When the two kinds of thin films are alternately laminated, accurate calculations can be performed analytically. Assume that the ith set of thin films is constituted by $U_i$ and $W_i$, while there are M such sets. Since each set is constituted by two layers, the number of layers is 2M. The set number i ranges from 1 to M.

The first kind thin film U has a refractive index n and a thickness d, while $F_{ui}$ and $B_{ui}$ denote its forward- and backward-wave amplitudes in the ith set, respectively. The second kind thin film W has a refractive index m and a thickness e, while $F_{wi}$ and $B_{wi}$ denote its forward- and backward-wave amplitudes in the ith set, respectively.

Fig. 28 illustrates this case. U and W are odd-numbered (n, d) and even-numbered (m, e) layers, respectively.

$$s = n/m. \qquad (12\text{–}5)$$

$$r = m/n. \qquad (13\text{–}5)$$

$$g = \exp(j\omega nd/c) = \exp(2\pi jnd/\lambda). \qquad (14\text{–}5)$$

$$h = \exp(j\omega me/c) = \exp(2\pi jme/\lambda). \qquad (15\text{–}5)$$

Here, sr = 1; g denotes the wave change caused by the phase change of light $\omega nd/c = 2\pi nd/\lambda$ in the odd-numbered film (first kind); h denotes the wave change caused by the phase change of light $\omega me/c = 2\pi me/\lambda$ in the even-numbered film (second kind).

Let the respective phase changes in the first and second kind layers U, W be:

$$p = \omega nd/c = 2\pi nd/\lambda \qquad (16\text{–}5)$$

$$q = \omega me/c = 2\pi me/\lambda \qquad (17\text{–}5)$$

Hence, g and h can be written as:

$$g = \exp(jp) \qquad (18\text{–}5)$$

$$h = \exp(jq) \qquad (19\text{–}5)$$

Each of the absolute values of phase components g and h is 1.

By rewriting $s_j$, $g_j$, and $g_{j+1}$ in expressions (6) and (7) as s (= n/m), g, and h, respectively, the recurrence formulas determined from the boundary condition between the $U_i$ and $W_i$ layers are:

$$F_{wi} = [g(1 + s)/2]F_{ui} + [(1 - s)/2]B_{ui} \quad (20\text{–}5)$$

$$B_{wi} = [g(1 - s)/2h]F_{ui} + [(1 + s)/2h]B_{ui} \quad (21\text{–}5)$$

This means that the relationship of the two is determined by a matrix of 2 × 2. The value of the relational determinants is gs/h. By rewriting $S_{j+1}$, $g_{j+1}$, $g_j$, and $g_{j+z}$ in expressions (6-5) and (7-5) as r (= m/n), h, g, and g, respectively, the recurrence formulas determined from the boundary condition between the $W_i$ and $U_{i+1}$ layers are:
$$F_{ui+1} = [h(1 + r)/2]F_{wi} + [(1 - r)/2]B_{wi} \quad (22\text{–}5)$$

$$B_{ui+1} = [h(1 - r)/2g]F_{wi} + [(1 + r)/2g]B_{wi} \quad (23\text{–}5)$$

This also means that the relationship of the two is determined by a matrix of 2 × 2. The value of the relational determinants is hr/g. The recurrent formulas between the $U_i$ and $U_{j+1}$ layers are determined while skipping $W_i$ therebetween. This can be seen from the product of matrixes of expressions (20-5) to (23-5).
Thus:

$$F_{ui+1} = [(gh/4)(2 + r + s) + (g/4h)(2 - r - s)]F_{ui} + (1/4)(r - s)[h - (1/h)]B_{ui}$$
$$= [g\cos q + j(g/2)(r + s)\sin q]F_{ui} + (j/2)(r - s)\sin q B_{ui} \quad (24\text{–}5)$$
$$B_{ui+1} = -(1/4)[(h - (1/h)]F_{ui} + (1/4gh)(2 + r + s) + (h/4g)(2 - r - s)]B_{ui} =$$
$$-(j/2)(r - s)\sin q F_{ui} + [(1/g)\cos q - j(1/2g)(r + s)\sin q]B_{ui} \quad (25\text{–}5)$$

The recurrent formulas between the $U_i$ and $V_{i+1}$ layers can simply be expressed by a matrix of 2 × 2, too.
**[Math. 7]**

$$\begin{pmatrix} g\cos q + j(g/2)(r+s)\sin q & (j/2)(r-s)\sin q \\ -(j/2)(r-s)\sin q & g^*\cos q - j(g^*/2)(r+s)\sin q \end{pmatrix} \quad (26\text{-}5)$$

Those marked with * on their shoulders are complex conjugates. This is a unitary matrix, while the value of the determinant is 1. r + s = (m/n) + (n/m) > 2. Hence, the absolute value of diagonal terms is greater than 1. Therefore, it can be written by bipolar functions sinh and cosh as in the following. The bipolar functions are function systems such as sinhx = -jsin(jx) = (1/2)[exp(x)-exp(-x)] and coshx = cos(jx) _ (1/2)[exp(x)-exp(-x)]. $\cosh^2\Theta - \sinh^2\Theta = 1$ holds.
$$\sinh\Theta = (1/2)(r - s)\sin q. \quad (27\text{–}5)$$

$$\cosh\Theta = \{\cos^2 q + [(r+s)^2 \sin^2 q]/4\}^{1/2}.(28\text{–}5)$$

2. Bypolar multilayer crystal H; Fig. 29

The present invention enhances the fundamental-wave amplitude within a crystal by utilizing a bipolar functional increase in a dielectric multilayer film satisfying a specific condition. A crystal which enhances the electric field like a bipolar function will temporarily be referred to as bipolar multilayer crystal. There are M sets of U and W layers, thus yielding 2M layers. One of the U and W layers is a nonlinear crystal thin film, while the other is a thin film free of the nonlinear effect. While either of them may be so, the U layer (d, n) is supposed to be the nonlinear thin film and referred to as an active layer here. The W layer is assumed to be an inactive thin film (e, m). There are two cases depending on which layer has a higher refractive index.

A multilayer film UWUW... = $(UW)^M$ having M sets of U and W layers in this order is considered. By introducing an angle u and writing that cosu = cosqsechΘ and sinu = (1/2)(r-s)sinqsechΘ, it can be rewritten as:

**[Math. 8]**

$$\begin{pmatrix} \exp(j(q+u))\cosh\Theta & +j\sinh\Theta \\ -j\sinh\Theta & \exp(-j(q+u))\cosh\Theta \end{pmatrix} \quad (29\text{-}5)$$

This is also a unitary matrix, while the value of the determinant is 1. The characteristic equation of expression (29-5) is:

$$\Lambda^2 - [g\cos q + j(g/2)(r+s)\sin q + g^*\cos q - j(g^*/2)(r+s)\sin q]\Lambda + 1 = 0 \quad (30\text{–}5)$$

Here, g = exp(jp); r and s are ratios of refractive indexes, r = m/n, s = n/m, where r + s is a positive number greater than 2; let b be the difference between r + s and 2.

Let:

$$r + s = 2 + b \qquad (31\text{–}5)$$

$$b = (m-n)^2/mn \qquad (32\text{–}5)$$

Then, the first-order coefficient of Λ in the characteristic equation is:

$$g\cos q + j(g/2)(r+s)\sin q + g^*\cos q - j(g^*/2)(r+s)\sin q = 2\cos p\cos q - (r+s)\sin p\cos q = 2\cos p\cos q - 2\sin p\sin q - b\sin p\sin q = 2\cos(p+q) - b\sin p\sin q \qquad (33\text{–}5)$$

There are two cases depending on whether the absolute value |cos(p + q) - (b/2)sinpsinq| of cos(p + q) - (b/2)sinpsinq is greater or smaller than 1.

(a) Where |cos(p + q) (b/2)sinpsinq| < 1

The characteristic value Λ in this case is:

$$\Lambda = \cos(p + q) - (b/2)\sin p \sin q \pm j[\sin^2(p + q) + b\cos(p + q)\sin p \sin q - (b^2/4)\sin^2 p \sin^2 q]^{1/2} \qquad (34\text{–}5)$$

The two solutions each have an absolute value of 1 and are in a complex conjugate relationship, so that their M conversions are represented by $\Lambda^M$ and $\Lambda^{-M}$ by appropriate conversions, which simply indicate rotations because the absolute value is constant. This does not act to enhance the electric field. It fails to yield the bipolar multilayer crystal of the present invention.

(b) Where |cos(p + q) - (b/2)sinpsinq| > 1

The characteristic value A in this case is:

$$\Lambda = \cos(p + q) - (b/2)\sin p \sin q \pm [-\sin^2(p + q) - b\cos(p + q)\sin p \sin q + (b^2/4)\sin^2 p \sin^2 q]^{1/2} \qquad (35\text{–}5)$$

The greater characteristic value A is larger than 1, while the smaller characteristic value ($\Lambda^{-1}$) falls between 0 and 1. Therefore, their N conversions are represented by $\Lambda^N$ and $\Lambda^{-N}$ by appropriate conversions. However, A is a real number greater than 1, so that there is no rotation, whereby the amplitude value keeps increasing as N becomes greater. This may enhance the fundamental-wave amplitude on each stage. It can yield the bipolar multilayer crystal of the present invention.

The above-mentioned condition (b) is very hard. This is because the refractive index square fraction b reflecting the difference between refractive indexes is a small value. The refractive index difference square portion b does not become greater unless the refractive index difference between the U and W layers is very large.

By way of caution, the phase angle is represented by both circular measure (radian) and degree. Here, p is the phase angle (2πnd/λ rad or 360nd/λ°) of the U layer and positive. On the other hand, q is the phase angle (2πme/λ, rad or 360me/λ°) of the W layer and positive. 0 < p + q always holds. While there are various cases where the condition (b) holds, some of them will be listed.

Multilayer film condition A: p + q is near π (180°), while each of p and q is near π/2 (90°). This will be referred to as multilayer film condition A.

Multilayer film condition B: p + q is near 2π (360°), while one and the other of p and q are near 3π/2 (270°) and π/2 (90°), respectively. This will be referred to as multilayer film condition B.

Multilayer film condition C: p + q is near 3π (540°), while each of p and q is near 3π/2 (270°). This will be referred to as multilayer film condition C.

Multilayer film condition D: p + q is near 4π (720°), while one and the other of p and q are near 5π/2 and 3π/2, respectively, or near 7π/2 and π/2, respectively. This will be referred to as multilayer film condition D.

There are various other conditions. In general, a condition is such that p + q is near an integer multiple of π, while each of p and q is near a half-integer multiple of π. Those subsequent to the multilayer condition D will be omitted, since they are similar. "Near" will be expressed by sign "~".

Ideally, in each case, the condition (b) is satisfied as -1 - (b/2) < -1 or 1 + (b/2) > 1. This is achieved when p + q is an integer multiple of π, while each of p and q is an integer multiple of π/2.

Depending on the value of b, however, p and q are provided with finite widths. Since cos(p + q) < -1 + (b/2) sinpsinq in the multilayer condition A, the shift Δp of p from π/2 and the shift Δq of q from π/2 are expressed by

$$(\Delta p + \Delta q)^2 < b \qquad (36\text{–}5)$$

in the first approximation.

That is,

$$|\Delta p + \Delta q| < b^{1/2}. \qquad (37\text{–}5)$$

This holds under any condition. As the refractive index square fraction b increases, $\Delta p$ and $\Delta q$ can be made greater, thus yielding a larger margin in designing. When b = 0.02, for example, $b^{1/2}$ = about 0.14.

For simplification, "near" will be expressed by "~". The shifts of p and q from their "near" target values will be represented by $\Delta p$ and $\Delta q$, respectively.

Multilayer condition A: $p + q \sim \pi$ (180°), $p \sim \pi/2$ (90°), $q \sim \pi/2$ (90°), $|\Delta p + \Delta q| < b^{1/2}$ (38–5)

Multilayer condition B: $p + q \sim 2\pi$ (360°), $p \sim 3\pi/2$ (270°) and $q \sim \pi/2$, or $p \sim \pi/2$ (90°) and $q \sim 3\pi/2$ (270°), $|\Delta p + \Delta q| < b^{1/2}$ (39–5)

Multilayer condition C: $p + q \sim 3\pi$ (540°), $p \sim 3\pi/2$ (270°), $q \sim 3\pi/2$ (270°), $|\Delta p + \Delta q| < b^{1/2}$ (40–5)

Multilayer condition D: $p + q \sim 4\pi$ (720°), $p \sim 5\pi/2$ and $q \sim 3\pi/2$, or $p \sim 7\pi/2$ and $q \sim \pi/2$, $|\Delta p + \Delta q| < b^{1/2}$ (41–5)

In each case, it will be preferred if each of absolute values of differences $\Delta p$ and $\Delta q$ of p and q from their target values ($\pi/2$, $3\pi/2$, $5\pi/2$, ...) is smaller than $b^{1/2}$. $|\Delta p| < b^{1/2}$. $|\Delta q| < b^{1/2}$. However, this is not an absolute requirement. The condition (a) may be satisfied without it.

While the U and W layers are active and inactive layers, respectively, the electric field enhancement is the same whether any of the U and W layers is made thicker. From the viewpoint of nonlinearity, there occurs a difference in terms of excellence. Since the fundamental wave is converted into the second harmonic by the active layer, it will be more advantageous for the nonlinear element if the active layer (with the thickness d) and inactive layer (with the thickness e) are thicker and thinner, respectively. Therefore, when the phase changes per layer $p = 2\pi nd/\lambda$, and $q = 2\pi me/\lambda$ can take different values, it will be preferred if the phase change p of the active layer U is made greater.

$$p \geq q \qquad (42\text{–}5)$$

conforms to the purpose of enhancing the nonlinear effect. When they are identical to each other, e.g., $\pi/2$, $p = q = \pi/2$

with no choice. When preferred values differ from each other, e.g., $5\pi/2$ and $\pi/2$, it will be preferred if the phase change p of the active layer is made greater than the phase change q of the inactive layer in order to enhance the nonlinearity. They can be reversed, however.

For example, an ideal state in the multilayer film condition B is considered. When $p = 3\pi/2$ and $q = \pi/2$, $g = -j$, $\cos q = 0$, and $\sin q = 1$. The characteristic values of expression (34-5) are

$$1 + (b/2) \pm (b + b^2/4)^{1/2}. \qquad (43\text{–}5)$$

Both of them are positive, while one and the other of them are greater and smaller than 1, respectively. Of the two characteristic values, those greater and smaller than 1 are referred to as $\Gamma$ and $\Upsilon$, respectively.

$$\Gamma = 1 + (b/2) + (b + b^2/4)^{1/2}. \qquad (44\text{–}5)$$

$$\Upsilon = 1 + (b/2) - (b + b^2/4)^{1/2}. \qquad (45\text{–}5)$$

That the fundamental wave passes through the M sets of the multilayer film (UWUW... = $(UW)^M$) means that such conversion is carried out M times concerning the amplitude. Since the amplitude is a linear combination of $\Gamma^M$ and $\Upsilon^M$, while $\Gamma$ is greater than 1, the amplitude increases as M is greater. This will be set forth such as to be understood more easily. The transformation matrix of amplitude (26-5) becomes a simple form as follows:

**[Math. 9]**

$$\begin{pmatrix} (1/2)(r+s) & (j/2)(r-s) \\ -(j/2)(r-s) & (1/2)(r+s) \end{pmatrix} \qquad (46\text{-}5)$$

The square of the transformation matrix is:

**[Math. 10]**

$$\begin{pmatrix} (1/2)(r^2+s^2) & (j/2)(r^2-s^2) \\ -(j/2)(r^2-s^2) & (1/2)(r^2+s^2) \end{pmatrix} \qquad (47\text{-}5)$$

The cube of the transformation matrix is:

[Math. 11]

$$\begin{pmatrix} (1/2)(r^3+s^3) & (j/2)(r^3-s^3) \\ -(j/2)(r^3-s^3) & (1/2)(r^3+s^3) \end{pmatrix} \quad (48\text{-}5)$$

The transformation matrix in the case of passing through the M sets of UW layers is the Mth power of the transformation matrix of one (UV) set. $(UW)^M$ is:

[Math. 12]

$$\begin{pmatrix} (1/2)(r^M+s^M) & (j/2)(r^M-s^M) \\ -(j/2)(r^M-s^M) & (1/2)(r^M+s^M) \end{pmatrix} \quad (49\text{-}5)$$

The value of the determinant is still 1 here, whereby this is a unitary matrix. Since the amplitude transformation matrix is a power of a bipolar function, this crystal is temporarily named a bipolar multilayer crystal. The refractive indexes r and s satisfy rs = 1, whereby one and the other thereof are greater and smaller than 1, respectively.

Even when any of r and s is greater than 1 (s = n/m, r = m/n, and rs = 1), the electric-field amplitude is expected to increase as the value of M is greater. However, it is not so simple in practice. Letting $^t(G, B)$ be the input amplitude (where t is a transposed matrix), the amplitude $^t(T, 0)$ of transmitted light is:

$$T = (1/2)(r^M + s^M)G + (j/2)(r^M - s^M)B \quad (50\text{–}5)$$

$$0 = -(j/2)(r^M - s^M)G + (1/2)(r^M + s^M)B \quad (51\text{–}5)$$

Since no backward wave exists in the last stage (vacuum 2), expression (51-5) becomes 0. This is seen to be a strong restriction. For setting expression (51-5) to 0, the ratio of G and B is determined.

When

$$G = (1/2)(r^M + s^M) \text{ and} (52\text{–}5)$$

$$B = (j/2)(r^M + s^M), \quad (53\text{–}5)$$

the transmitted wave T = 1. Since r is greater than 1, G becomes a very large value when the number of sets M is large. It decreases to 1 at the last stage. This means that the incident wave hardly passes therethrough. The present invention uses a multilayer film exhibiting such a relationship with respect to the fundamental wave. However, it does not increase but decreases the electric field, thus failing to enhance the fundamental wave. This is unfavorable.

The light propagation has reciprocity. This is clearly reflected in the above-mentioned matrix (unitary property). Suppose that an inverse matrix of expression (49-5) is made. This can be obtained by simply changing j in nondiagonal terms to -j. The inverse matrix is a multilayer film (WUMU... = $(WU)^M$) whose unit is composed of W and U layers. The transformation matrix in the case of passing through one set is

[Math. 13]

$$\begin{pmatrix} (1/2)(r+s) & -(j/2)(r-s) \\ (j/2)(r-s) & (1/2)(r+s) \end{pmatrix} \quad (54\text{-}5)$$

by changing j to -j in expression (46-5). When having passed the M sets, it is

[Math. 14]

$$\begin{pmatrix} (1/2)(r^M+s^M) & -(j/2)(r^M-s^M) \\ (j/2)(r^M-s^M) & (1/2)(r^M+s^M) \end{pmatrix} \quad (55\text{-}5)$$

by changing j to -j in expression (49-5).

This is an electric field transformation matrix of the $(WU)^M$ multilayer film. The $(UW)^M$ multilayer film and the $(WU)^M$ multilayer film differ from each other only in that their orders of layers are opposite to each other. They are called conjugate multilayer films. The incident wave G can be defined, whereas the reflected wave R cannot be defined beforehand. This is because the latter is determined depending on the state of the end. However, the foregoing knowledge can determine that the incident wave G = 1 and the reflected wave R = 0.

Let the electric-field vector on the entrance side be

$$^t(G, R) = {}^t(1, 0) \qquad (56\text{–}5)$$

and put it into the $(WU)^M$ multilayer film. Since expression (55-5) is a transformation matrix, (55-5) × (56-5) is calculated. Its result is the electric field having passed through the $(WU)^M$ multilayer film:

$$^t[(1/2)(r^M + s^M), (j/2)(r^M - s^M)] \qquad (57\text{–}5)$$

It is put into the conjugate $(UW)^M$ multilayer film. Its transformation matrix is expression (49-5). The result of the calculation of (49-5) × (57-5) is the electric field after passing through the $(UW)^M$ multilayer film.

That is

$$^t(1, 0). \qquad (58\text{–}5)$$

This satisfies the condition that the backward wave is 0 in vacuum 2.

That is, if there are conjugate multilayer films of $(WU)^M(UW)^M$ from the left, when the incident wave G = 1 is fed therein from the left, the reflected wave R = 0 and increases like a bipolar function in the $(WU)^M$ multilayer film, whereby the vector of the forward and backward waves $^t(F_M, B_M)$ reach such a large electric field value of

$$ {}^{t}[(1/2)(r^{M} + s^{M}), (j/2)(r^{M} - s^{M})](59\text{–}5) $$

in the center portion. Thereafter, it decreases like a bipolar function in the conjugate $(UW)^M$ multilayer film, thereby making it possible to yield the state where the transmitted wave T = 1 with no backward wave at the right end.

That is, putting incident light of 1 into one end of the conjugate multilayer films of $(WU)^M(UW)^M$ can make the reflected wave 0 and yield a transmitted wave of 1. The condition that the initial incident wave is 1 with no backward wave on the exit side always holds. The reflected wave R and transmitted wave T are determined by multilayer films. The above-mentioned conjugate multilayer films can make the reflected wave R = 0. This makes the incident wave G and transmitted wave T become equally 1. While the other multilayer films make the transmitted wave T not greater than 1 since the reflected wave R is not 0, G = T = 1 and R = 0 in the conjugate multilayer films of the present invention.

Since the whole incident wave G with the electric field of 1 enters, the reflected wave R is 0, while the electric field is enhanced by 20 times or 8 times, for example, depending on the values of r and s and the number of sets M. After the midpoint, the electric field decreases like a bipolar function, so that the whole power passes, whereby the transmitted wave T = 1.

Thus connecting multilayer films conjugate to each other, each combining U and W layers one of which is an active layer, at the center forms the bipolar multilayer crystal H of the present invention.

$$ H = (WU)^{M}(UW)^{M}. \qquad (60\text{–}5) $$

Expression (60-5) means that the bipolar multilayer film crystal H is constructed by a multilayer film composed of M sets of repeated WU, WU, ...and a multilayer film composed of M sets of repeated UW, UW, ... from the left side. Though this may imply as if there is a limitation on the order of U and W layers, it is untrue. The fact is that any order can be employed as long as the left and right groups are conjugate to each other.

It may also be:

$$ H' = (UW)^{M}(WU)^{M} \qquad (61\text{–}5) $$

The incident wave G = 1, with the reflected wave R = 0, increases in the crystal, so as to be maximized at the center portion, and then decreases, whereby the transmitted wave T = 1 finally in this case, too. R = 0 corresponds to the condition that the backward wave is 0 in vacuum 2 on the exit side. This yields a symmetry between the front and rear (entrance and exit sides). It differs from expression (57-5) only in that the polarity of the backward wave in the center portion at the Mth set is reversed. In contrast to expression (59-5), the vector of the forward and backward waves ${}^{t}(F_M, B_M)$ in the center portion becomes

$$ {}^{t}[(1/2)(r^{M} + s^{M}), -(j/2)(r^{M} - s^{M})]. \qquad (62\text{–}5) $$

That is, the order of layers such as UW or WU, per se, does not act to determine whether to increase or decrease. The condition that the backward wave = 0 in vacuum 2 after the final set determines whether to increase or decrease. Combining the multilayer films conjugate to each other on the front and rear sides as in the present invention can make G = 1, R = 0, and T = 1, whereby the electric field in the middle part inevitably increases at first as a bipolar function, so as to reach a peak, and then decreases as a bipolar function.

When G = 1 with R =0, it will be kept from decreasing at first in the middle part so as to be minimized and then increasing so that T = 1, on the contrary to the above. This is because coshx is a function of 1 or greater. The change in electric field conforms to a bipolar function, so as to increase initially and then decrease, so as to return to the original value (T = G). Therefore, the conjugate multilayer films $(WU)^M(UW)^M$ of the present invention are named the bipolar multilayer crystal H. The complex conjugate of $H = (WU)^M(UW)^M$ is H itself. H* = H. That is, the bipolar multilayer crystal H is Hermitian.

Since r = m/n, s = n/m, and b = r + s - 2, the electric field similarly increases whether the refractive index n of the active layer is greater (s > 1 > r) or the refractive index m of the inactive layer W is greater (s < 1 < r). The electric field multiplication in the middle part can be made greater as the difference between refractive indexes is larger. In practice, a material set yielding so large refractive index ratio (s, r) is hard to find. The ratio will be about 1.3 at the largest.

If r = 1.3 (s = 0.7692, b = 0.0692), for example, the intermediate electric field $F_M$ can be raised by about 95 times that of the incident wave when M = 20 sets (80 layers in total).

If r = 1.25 (s = 0.8, b = 0.05), for example, the intermediate electric field $F_M$ can be raised by about 43 times that of the incident wave when M = 20 sets (80 layers in total).

If r = 1.2 (s = 0.8333, b = 0.0333), for example, the intermediate electric field $F_M$ can be raised by about 19 times that of the incident wave when M = 20 sets (80 layers in total).

If r = 1.18 (s = 0.8475, b = 0.0274), for example, the intermediate electric field $F_M$ can be raised by about 14 times that of the incident wave when M = 20 sets (80 layers in total).

If r = 1.15 (s = 0.8696, b = 0.0196), for example, the intermediate electric field $F_M$ can be raised by about 8 times that of the incident wave when M = 20 sets (80 layers in total).

If r = 1.12 (s = 0.8929, b = 0.0129), for example, the intermediate electric field $F_M$ can be raised by about 5 times that of the incident wave when M = 20 sets (80 layers in total).

Thus, the fundamental-wave electric field is enhanced by at least 5 up to about 100 times. Since the fundamental wave generates a second harmonic, the latter is also enhanced. Only the active layers generate the second harmonic. It increases with the active layer total thickness (Σd). Phase mismatching also occurs only by a length of the active layer total thickness (Σd). Even when the active layer total thickness (Σd) is small, the electric field is enhanced by 10 or 20 times, for example, so that the second harmonic is as large as 10 or 20 times. The total thickness of the bipolar multilayer crystal H is 2M(d + e), so that the total of d and e is limited, while leaving room for choosing the ratio between d and e. The conversion efficiency of the second harmonic is in proportion to 2Md but unrelated to 2Me. Therefore, it will be more preferred if the active layer thickness d is greater than the inactive layer thickness e. Hence, p > q is preferred from the viewpoint of conversion efficiency.

The foregoing explanation is concerned with the multilayer film condition B (p + q ~ 2π). This also holds in the multilayer film condition D (p + q ~ 4π). In general, it holds in all the cases where p + q is near 2π, 4π, 6π, .... The only difference is that a minus sign "-" is attached to all the elements of the transformation matrix (46-5) in the case of the multilayer film conditions A, C, ... concerning half-integer multiples of π. The electric-field enhancing expression (59-5) in the intermediate part yields the same absolute value with only $(-1)^M$ attached thereto, whereby its conclusion is substantially the same. This is also the same as the condition of reflectors which will be explained subsequently. Expressions for the reflectors will be explained in slightly different forms but are the same as above. Therefore, the multilayer film conditions A, C, ... are explained doubly in fact. There is no omission in the explanation. Fig. 29 is a graph illustrating the structure of the bipolar multilayer crystal H and the forward-wave electric field.

## 3. Explanation of reflectors K at both ends; Fig. 30

The present invention has attained an idea of maximizing the fundamental-wave electric field at the center by the conjugate bipolar multilayer crystal H alternately including active and inactive layers. Though dependent on the refractive index ratios r and s, the center electric field can be increased by 20 or 10 times the incident-wave electric field G. The second-harmonic electric field converted in proportion to the square can also be increased by 400 to 100 times. Increasing the electric field can leave room for reducing the active layer total thickness (Σd). The phase mismatching is determined by the product (ΔkΣd) of the active layer total thickness (Σd) and Δk. The active layer total thickness Σd can be reduced. ΔkΣd can be made much smaller than π. Therefore, the phase mismatching can be reduced.

However, increasing the fundamental-wave electric field by 10 to 20 times is still insufficient. Decreasing the active layer total thickness to 1/10 to 1/20, for example, reduces the second harmonic generation accordingly. The increase of the fundamental-wave electric field by 20 or 10 times means only the center maximum value but not the whole part. The second harmonic increases by only about 10 times.

The fundamental-wave intensity is desired to be enhanced further. It is wondered how such is achieved. The condition that no backward wave exists in vacuum 2 after the final stage restricts the magnitude of the electric field within the multilayer film. On the entrance side and within the multilayer film, forward and backward waves exist as a pair. By contrast, the transmitted wave T exists alone in vacuum 2 after the final stage. The condition that the backward wave is 0 in vacuum greatly diminishes the electric-field enhancing action of the multilayer film.

The foregoing knowledge clarifies points to improve. It will be sufficient if a backward wave exists after the final stage. This just yields an idea of solving the difficulty in enhancing the electric field in the bipolar multilayer crystal H. It is wondered how the backward wave is caused to exist after the final stage. It will be sufficient if another dielectric multilayer film K is provided after the final stage. This makes the final stage of the bipolar multilayer crystal H not final, thereby allowing the backward wave to exist. That is, the final stage is postponed.

However, this does not mean that any dielectric multilayer film will suffice. There is a condition that the backward wave is 0 in the vacuum after the additional dielectric multilayer film K. When the characteristic value Λ of a transformation matrix yields an absolute value of 1 as in condition (a), the sum of squares of amplitudes of forward and backward waves in the final stage becomes only 1. Such a dielectric multilayer film in which $|\Lambda| = 1$ is meaningless to add. The dielectric multilayer film to be added, per se, must be a bipolar multilayer crystal K having characteristic values having real numbers of 1 or greater and 1 or smaller. This will not produce second harmonics. Therefore, it includes no active layers. For making the additional dielectric multilayer film K, it is necessary to combine two kinds of transparent dielectric layers which are inactive layers and have a large refractive index difference therebetween.

The additional dielectric multilayer film K is also required to be a kind of bipolar multilayer crystals. It differs from the above-mentioned bipolar multilayer crystal H including active layers and producing the second harmonic. It is an additional multilayer crystal which is introduced in order to produce a backward wave. It reflects the fundamental wave, so as to produce the backward wave, and thus is referred to as reflector K. The reflector K is also one of bipolar multilayer crystals and thus is formed by alternately laminating two kinds of layers having different refractive indexes and thicknesses.

Two kinds of layers in the multilayer film of the reflector K are referred to as X and Z layers in order to be distinguished from the U and W layers of the above-mentioned bipolar multilayer crystal H. Each of them is an inactive layer having no nonlinear effect. Suppose there are N sets of X and Z. A general number of sets is represented by i. That is, the reflector K has a structure of $K = X_1Z_1X_2Z_2...X_iZ_j...X_NZ_N$. It is abridged as $K = (XZ)^N$.

Let $\delta$, $\upsilon$, $\alpha = 2\pi\delta\upsilon/\lambda$, and $\xi = \exp(ja) = \exp(j2\pi\delta\upsilon/\lambda)$ be the thickness, refractive index, phase change per layer, and change in the wave function of the X layer, respectively. The forward and backward waves in the X layer of the ith set are represented by $F_{xi}$ and $B_{xi}$, respectively.

Let $\varepsilon$, $\mu$, $\gamma = 2\pi\varepsilon\mu/\lambda$, and $\eta = \exp(j\gamma) = \exp(j2\pi\varepsilon\mu/\lambda)$ be the thickness, refractive index, phase change per layer, and change in the wave function of the Z layer, respectively. The forward and backward waves in the Z layer of the ith set are represented by $F_{zi}$ and $B_{zi}$, respectively.

Let the refractive index ratios be $\sigma = \upsilon/\mu$ and $\rho = \mu/\upsilon$ ($\sigma\rho = 1$). Let the refractive index difference square fraction be $\beta = \sigma + \rho - 2 = (\mu - \upsilon)^2/\mu\upsilon$).

These also have relationships similar to those of expressions (20-5) to (20-5). By replacing s, r, $F_{ui}$, $B_{ui}$, $F_{wi}$, $B_{wi}$, g, h, p, q, d, n, e, m, and b with $\sigma$, p, $F_{xi}$, $B_{xi}$, $F_{zi}$, $B_{zi}$, $\xi$, $\eta$, $\alpha$, $\gamma$, $\delta$, $\upsilon$, $\varepsilon$, $\mu$, and $\beta$, respectively, the relational expressions of X and Z layers can be obtained from those of U and W layers.

$$F_{zi} = [\xi(1 + \sigma)/2]F_{xi} + [(1 - \sigma)/2]B_{xi}. \quad (63\text{–}5)$$

$$B_{zi} = [\xi(1 - \sigma)/2\eta]F_{xi} + [(1 + \sigma)/2\eta]B_{xi}. \quad (64\text{–}5)$$

$$F_{xi+1} = [\eta(1 + \rho)/2]F_{zi} + [(1 - \rho)/2]B_{zi}. \quad (65\text{–}5)$$

$$B_{xi+1} = [\eta(1 - \rho)/2\xi]F_{zi} + [(1 + \rho)/2\xi]B_{zi}. \quad (66\text{–}5)$$

The recurrent formulas between the $X_i$ and $X_{i+1}$ layers are determined while skipping $Z_i$ therebetween. They can be seen from the product of matrixes of expressions (20-5) to (23-5).

Thus:

$$F_{xi+1} = [(\xi\eta/4)(2 + \rho + \sigma) + (\xi/4\eta)(2 - \rho - \sigma)]F_{xi} + (1/4)(\rho - \sigma)[\eta - (1/\eta)]B_{xi} = [\xi\cos\gamma + j(\xi/2)(\rho + \sigma)\sin\gamma]F_{xi} + (j/2)(\rho - \sigma)\sin\gamma B_{xi} \quad (67\text{–}5)$$

$B_{xi+1} = -(1/4)[(\eta - (1/\eta))]F_{xi} + (1/4\xi\eta)(2 + \rho + \sigma) + (\eta/4\eta)(2 - \rho - \sigma)]B_{xi} = -(j/2)(\rho - \sigma)\sin\gamma F_{xi} + [(1/\xi)\cos\gamma - j(1/2\xi)(\rho + \sigma)\sin\gamma]$ $B_{xi}$ (68-5) The recurrent formulas between the $X_i$ and $X_{i+1}$ layers can simply be expressed by a matrix of 2 × 2, too.

**[Math. 15]**

$$\begin{pmatrix} \xi\cos\gamma + j(\xi/2)(\rho+\sigma)\sin\gamma & (j/2)(\rho-\sigma)\sin\gamma \\ -(j/2)(\rho-\sigma)\sin\gamma & \xi^*\cos\gamma - j(\xi^*/2)(\rho+\sigma)\sin\gamma \end{pmatrix} \quad (69\text{-}5)$$

This is a unitary matrix, while the value of the determinant is 1. $\rho + \sigma = (\mu/\upsilon) + (\upsilon/\mu) > 2$. Hence, the absolute value of diagonal terms is greater than 1.

The present invention places resonators $K_1$, $K_2$, which combine two dielectric multilayer reflectors K, on both sides of the bipolar multilayer crystal H, so as to form a composite multilayer film having a $K_1HK_2$ structure. Therefore, a condition under which the multilayer films $K_1$, $K_2$ confine an electric field is considered. In brief, a condition under which reflection occurs is considered. However, it is not simply a conventional λ/4 reflector. This is a case (condition (b)) where the characteristic value of the matrix of expression (26-5) is greater than 1. When the characteristic value is smaller than 1 (condition (a)), the amplitude simply vibrates without increasing or decreasing. This is totally the same as that explained in connection with the bipolar multilayer crystal H.

The $(XZ)^N$ multilayer film becomes a reflector when $\alpha + \gamma$ is an integer multiple of $\pi$ ($\pi$, $2\pi$, $3\pi$, $4\pi$, ...) while each of $\alpha$ and $\gamma$ is a half-integer multiple of $\pi$ ($\pi/2$, $3\pi/2$, $5\pi/2$, ...). Any of them is sufficient. The multilayer film conditions A, B, C, D, ... are set forth in the case of the above-mentioned bipolar multilayer crystal including active layers, since there is a condition that including active and inactive layers with a higher ratio of the active layers is more favorable. However, similar expressions are obtained in either case in the reflector K. When $\alpha + \gamma$ is an even multiple of $\pi$, there occurs a unitary matrix in which the diagonal terms of the transformation matrix are positive. When $\alpha + \gamma$ is an odd multiple of $\pi$, a minus "-" sign is attached to all the elements in the transformation matrix. Except for this difference, they are substantially the same. Each yields a transformation matrix with a matrix value of 1. A complex conjugate gives an inverse matrix.

Even when $\alpha + \gamma$ is not strictly an integer multiple of $\pi$, the characteristic value can be made 1 or greater. In order for the characteristic value to become 1 or greater, a tolerable shift ($\alpha + \gamma\ \pi \times$ an integer) = $\Delta\alpha + \Delta\gamma$ of $\alpha+\gamma$ from an integer multiple of $\pi$ is:

$$|\Delta\alpha + \Delta\gamma| < \beta^{1/2} \quad (70\text{–}5)$$

This is an absolute condition. It will be more preferred if the following are satisfied:

$$|\Delta\alpha| < \beta^{1/2} \quad (71\text{–}5)$$

$$|\Delta\gamma| < \beta^{1/2} \quad (72\text{–}5)$$

They can accelerate the increase and decrease in the electric field, thereby reducing the number 2N of necessary layers. They are not absolute conditions.

There are many optimal conditions. Therefore, calculations of the reflector K will proceed with reference to the simplest $\lambda/4$ layer by way of example. This is when each of the phase changes $\alpha$ and $\gamma$ of X and Z layers per layer is $\pi/2$, while each of their film thicknesses $\times$ refractive indexes $\delta\upsilon$, $\varepsilon\mu$ corresponds to a 1/4 wavelength.

**[0350]** $\delta\upsilon = \lambda/4$, $\varepsilon\mu = \lambda/4$, $\alpha = 2\pi\delta\upsilon/\lambda = \pi/2$, $\gamma = 2\pi\varepsilon\mu/\lambda = \pi/2$, $\xi = \exp(j\alpha) = \exp(j\pi/2) = j$, $\eta = \exp(j\gamma) = \exp(j\pi/2) = j$. (73–5)

Taking account of the X layers alone, the relationship between the $X_{i+1}$ and $X_i$ layers is determined. In the matrix of expression (69), $\xi = j$, $\xi^* = -j$, $\sin\gamma = 1$, and $\cos\gamma = 0$.

[Math. 16]

$$\begin{pmatrix} -(\rho+\sigma)/2 & j(\rho-\sigma)/2 \\ -j(\rho-\sigma)/2 & -(\rho+\sigma)/2 \end{pmatrix} \quad (74\text{-}5)$$

This is a matrix determining the electric-field relationship between the $X_{i+1}$ and $X_i$ layers when $\xi = j$, $h = j$, $\alpha = \pi/2$, and $\gamma = \pi/2$ in the $(XZ)^N$ layers with the $\lambda/4$ thickness. By substituting $\cosh\Theta = (\rho + \sigma)/2$ and $\sinh\Theta = (\rho - \sigma)/2$, the above-mentioned matrix becomes:

[Math. 17]

$$\begin{pmatrix} -\cosh\Theta & +j\sinh\Theta \\ -j\sinh\Theta & -\cosh\Theta \end{pmatrix} \quad (75\text{-}5)$$

Since $\cosh(A + B) = \cosh A\cosh B + \sinh A\sinh B$, and $\sinh(A + B) = \sinh A\cosh B + \cosh A\sinh B$, the ith power of the transformation matrix is:

[Math. 18]

$$\begin{pmatrix} (-1)^i\cosh i\Theta & -(-1)^i j\sinh i\Theta \\ (-1)^i j\sinh i\Theta & (-1)^i\cosh i\Theta \end{pmatrix} \quad (76\text{-}5)$$

This is a matrix for combining $F_{xi}$ and $B_{xi}$ of the ith set layer with G and R of the incident light. One set of reflective layers ($X_iZ_i$) increases $\Theta$ by 1. The inverse matrix of expression (76-5) is a complex conjugate, which substitutes $\Theta$ with $-\Theta$. The first, second, ..., ith, ..., and Nth reflective layer sets simply act to set variables of sinh and cosh in the matrix to Θ, 2Θ, ..., iΘ, ..., and NΘ, respectively. It is contrary. Θ increases one by one as the reflective layer advances rightward, and decreases one by one as the reflective layer goes back leftward. Whether the amplitude increases or decreases is determined by whether Θ is positive or negative in the reflective layer. The electric-field transformation matrix of $(XZ)^N$ is as follows:

**[Math. 19]**

$$\begin{pmatrix} (-1)^N \cosh N\Theta & -(-1)^N j \sinh N\Theta \\ (-1)^N j \sinh N\Theta & (-1)^N \cosh N\Theta \end{pmatrix} \quad (77\text{-}5)$$

As mentioned above, all the matters are determined from the fact that the transmitted wave T into vacuum is constituted by the forward wave F alone without the backward wave B. The vector of the transmitted amplitude is ${}^t(T, 0)$, where t is a sign of a transposed matrix. When a hypothetical incident-wave vector is

$${}^t((-1)^N \cosh N\Theta, -j(-1)^N \sinh N\Theta), \quad (78\text{–}5)$$

there is no transmitted backward wave. Also,

$$T = \cosh^2 N\Theta - \sinh^2 N\Theta = 1 \quad (79\text{–}5)$$

in this case.

The incident wave G = coshNΘ, which is a value much greater than 1, while the transmitted light T = 1. This means that the incident wave is substantially reflected (R/G = 1, T/G = 0). That is, the $(XZ)^N$ multilayer film laminating N sets of XZ as a unit functions as the reflector K. While the incident wave and reflected wave have the vector of

$${}^t((-1)^N \cosh N\Theta, -j(-1)^N \sinh N\Theta) \quad (80\text{–}5)$$

on the entrance side as in expression (78), the reflector K outputs them as

$${}^t(1, 0) \quad (81\text{–}5)$$

on the exit side.

However, it becomes the reflector under the condition that the transmitted light includes no backward wave. Without such a condition, the same reflector K can also function as an absorptive film in practice. The absorptive film means a film which acts to enhance the incident light therewithin. While the 1/4 wavelength multilayer film, 1/2 wave multilayer film, ... become bipolar multilayer crystals, they do not have a reflecting function as their intrinsic function. They become either reflective or absorptive films depending on the entrance and exit conditions.

The absorptive film occurs in the case where G = 1 while the reflected wave R = 0. When they are put into the matrix of expression (77-5), the forward wave $F^N$ and backward wave $B^N$ yield such amplitudes as

$${}^t((-1)^N \cosh N\Theta, +(-1)^N j \sinh N\Theta) \quad (82\text{–}5)$$

after the final stage. When N is large, each of the amplitudes of the forward and backward waves in the last stage is a value much greater than 1. That is, the incident wave is completely absorbed and enhanced. While expression (77-5) per se is as mentioned above and inappropriate, a favorable intermediate output can be obtained by using a conversion matrix (83-5) of a complex conjugate of expression (77-5).

[Math. 20]

$$\begin{pmatrix} (-1)^N \cosh N\Theta & +(-1)^N j\sinh N\Theta \\ -(-1)^N j\sinh N\Theta & (-1)^N \cosh N\Theta \end{pmatrix} \quad (83\text{-}5)$$

This is a transformation matrix of a multilayer film corresponding to a bipolar multilayer crystal $(Z_1X_1...Z_iX_i...Z_NX_N) = (ZX)^N$ in which the order of XZ is reversed.

Under the condition $({}^t(1, 0))$ where G = 1 and R = 0 (all is absorbed without reflection), the electric field keeps increasing in the $(ZX)^N$ multilayer film and grows to amplitudes of the forward wave $F^M$ and backward wave $B^M$ of

$${}^t((-1)^N\cosh N\Theta, -(-1)^N j\sinh N\Theta) \qquad (84\text{–}5)$$

after the N sets. They are the same as the hypothetical vector of expression (80-5).

Hence, once a composite multilayer film $(ZX)^N(XZ)^N$ is made, ${}^t(1, 0)$ on the entrance side increases like a bipolar function in the initial $(ZX)^N$ multilayer film, so as to become ${}^t((-1)^N\cosh N\Theta, -(-1)^N j\sinh N\Theta)$, which then decreases like a bipolar function in the $(XZ)^N$ multilayer film, so as to return to ${}^t(1, 0)$.

The initial and subsequent multilayer films will be referred to first and second reflectors $K_1$ and $K_2$, respectively, so as to be distinguished from each other. They have a conversion matrix of a complex conjugate. This is a sole condition. The foregoing has been explained as a multilayer film in which $K_1 = (ZX)^N$ and $K_2 = (XZ)^N$. Fig. 30 illustrates the structure of reflectors K and a graph of the forward-wave electric field.

While Z and X are thin films which differ from each other in terms of refractive index, it does not matter in practice, whereby they may also be constructed such that $K_1 = (XZ)^N$ and $K_2 = (ZX)^N$. Though the electric field in the middle becomes ${}^t((-1)^N\cosh N\Theta, +(-1)^N j\sinh N\Theta)$ in this case, the rest is the same.

XZ and ZX are complex conjugate to each other. $(XZ)^N$ and $(ZX)^N$ are also complex conjugate to each other. Their products $(ZX)^N(XZ)^N$ and $(XZ)^N(ZX)^N$ equal to their complex conjugates. That is, they are Hermitian.

As emphasized repeatedly, all the intermediate electric fields are determined by the sole condition that the incident wave exists while the backward wave is 0 in the last vacuum. The electric fields are inevitably enhanced in any of the $(ZX)^N(XZ)^N$ and $(XZ)^N(ZX)^N$. That is, a bipolar multilayer crystal of KK* or K*K (where * is a complex conjugate) has an electric-field enhancing effect in the middle. This makes the forward-wave electric field become 1 at both ends (G, T). There is no backward wave at the beginning and end (R = 0). That it can make R = 0 is important.

The electric-field enhancement in the middle of the $K_1K_2$ multilayer film is more remarkable as the refractive index ratios $\rho = \mu/\upsilon$, $\sigma = \upsilon/\mu$, and $\beta = (\mu - \upsilon)^2/\mu\upsilon$ are farther from 1 and the number of sets N is greater. This is the same as with the above-mentioned bipolar multilayer crystal H including the active layers.

If $\rho = 1.3$ ($\sigma = 0,7692$, $\beta = 0.0692$), for example, the intermediate electric field $F_N$ can be raised by about 95 times that of the incident wave when N = 20 sets (80 layers in total).

If $\rho = 1.25$ ($\sigma = 0.8$, $\beta = 0.05$), for example, the intermediate electric field $F_N$ can be raised by about 43 times that of the incident wave when N = 20 sets (80 layers in total).

If $\rho = 1.2$ ($\sigma = 0.8333$, $\beta = 0.0333$), for example, the intermediate electric field $F_N$ can be raised by about 19 times that of the incident wave when N = 20 sets (80 layers in total).

If $\rho = 1.18$ ($\sigma = 0.8475$, $\beta = 0.0274$), for example, the intermediate electric field $F_N$ can be raised by about 14 times that of the incident wave when N = 20 sets (80 layers in total).

If $\rho = 1.15$ ($\sigma = 0.8696$, $\beta = 0.0196$), for example, the intermediate electric field $F_N$ can be raised by about 8 times that of the incident wave when N = 20 sets (80 layers in total).

If $\rho = 1.12$ ($\sigma = 0.8929$, $\beta = 0.0129$), for example, the intermediate electric field $F_N$ can be raised by about 5 times that of the incident wave when N = 20 sets (80 layers in total). Thus, the fundamental-wave electric field is enhanced by at least 5 up to about 100 times.

4. Explanation of a K*HK structure holding a bipolar multilayer crystal including active layers between reflectors; Fig. 31

The bipolar multilayer crystal H including active layers employed in the present invention combines conjugate multilayer films such that H = $(WU)^M(UW)^M$ as in expression (60-5). U and W are active and inactive layers, respectively, which may be arranged in any order ($(UW)^M(WU)^M$ is also employable).

Letting the incident wave G = 1 and the reflected wave R = 0, the electric field increases in the first half $(WU)^M$ of H and becomes

$$^t[(1/2)(r^M + s^M),\ (j/2)(r^M - s^M)](85\text{–}5)$$

in the middle as with expression (59-5). It decreases in the second half $(UW)^M$ of H, so that the transmitted T = 1. The forward wave multiplication at the center is $(1/2)(r^M + s^M)$, which is about 5 to 100 times.

The present invention holds the bipolar multilayer crystal H between conjugate reflectors $K_1$, $K_2$ ($K_1^* = K_2$), so as to form $K_1HK_2$. $K_1 = (ZX)^N$, $H = (WU)^M(UW)^M$, and $K_2 = (XZ)^N$. Hence, the composite multilayer film $K_1HK_2$ of the present invention has the following structure:

$$K_1HK_2 = (ZX)^N(WU)^M(UW)^M(XZ)^N \qquad (86\text{–}5)$$

H is Hermetian, so is $K_1K_2$. $K_1HK_2$ is also Hermetian. It should be noted that the action of the matrix and the structural order of the multilayer film are opposite to each other. The crystal is read from the left to right, whereas the matrix proceeds from the right to left. They must not be mixed up with each other. A transformation matrix of $(UW)^M$ is given by expression (54-5).

Let

$$\sinh\Phi = (r - s)/2,\ \cosh\Phi = (1/2)(r + s)(87\text{–}5)$$

here. Expressions (49-5) and (54-5) can be written with Φ. Actions of the layer structure of expression (86-5) will be explained. $(ZX)^N$ is represented by expression (88-5).

**[Math. 21]**

$$\begin{pmatrix} (-1)^N \cosh N\Theta & -(-1)^N j\sinh N\Theta \\ (-1)^N j\sinh N\Theta & (-1)^N \cosh N\Theta \end{pmatrix} \qquad (88\text{-}5)$$

$(WU)^M$ can be represented by a matrix rewriting expression (55) with Φ.

[Math. 22]

$$\begin{pmatrix} \cosh M\Phi & -j\sinh M\Phi \\ j\sinh M\Phi & \cosh M\Phi \end{pmatrix} \quad (89\text{-}5)$$

Then, the transformation matrix of the $(ZX)^N(WU)^M$ portion in the first half of the multilayer film $K_1HK_2$ of the present invention is given by expression (88-5) × expression (89-5), whereby:

[Math. 23]

$$\begin{pmatrix} (-1)^N \cosh(M\Phi + N\Theta) & -(-1)^N j\sinh(M\Phi + N\Theta) \\ (-1)^N j\sinh(M\Phi + N\Theta) & (-1)^N \cosh(M\Phi + N\Theta) \end{pmatrix} \quad (90\text{-}5)$$

It is wondered what this means. The forward-wave electric field is enhanced by about coshNΘ times with the first reflector $K_1$ ($(ZX)^N$) alone. The forward-wave electric field is enhanced by about coshMΦ times with the first half of the bipolar multilayer crystal H ($(WU)^M$) alone.

However, $K_1HK_2$ as in the present invention enhances the forward-wave electric field to cosh(NΘ + MΦ). This does not simply add multiplications together. The increase is much greater than that. It differs a little from multiplying them. The multiplied product is coshNΘcoshMΦ. However, cosh(NΘ + MΦ) = coshNΘcoshMΦ + sinhNΘsinhMΦ and thus is further greater than the product. It is about two times the product. That is, it increases like a bipolar function.

In order for $K_1$ and the first half of H to enhance the electric field, the condition that Φ and Θ have the same polarity is necessary. It will be sufficient if the order of magnitude of refractive indexes is the same in $K_1$ and the first half of H, the order of magnitude of refractive indexes is the same in the second half of H and $K_2$, and the order in $K_1$ and the first half of H and the order in the second half of H and $K_2$ are opposite to each other.

When two kinds of refractive indexes are arranged higher, lower, higher, lower, ... in $K_1$, they are also arranged higher, lower, higher, lower, ... in the first half of H. By contrast, the two kinds of refractive indexes are arranged lower, higher, lower, higher, ... in the second half of H and in $K_2$.

When two kinds of refractive indexes are arranged lower, higher, lower, higher, ... in $K_1$, they are also arranged lower, higher, lower, higher, ... in the first half of H. By contrast, the two kinds of refractive indexes are arranged higher, lower, higher, lower, ... in the second half of H and in $K_2$. This forms a bilaterally symmetrical layer structure as if its left and right sides are turned around at the center. Fig. 31 illustrates the $K_1HK_2$ structure of the present invention and a graph of the forward-wave electric field.

The electric field enhanced in the first half accurately decreases in the second half until T = 1. This will be represented. The $(UW)^M$ in the second half of $K_1HK_2$ can be represented by a matrix (91-5) in which expression (49-5) is rewritten with Φ:

**[Math. 24]**

$$\begin{pmatrix} \cosh M\Phi & j\sinh M\Phi \\ -j\sinh M\Phi & \cosh M\Phi \end{pmatrix} \quad (91\text{-}5)$$

The $(XZ)^N$ in the second half is represented by expression (92-5):

**[Math. 25]**

$$\begin{pmatrix} (-1)^N \cosh N\Theta & (-1)^N j\sinh N\Theta \\ -(-1)^N j\sinh N\Theta & (-1)^N \cosh N\Theta \end{pmatrix} \quad (92\text{-}5)$$

Then, by expression (91-5) × expression (92-5), the transformation matrix of the $(UW)^M(XZ)^N$ portion in the second half of the multilayer film $K_1HK_2$ of the present invention is:

**[Math. 26]**

$$\begin{pmatrix} (-1)^N \cosh(M\Phi + N\Theta) & (-1)^N j\sinh(M\Phi + N\Theta) \\ -(-1)^N j\sinh(M\Phi + N\Theta) & (-1)^N \cosh(M\Phi + N\Theta) \end{pmatrix} \quad (93\text{-}5)$$

Expression (90-5) × expression (93-5) is a unit matrix. Therefore, when G = 1 and R =0 in the input, the transmitted wave T = 0, whereby no backward wave exists on the transmission side.

This is seen clearly from expressions. It still does not clarify how the front and rear reflectors $K_1$, $K_2$ work. It will be easier to understand when studied from the opposite side. There is an absolute condition that T = 1 and the backward wave is 0 on the vacuum side.

Since $K_2 = (XZ)^N$, for yielding ${}^t(1, 0)$ by multiplying with (92-5), the vector of the forward and backward waves must be

$${}^t((-1)^N \mathrm{conhN\Theta}, (-1)^N \mathrm{jsinhN\Theta}) \qquad (94\text{–}5)$$

immediately in front of $K_2$. This forms a backward wave between H and $K_1$. For producing this in the second half $(UW)^M$ of the bipolar multilayer crystal H, it must be

$${}^t((-1)^N \mathrm{conh(N\Theta + M\Phi)}, (-1)^N \mathrm{jsinh(N\Theta + M\Phi)}) \qquad (95\text{–}5)$$

by multiplying with conjugate expression (91-5).

This is the electric field in the middle of $K_1HK_2$ and yields the maximum value of the electric field. This is a very large value. In order for the vector of the forward and backward waves to be made in the first half $(WU)^M$ of the bipolar multilayer crystal H in front thereof, it must be

$$^t((-1)^N \mathrm{conh} N\Theta, (-1)^N j \sinh N\Theta) \qquad (96\text{-}5)$$

in the middle of $K_1$ and H by multiplying with the conjugate matrix of expression (89-5).

When the forward and backward waves take such a value in the middle of $K_1$ and H, the beginning of $K_1 = (ZX)^N$ is

$$^t(1, 0) \qquad (97\text{-}5)$$

by multiplying with the inverse matrix (92-5) of expression (88-5). This means that, when the incident wave G = 1 is put into the beginning of $K_1$, it is wholly absorbed into $K_1$ and vigorously enters therein, so that the reflection R = 0 in $K_1$.

That is, the dielectric multilayer film $K_1HK_2$ of the present invention inputs G = 1 and R = 0, enhances the electric field to cosh(MΦ + NO) in the middle, and then lowers the electric field, so that the transmitted wave T = 1 at the end. By placing conjugate multilayer films of K*HK (H* = H) in the front and rear, the incident wave of G = 1 is wholly absorbed (R = 0) and then enhanced by several ten to several hundred times in the middle, so as to finally yield the transmitted wave T = 1. The front and rear layers are completely complex conjugate to each other with respect to the middle. H is Hermitian, so is K*HK.

The intermediate bipolar multilayer crystal H $((WU)^M(UW)^M)$ by itself can enhance the electric field only up to coshMΦ. When the reflectors $K_1$, $K_2$ are placed on both sides thereof, however, the electric field can be enhanced up to cosh(MΦ + NΘ). This is not simply the product of coshMΦ and coshNΘ, but about two times the product. When each of coshMΦ and coshNΘ is 20 times, for example, the electric field can be enhanced by about 800 times in the middle of the multilayer film. In this case, it is necessary that the order of magnitude of refractive indexes be the same in $K_1$ and the first half of the bipolar multilayer crystal H, the order of magnitude of refractive indexes be the same in the second half of bipolar multilayer crystal H and $K_2$, and the former and latter orders be opposite to each other so that Φ and Θ have the same polarity.

Meanwhile, the fundamental-wave power is converted into the second harmonic in proportion to the nonlinear optical coefficient $\chi^{(2)}$. How the second harmonic is produced from the fundamental wave will now be explained. A Maxwell's equation is written in the cgs system of units and formed into a wave equation. The electric flux density is

$$E + 4\pi P. \qquad (98\text{-}5)$$

Since the wave is assumed to be a plane wave propagating in the z direction, x- and y-directional differentials are 0, whereby it can be written as

$$(\delta^2 E/\delta z^2) - (n^2/c^2)(\delta^2 E/\delta t^2) = 4\pi/c^2(\delta P/\delta t). \qquad (99\text{-}5)$$

The differentiation sign δ and the thickness δ of the X layer must be distinguished from each other. This is an equation for determining a second harmonic, while its left side represents the electric field of the second harmonic.

While the electric field of the fundamental wave has been studied so far, the second-wave electric field will now be taken into consideration. Since the fundamental-wave electric field has been expressed by E so far, the second-harmonic electric field will be denoted by D so as not to be mixed up with the former. D is for double. This D differs from the electric flux density mentioned above. Since the number of signs is limited, the electric field of the double harmonic will be denoted by D but must not be mixed up with the electric flux density. Since the second-harmonic electric field has only the x-directional component, x will be omitted. The time derivative is -2jω. Since the wave number of the fundamental wave is k, the wave number of the second harmonic will be denoted by w in order to distinguish it from the former. The second-order differential with respect to time gives $-4\omega^2$. The wave number of the second harmonic is $w = 2n\omega/c$. Here, n is the refractive index with respect to the double wave B. However, the right side of expression (99) is the dielectric polarization $P(2\omega)$ of the double harmonic produced by the fundamental wave. The dielectric polarization $P(2\omega)$ of the double frequency produces the double-harmonic electric field by radiation.

The right side is a source term of the light propagation expression on the left side. It is concerned with a steady-state solution. The time derivative is determined. Expression (99) becomes

$$(\delta^2 D/\delta z^2) + w^2 D = 4\pi/c^2(\delta P/\delta t). \qquad (100\text{–}5)$$

One whose left side = 0 has special solutions of exp(jwz) and exp(-jwz). Green's function $G(z, \xi)$ is defined as

$$(\delta^2 G/\delta z^2) + w^2 G = \delta(z - \xi). \qquad (101\text{–}5)$$

The right side is a δ function. Since both sides should equal each other when integrated, the first-order derivative of G must have a certain discontinuity. Under the condition that the integral of $\delta G/\delta z$ is 1, Green's function $G(z, \xi)$ becomes

$$G(z, \xi) = (j/2w)\exp(jw|z - \xi|). \qquad (102\text{–}5)$$

The second harmonic E(z) is calculated by integrating source $4\pi/c^2(2^\delta P/\delta t^2)$ multiplied with Green's function.

$$D(z) = \int 4\pi/c^2(\delta^2 P/\delta t^2)G(z, \xi)d\xi. \qquad (103\text{–}5)$$

P is the second-order dielectric polarization caused by the nonlinear effect and thus yields only a multiplier ($-2j\omega$) upon second-order differentiation with respect to time. The coefficient in the integral becomes $-4\pi(2\omega)^2P/c^2$. The second-order dielectric polarization can be written as

$$P = \chi^{(2)}E(z)E(z). \qquad (104\text{–}5)$$

E(z) is the fundamental-wave electric field calculated so far. The second harmonic D(z) at z is given by superposing electric fields caused by the springing of the second-order dielectric polarization from all the active layers.

The contribution of the jth layer will be considered. The electric field $E_j$ of the jth layer is constituted by a forward wave $F_j$ and a backward wave $B_j$. It looks like expression (1-5), but the subscript j in $E_j$, $F_j$, $B_j$, and $k_j$ is omitted in order to reduce complexity. When calculating the second harmonic within the jth layer, both of the cases where $z - \xi$ is positive and negative must be considered.

$$E = F\exp[jk(z - z_{j-1})] + B\exp[-jk(z - z_j)]. \qquad (105\text{–}5)$$

However, the second harmonic by the forward wave on the outside (z > L, where L is the crystal length) is important. Therefore, only the square of the forward wave $F_j$ is taken into account. While the square of the backward wave B generates a second harmonic on the incident-wave side, it is represented by substantially the same expression as that of the second harmonic caused by the forward wave F on the emission side (exit side) in which F is replaced with B. Also, the second harmonic wave by the backward wave B is erased by superposition and thus is meaningless. Hence, the second harmonic caused by the forward wave is calculated. The dielectric polarization of the jth layer by the forward wave is given by

$$P = \chi^{(2)} FF\exp[2jk(z - z_j)]. \qquad (106\text{–}5)$$

Its resulting second harmonic $D_j(z)$ at z point ($z > z_j$) is calculated by

$$D_j(z) = -\int[4\pi(2\omega)^2/c^2]\ \chi^{(2)}F^2\exp[2jk(\xi - z_j)]G(z, \xi)d\xi. \ (107\text{–}5)$$

Substituting Green's function G(z, ξ) into the above yields

$$D_j(z) = [-4\pi(2\omega)^2\chi^{(2)}/c^2]F^2(j/2w)\int\exp(jw|z - \xi|)\exp[2jk(\xi - z_j)]d\xi. \quad (108\text{–}5)$$

The integration range is from $z_{j-1}$ to $z_j$. Since the second harmonic is determined where z is greater than $z_j$ (on the outside of the exit), $z - \xi > 0$ in the integration range.

$$D_j(z) = [-4\pi(2\omega)^2\chi^{(2)}/c^2][F^2/2w(2k - w)]\{\exp[jw(z - z_j)] - \exp[jw(z - z_{j-1}) + 2jk(z_{j-1} - z_j)]\}. \qquad (109\text{–}5)$$

Since $z_j$-$z_{j-1}$ is the thickness $d_j$ of the jth layer ($z_{j-1}$-$z_j$ =-$d_j$),

$$D_j(z) = [-4\pi(2\omega)^2\chi^{(2)}/c^2][F^2/2w(2k - w)]\exp(jwz)[\exp(-jwz_j) - \exp(-jwz_{j-1} - 2jkd_j)]. \quad (110\text{–}5)$$

In practice, F has the subscript j attached thereto. Summing with respect to j can yield the intensity D(z) of the second harmonic at z.

Letting

$$\kappa = -[2\pi(2\omega)^2\chi^{(2)}]/[w(2k - w)c^2], \qquad (111\text{–}5)$$

$$D(z) = \kappa\exp(jwz)\sum F_j^2[\exp(-jwz_j) - \exp(-jwz_{j-1} - 2jkd_j)]. \qquad (112\text{–}5)$$

The denominator of κ includes (2k - w). If 2k-w=0, the denominator will be 0. In this case, the inside of [...] will also be 0, thereby yielding no divergence. Expression (112-5) is a strict equation. κ exists only in the active layers. It will be sufficient if κ is integrated in the active layers alone. $F_j$ and $z_j$ become $F_{ui}$ and $z_i$, respectively, in the ith set of active layers. Assuming that z = 0 at the midpoint of the bipolar multilayer crystal H, $z_i = -M(e + d) + i(e + d)$, $z_j - z_{j-1} = d$, and dj = d in the left half of H. The forward-wave electric field is $F_j = F_{ui} = \cosh(N\Theta + i\Phi)$. $F_{ui}^2$ is approximated by $(1/4)\exp(2N\Theta + 2i\Phi)$.

$$\exp(-jwz_j) - \exp(-jwz_{j-1} - 2jkd_j) = \exp(-jwz_j)[1 - \exp(j(w - 2k)d)]. \qquad (113\text{–}5)$$

The contribution of the left half of H (z < 0) alone is calculated by

$$\begin{aligned}&\text{half of } \sum F_j^2[\exp(-jwz_j) - \exp(-jwz_{j-1} - 2jkd_j)]\\ &= (1/4)\exp(2N\Theta + 2i\Phi)\exp[-jw(e + d)(i - M)][1 - \exp(j(w - 2k)d)]\\ &= (1/4)\exp(2N\Theta)\{\exp[2(M + 1)\Phi - j(M + 1)(e + d)] - 1\}[1 - \exp(j(w - 2k)d)]/\{\exp[2\Phi - jw(e + d)] - 1\}. \qquad (114\text{–}5)\end{aligned}$$

Since k (e + d) is an integer multiple of $\pi$, w(e + d) is substantially an integer multiple of $2\pi$. exp[-jw(e + d)] = 1. The right half is substantially the same conjugate expression. By adding them:

$$\begin{aligned}&\sum F_j^2[\exp(-jwz_j) - \exp(-jwz_{j-1} - 2jkd_j)]\\ &= \exp(2N\Theta)[\exp(2(M + 1)\Phi - 1)]\sin^2[(w - 2k)d]/[\exp(2\Phi) - 1] \qquad (115\text{–}5)\end{aligned}$$

$$D(z) = \kappa\exp(jwz)\exp(2N\Theta)[\exp(2(M + 1)\Phi - 1)]\sin^2[(w - 2k)d]/[\exp(2\Phi) - 1] \qquad (116\text{–}5)$$

When the value of $\kappa$ is introduced,

$$D(z) = -[2\pi(2\omega)^2\chi^{(2)}]\exp(jwz)\exp(2N\Theta)[\exp(2(M + 1)\Phi - 1)]\sin^2[(w - 2k)d]/\{[w(2k - w)c^2][\exp(2\Phi) - 1]\}. \qquad (117\text{–}5)$$

This is an expression representing a substantially strict second-harmonic electric field. It is enhanced by exp (2NΘ)[exp(2(M + 1)Φ- 1)/[exp(2Φ)-1] times that of a simple single layer having the thickness d.

While a term of $\sin^2$[(w - 2k)dM]/(2k - w)$^2$ appears in the case of the active layer thickness dM, the present invention has $\sin^2$[(w - 2k)d]/(2k-w)$^2$, thereby yielding less phase mismatching. This results from the condition that exp [-jw(e + d)] = 1. In addition, the second harmonic is enhanced by exp(2NΘ)[exp(2(M + 1)Φ-1)]/[exp(2Φ) - 1]M as compared with the case where the thickness is dM. The present invention is seen to be excellent.

Example 1

Example 1 of the fifth embodiment of the present invention will now be explained.

For making the bipolar multilayer crystal H in which materials having a nonlinear effect and not are combined to form a laminate structure, a material having a nonlinear effect must be selected. Each of the two kinds of materials is required to be transparent to the fundamental wave and second harmonic. As materials having a nonlinear effect, $KH_2PO_4$, $KTiOPO_4$, $KNbO_3$, $LiB_3O_3$, $\beta$-$BaB_2O_4$, $CsLiB_6O_{10}$, $LiNbO_3$, and the like have been proposed. They have been proposed as those making the second harmonic by using the relationship between refractive indexes in directions in which extraordinary and ordinary beams exist as explained as prior art.

The present invention can use thin films made of these materials in combination with thin films made of other materials. For combining them as a multilayer film, not only the refractive indexes and transparency but crystal systems and lattice matching also matter.

Here, using a GaAs-AlGaAs system which can be manufactured as a multilayer film, the bipolar multilayer crystal H and reflectors $K_1$, $K_2$ are provided. GaAs has a nonlinear effect. GaAs is used as active layers. AlGaAs has no nonlinear effect. AlGaAs is used as inactive layers. The fundamental wave and second harmonic are set at 1864 nm and 932 nm, respectively. GaAs exhibits refractive indexes of 3.37 and 3.44 for the fundamental wave and second harmonic, respectively. The refractive index difference is 0.07. The wave number difference $\Delta k = 2\pi\Delta n/\lambda = 2 \times 10^5\ m^{-1}$. $\pi/\Delta k = 1.57 \times 10^{-5} = 15700$ nm.

(1) About the bipolar multilayer crystal H

The bipolar multilayer crystal H is made of an alternate multilayer film of GaAs and $Al_{0.82}Ga_{0.18}As$. Their refractive indexes for the fundamental wave are n = 3.37 in GaAs and m = 2.92 in $Al_{0.82}Ga_{0.18}As$. s=n/m=1.154. r=m/n=0.866. b=0.0205. Let the phase difference per layer of GaAs be $p = 2\pi nd/\lambda$, and the phase difference per layer of $Al_{0.82}Ga_{o.18}As$ be $q = 2\pi me/\lambda$.

(a) Let p + q in the bipolar multilayer crystal H ($Al_{0.82}Ga_{0.18}As$/GaAs) be $2\pi$. The thickness of GaAs is made greater, so that $p = 3\pi/2$ and $q = \pi/2$. The thickness per layer of GaAs is d = 414.8 nm, and the thickness per layer of $Al_{0.82}Ga_{0.18}As$/GaAs is e = 159.6 nm. The thickness of one set (d + e) = 574.4 nm. Letting the total thickness be 2M = 40 cycles including conjugate portions, the thickness 2Md = 22976 nm. The thickness of active layers alone is 2Md=16592 nm. It is slightly greater than $\pi/\Delta k$ (15700 nm). Phase mismatching appears a little.

$\sinh\Phi = (s-r)/2 = 0.144$. $\Phi = 0.1432$. $\cosh\Phi = 1.0103$. Letting M = 20 cycles, $M\Phi = 2.864$, whereby $\cosh M\Phi = 8.794$. The electric field is enhanced by about 8 times. This may be either $(GaAs\cdot AlGaAs)^{20}(AlGaAs\cdot GaAs)^{20}$ or $(AlGaAs\cdot GaAs)^{20}(GaAs\cdot AlGaAs)^{20}$.

(b) Let p + q in the bipolar multilayer crystal H (GaAs/$Al_{0.82}Ga_{0.18}As$) be $\pi$. Let the respective per layer phase differences of GaAs and $Al_{0.82}Ga_{0.18}As$ be $p = \pi/2$ and $q = \pi/2$. The thickness per layer of GaAs is d = 138.2 nm, and the thickness per layer of $Al_{0.82}Ga_{0.18}As$ is e = 159.6 nm. The thickness of one set (d + e) = 297.8 nm. Letting the total thickness be 2M = 40 cycles including conjugate portions, the thickness 2Md = 11912 nm. The thickness of active layers alone is 2Md = 5528 nm. It is smaller than $\pi/\Delta k$ (15700 nm). Phase mismatching does not appear strongly.

$\sinh\Phi=(s - r)/2 = 0.144$. $\Phi = 0.1432$. $\cosh\Phi = 1.0103$. Letting M = 20 cycles, $M\Phi = 2.864$, whereby $\cosh M\Phi = 8.794$. The electric field is enhanced by about 8 times. This may be either $(GaAs\cdot AlGaAs)^{20}(AlGaAs\cdot GaAs)^{20}$ or $(AlGaAs\cdot GaAs)^{20}(GaAs\cdot AlGaAs)^{20}$.

(c) Let p + q in the bipolar multilayer crystal H (GaAs/$Al_{0.82}Ga_{0.18}As$) be $\pi$. Let the respective per layer phase differences of GaAs and $Al_{0.82}Ga_{0.18}As$ be $p = \pi/2$ and $q = \pi/2$. The thickness per layer of GaAs is d = 138.2 nm. The thickness per layer of $Al_{0.82}Ga_{0.18}As$ is e = 159.6 nm, while the thickness of one set (d + e) = 297.9 nm. Letting the total thickness be 2M = 80 cycles including conjugate portions, the thickness 2Md = 23832 nm. The thickness of active layers alone is 2Md = 11056 nm. It is smaller than $\pi/\Delta k$ (15700 nm). Phase mismatching does not appear strongly.

$\sinh\Phi = (r-s)/2 = 0.144$. $\Phi = 0.1432$. $\cosh\Phi = 1.0103$. Letting M = 40 cycles, $M\Phi = 5.728$, whereby $\cosh M\Phi = 153.6$. The electric field is enhanced by about 150 times. This may be either $(GaAs\cdot AlGaAs)^{40}(AlGaAs\cdot GaAs)^{40}$ or $(AlGaAs\cdot GaAs)^{40}(GaAs\cdot AlGaAs)^{40}$.

(2) About reflectors $K_1$, $K_2$

The reflectors $K_1$, $K_2$ are assumed to be alternate multilayer films $(XZ)^N$, $(ZX)^N$, each constituted by $Al_{0.21}Ga_{0.79}As$ and $Al_{0.82}Ga_{0.18}As$. Their refractive indexes for the fundamental wave are $\upsilon = 3.19$ in $Al_{0.21}Ga_{0.79}As$ and $\mu = 2.92$ in $Al_{0.82}Ga_{0.18}As$. $\rho = \mu/\upsilon = 0.915$. $\sigma = \upsilon/\mu = 1.092$. $\beta = 0.0373$. Let the phase difference per layer of $Al_{0.21}Ga_{0.79}As$ be $\alpha = 2\pi\upsilon\delta/\lambda$, and the phase difference per layer of $Al_{0.82}Ga_{0.18}As$ be $\gamma = 2\pi\mu\varepsilon/\lambda$.

(d) Let $\alpha + \gamma$ in the reflectors $K_1$, $K_2$ ($Al_{0.82}Ga_{0.18}As$) be $2\pi$. Let $\alpha = 3\pi/2$, and $\gamma = \pi/2$. The thickness per layer of $Al_{0.21}Ga_{0.79}As$ is 6 = 438.2 nm, and the thickness per layer of $Al_{0.82}Ga_{0.18}As$ is $\varepsilon$ = 159.6 nm. The thickness of one set ($\delta$+ $\varepsilon$) = 597.8 nm. Letting the total thickness be 2N = 40 cycles including conjugate portions, the thickness 2N$\delta$ = 23912 nm.

$\sinh\Theta = (\sigma-\rho)/2 = 0.0885$. $\Theta = 0.0883$. $\cosh\Theta = 1.0039$. Letting N = 20 cycles, $N\Theta = 1.766$, whereby $\cosh N\Theta = 3.00$. The electric field is enhanced by about 3 times. This may be either $(Al_{0.21}Ga_{0.79}As\cdot Al_{0.82}Ga_{0.18}As)^{20}(Al_{0.82}Ga_{0.18}As\cdot Al_{0.21}Ga_{0.79}As)^{20}$ or $(Al_{0.82}Ga_{0.18}As\cdot Al_{0.21}Ga_{0.79}As)^{20}(Al_{0.21}Ga_{0.79}As\cdot Al_{0.82}Ga_{0.18}As)^{20}$.

(e) Let $\alpha + \gamma$ in the reflectors $K_1$, $K_2$ ($Al_{0.82}Ga_{0.18}As$) be $\pi$. Let $\alpha = \pi/2$, and $\gamma = \pi/2$. The thickness per layer of $Al_{0.21}Ga_{0.79}As$ is $\delta$ = 146.1 nm, and the thickness per layer of $Al_{0.82}Ga_{0.18}As$ is $\varepsilon$ = 159.6 nm. The thickness of one set

$(\delta+\varepsilon)$ = 305.7 nm. Letting the total thickness be 2N = 40 cycles including conjugate portions, the thickness $2N\delta$ = 12228 nm.

$\sinh\Theta = (\sigma-\rho)/2 = 0.0885$. $\Theta = 0.0883$. $\cosh\Theta = 1.0039$. Letting N = 20 cycles, $N\Theta = 1.766$, whereby $\cosh N\Theta = 3.00$. The electric field is enhanced by about 3 times. This may be either $(Al_{0.21}Ga_{0.79}As{\cdot}Al_{0.82}Ga_{0.18}As)^{20}(Al_{0.82}Ga_{0.18}As{\cdot}Al_{0.21}Ga_{0.79}As)^{20}$ or $(Al_{0.82}Ga_{0.18}As{\cdot}Al_{0.21}Ga_{0.79}AS)^{20}(Al_{0.21}Ga_{0.79}As\text{-}Al_{0.82}Ga_{0.18}As)^{20}$.

(f) Let $\alpha + \gamma$ in the reflectors $K_1$, $K_2$ ($Al_{0.82}Ga_{0.18}As$) be $\pi$. Let $\alpha = \pi/2$, and $\gamma = \pi/2$. The thickness per layer of $Al_{0.21}Ga_{0.79}As$ is $\delta$ = 146.1 nm, and the thickness per layer of $Al_{0.82}Ga_{0.18}As$ is $\varepsilon$ = 159.6 nm. The thickness of one set $(\delta + \varepsilon)$ = 305.7 nm. Letting the total thickness be 2N = 40 cycles including conjugate portions, the thickness $2N\delta$ = 12228 nm.

$\sinh\Theta = (\sigma-\rho)/2 = 0.0885$. $\Theta = 0.0883$. $\cosh\Theta = 1.0039$. Letting N = 40 cycles, $N\Theta = 3.532$, whereby $\cosh N\Theta = 17.1$. The electric field is enhanced by about 17 times. This may be either $(Al_{0.21}Ga_{0.79}As{\cdot}Al_{0.82}Ga_{0.18}As)^{40}(Al_{0.82}Ga_{0.18}As{\cdot}Al_{0.21}Ga_{0.79}As)^{40}$ or $(Al_{0.82}Ga_{0.18}As{\cdot}Al_{0.21}Ga_{0.79}As)^{40}(Al_{0.21}\ Ga_{0.79}As{\cdot}Al_{0.82}Ga_{0.18}As)^{40}$.

(3) About the $K_1HK_2$ structure

As to H, the electric field is enhanced by 8 times in (a) and (b), and 150 times in (c). As to $K_1K_2$, the electric field is enhanced by 3 times in (d) and (e), and 17 times in (f). The electric field is enhanced by about 51 times in the combination of (a) × (d). The electric field is enhanced by about 300 times in the combination of (a) × (f). The electric field is enhanced by about 900 times in the combination of (c) × (d). The electric field is enhanced by about 5000 times in the combination of (c) × (f).

Example 2

Example 2 of the fifth embodiment of the present invention will now be explained. Fig. 32 illustrates a mirror-symmetric composite photonic structure in Example 2 of the fifth embodiment of the present invention.

The mirror-symmetric composite photonic structure in the fifth embodiment illustrated in Fig. 32 comprises the bipolar multilayer crystal H and the first and second reflector multilayer films $K_1$, $K_2$. The bipolar multilayer crystal H is formed by alternately laminating a plurality of sets of an active layer with a fixed thickness having a nonlinear effect for converting a fundamental wave into a second harmonic or generating a third-order nonlinear signal and an inactive layer with another fixed thickness free of the nonlinear effect. In this embodiment, the active and inactive layers are constructed as ZnO and $SiO_2$ layers, respectively. The first and second reflector multilayer films $K_1$, $K_2$, each made of a multilayer film which is constituted by laminating a plurality of sets of two kinds of thin films having different refractive indexes and reflects the fundamental wave, constitute resonators. In the second embodiment, the multilayer film is constructed as a laminate of $Al_2O_3$ and $SiO_2$ layers.

The film thicknesses, numbers of layers, total film thicknesses, refractive indexes, and numbers of cycles of the photonic crystal and reflectors and the total crystal length in the fifth embodiment are as follows:

1. In the active layers (ZnO layers) in the photonic crystal:

   Film thickness: 176.7 nm
   Number of layers: 30
   Total film thickness: 5301.0 nm (176.7 nm × 30 layers = 5301.0 nm)
   Refractive index for fundamental wave: 1.93
   Refractive index for second harmonic: 2.02

2. In the inactive layers ($SiO_2$ layers) in the photonic crystal:

   Film thickness: 101.4 nm
   Number of layers: 29
   Total film thickness: 2940.6 nm (101.4 nm × 29 layers = 2940.6 nm)
   Refractive index for fundamental wave: 1.45
   Refractive index for second harmonic: 1.46

3. Number of cycles in the photonic crystal: 30
4. In the $Al_2O_3$ layers in the reflector:

   Film thickness: 153.6 nm
   Number of layers: 20
   Total film thickness: 3072.0 nm (153.6 nm × 20 layers = 3072.0 nm)
   Refractive index for fundamental wave: 1.75

Refractive index for second harmonic: 1.77

4. In the $SiO_2$ layers in the reflector:

Film thickness: 185.7nm
Number of layers: 20
Total film thickness: 3714.0 nm (185.7 nm × 20 layers = 3714.0 nm)
Refractive index for fundamental wave: 1.45
Refractive index for second harmonic: 1.46

5. The number of cycles in the reflectors: 20 cycles each in the front and rear, 40 cycles in total
6. Total crystal length: 21.9 μm

As illustrated in Fig. 32, the first and second reflector multilayer films $K_1$, $K_2$ are connected to both sides of the bipolar multilayer crystal H. The bipolar multilayer crystal H is constructed such that a plurality of alternately laminated sets of active and inactive layers invert them in the inside. The "inside" means an intermediate portion $L_C$ which is near the center in the length $L_H$ of the bipolar multilayer crystal H. As illustrated in Fig. 32, the order of ZnO, $SiO_2$, ZnO, and $SiO_2$ layers is inverted to the order of ZnO, $SiO_2$, $SiO_2$, and ZnO layers in the intermediate portion $L_C$.
A fundamental wave near a wavelength of 1064 nm enters the mirror-symmetric photonic structure from one end face such that its s-polarized light is incident on the crystal plane at right angles, and is reciprocally reflected between resonators each having a multilayer film, whereby the intensity of the fundamental wave is enhanced within the photonic crystal. More specifically, since the bipolar multilayer crystal H and first and second reflector multilayer films $K_1$, $K_2$ have the structure illustrated in Fig. 32, (1) when the fundamental wave enters the mirror-symmetric composite photonic structure from one end face thereof (the end face on the first reflector multilayer film $K_1$ side), (2) the electric field is enhanced by the first reflector multilayer film $K_1$, (3) the electric field is enhanced on the first reflector multilayer film $K_1$ side of the bipolar multilayer crystal H, (4) the electric field is maximized in the intermediate portion $L_C$ of the bipolar multilayer crystal H, (4) the electric field is reduced on the second reflector multilayer film $K_2$ side of the bipolar multilayer crystal H, (5) the electric field is reduced by the second reflector multilayer film $K_2$, and (6) the transmitted wave having substantially the same intensity as that of the incident fundamental wave is emitted from the other end face (the end face on the second reflector multilayer film $K_2$ side). This is as has already been explained with reference to Fig. 31.
The fundamental wave is converted into a second harmonic near a wavelength of 532 nm in an active layer which is a ZnO layer, and the resulting second harmonic is taken out from the other end face of the photonic crystal.
Since the wavelength conversion element having the mirror-symmetric composite photonic structure explained in the foregoing outputs a third-order nonlinear signal in proportion to the cube of the electric field as a response, elements such as optical switches can be made by using it. For example, as illustrated in Fig. 33, from beams having wave number vectors of $k_1$, $k_2$ (signal and control beams), respectively, a nonlinear signal having a wave-number vector of $2k_2 - k_1$ is generated. The mirror-symmetric composite photonic structure generates a large electric field at the center of the structure (see Fig. 31) and thus is extremely advantageous to the third-order nonlinear effect illustrated in Fig. 33. Conventionally, the third-order nonlinear effect has been so small that it has been necessary to use a frequency near an electronic band end. Also, the absorption has become so large that the number of cycles has been hard to increase in the photonic crystal per se. The present invention has solved these problems by adding absorption-free DBR resonators (first and second reflector multilayer films $K_1$, $K_2$) to both ends, so as to form a mirror-symmetric composite photonic structure.

Additional Matters to Fifth Embodiment

The foregoing explanation concerning the fifth embodiment represents a case using GaAs/AlGaAs or $ZnO/SiO_2$ as a material for constructing the bipolar multilayer crystal H by way of example. However, the present invention is not limited to the above-mentioned materials. That is, the mirror-symmetric composite photonic structure element of the present invention can be constructed by using any of ZnSe/ZnMgS, $Al_{0.3}Ga_{0.7}As/Al_2O_3$, $SiO_2$/AlN, GaAs/AlAs, GaN/AlN, $ZnS/SiO_2$, $ZnS/YF_3$, and GaP/AlP as a material for constructing the bipolar multilayer crystal H. Though detailed explanations concerning performances are omitted, performances similar to those of the mirror-symmetric composite photonic structure of the present invention explained in the fifth embodiment are exhibited when the composite photonic structure element of the present invention is constructed by using the materials mentioned above.
Using the wavelength conversion element having the mirror-symmetric composite photonic structure explained in the fifth embodiment, a laser processing device can be made. In this case, the laser processing device can be made by providing a laser for generating a fundamental wave having a wavelength λ, the wavelength conversion element having the mirror-symmetric composite photonic structure explained in the fifth embodiment, and an optical system for converging the second harmonic and irradiating an object therewith. Fig. 35 illustrates a laser processing device 2 equipped with a wavelength conversion element 23 having the mirror-symmetric composite photonic structure explained in the fifth embodiment. The laser processing device 2 irradiates a composite photonic structure element 23 with a beam from a high output light source (e.g., a laser oscillator 21) such as a YAG laser, converges the resulting second harmonic, and irradiates a processing object 27 therewith, so as to achieve processing. In Fig. 35, numbers 22, 24, and 26 denote lenses, 25 a mirror.

**Industrial Applicability**

One aspect of the present invention uses an optical crystal in which a photonic crystal formed by laminating two kinds of thin films made of active and inactive layers having different refractive indexes and thicknesses is set such that a photonic bandgap end coincides with the fundamental-wave energy or two photonic bandgap ends coincide with the fundamental-wave energy and second-harmonic energy, while resonators, each of which is constituted by a dielectric multilayer film and reflects the fundamental wave, are disposed on both sides of the photonic crystal, and thus can remarkably enhance the electric field of the fundamental wave.

From the enhanced fundamental wave, the second harmonic is produced under action of the active layer having the nonlinear effect. Since the electric field of the fundamental wave is strong, a considerably large second harmonic can be obtained even when there is a decrease due to phase mismatching.

Another aspect of the present invention holds the bipolar multilayer crystal H, formed by laminating a plurality of thin films made of two kinds of active and inactive layers having different refractive indexes and thicknesses such that the sum of phase differences is near an integer multiple of $\pi$ while each phase difference is near a half-integer multiple of $\pi$ and such that the front and rear sides are conjugate to each other (the relationship between the two layers is reversed between the front and rear), between the reflectors $K_1$, $K_2$ each of which is formed by laminating two kinds of inactive thin films having different refractive indexes and thicknesses such that the sum of phase differences is near an integer multiple of $\pi$ while each phase difference is near a half-integer multiple of $\pi$, so as to yield a $K_1HK_2$ structure, absorb the whole incident wave G, enhance the electric field in the first half part, maximize the electric field in the center portion, reduce the electric field in the second half part, and output the transmitted wave T having the same intensity as that of the incident wave.

The nonlinear conversion active layer in the middle outputs a double wave. Since the fundamental wave is large, the double harmonic increases. Since the active-layer total thickness ($\Sigma d$) is small, the product $\Delta k(\Sigma d)$ of the wave-number difference $\Delta k = w - 2k$ and the active-layer total thickness can be made smaller than $\pi$. Since the phase mismatching $\Delta k(\Sigma d)$ can be reduced, a strong second harmonic can be taken out.

When a wavelength conversion element having a mirror-symmetric composite photonic structure is made, it outputs a third-order nonlinear signal in proportion to the cube of the electric field, whereby elements such as optical switches can be produced.

**Claims**

1. A composite photonic structure element comprising:

   a photonic crystal formed by alternately laminating a plurality of sets of an active layer having a nonlinear effect for converting a fundamental wave into a second harmonic and an inactive layer free of the nonlinear effect, the photonic crystal being constructed such that an energy of the fundamental wave coincides with a photonic bandgap end; and
   multilayer films, each formed by laminating a plurality of sets of two kinds of thin films having different refractive indexes, for reflecting the fundamental wave;
   wherein the multilayer films are connected to both sides of the photonic crystal;
   wherein the fundamental wave enters from one of end faces and is reciprocally reflected between resonators equipped with the multilayer films so as to enhance an intensity within the photonic crystal; and
   wherein the fundamental wave is converted into the second harmonic in the active layer, and the second harmonic is taken out from the other end face.

2. A composite photonic structure element according to claim 1, wherein the photonic crystal is constructed such that an energy of the second harmonic, in addition to the energy of the fundamental wave, coincides with a photonic bandgap end.

3. A composite photonic structure element according to claim 1 or 2, wherein the active layer is a GaAs layer, while the inactive layer is an $Al_xGa_{1-x}As$ layer.

**4.** A composite photonic structure element according to one of claims 1 to 3, wherein the inactive layer is an $Al_{0.82}Ga_{0.18}As$ layer.

**5.** A composite photonic structure element according to one of claims 1 to 4, wherein the multilayer film is a laminate of $Al_yGa_{1-y}As$ and $Al_zGa_{1-z}As$ layers.

**6.** A composite photonic structure element according to one of claims 1 to 5, wherein the multilayer film is a laminate of $Al_{0.82}Ga_{0.18}As$ and $Al_{0,24}Ga_{0.76}As$ layers.

**7.** A composite photonic structure element according to one of claims 1 to 6, wherein the fundamental wave has a wavelength near 1864 nm, while the second harmonic has a wavelength near 932 nm.

**8.** A composite photonic structure element according to claim 1 or 2, wherein the active layer is a ZnO layer, while the inactive layer is an $SiO_2$ layer.

**9.** A composite photonic structure element according to one of claims 1, 2, and 8, wherein the multilayer film is a laminate of $Al_2O_3$ and $SiO_2$ layers.

**10.** A composite photonic structure element according to one of claims 1, 2, and 8, wherein the multilayer film is a laminate ofMgO and $SiO_2$ layers.

**11.** A composite photonic structure element according to one of claims 1, 2, and 8, wherein the multilayer film is a laminate of $Ta_2O_5$ and $SiO_2$ layers.

**12.** A surface emitting laser using the composite photonic structure element according to one of claims 1 to 11.

**13.** A wavelength conversion element comprising:

a bipolar multilayer crystal H formed by alternately laminating a plurality of sets of an active layer having a nonlinear effect for converting a fundamental wave into a second harmonic and an inactive layer free of the nonlinear effect; and
first and second reflector multilayer films $K_1$, $K_2$, each formed by laminating a plurality of sets of two kinds of thin films having different refractive indexes, for reflecting the fundamental wave;
wherein the first and second reflector multilayer films $K_1$, $K_2$ are connected to both sides of the bipolar multilayer crystal H;
wherein the bipolar multilayer crystal H is constructed such that the alternately laminated plurality of sets of the active and inactive layers invert layers therewithin;
wherein the fundamental wave enters from one of end faces and is reciprocally reflected between resonators equipped with the first and second reflector multilayer films $K_1$, $K_2$ so as to enhance an intensity within the bipolar multilayer crystal H; and
wherein the fundamental wave is converted into the second harmonic in the active layer, and the second harmonic is taken out from the other end face.

**14.** A wavelength conversion element according to claim 13, wherein the bipolar multilayer crystal H is constructed such that the alternately laminated plurality of sets of the active and inactive layers invert layers in an intermediate portion located near a center in the length of the bipolar multilayer crystal H.

**15.** A wavelength conversion element according to claim 13 or 14, wherein the bipolar multilayer crystal H and the first and second reflector multilayer films $K_1$, $K_2$ are constructed such that,
when the fundamental wave enters from the one end face,
an electric field is increased in the first reflector multilayer film $K_1$,
the electric field is increased on the first reflector multilayer film $K_1$ side of the bipolar multilayer crystal H,
the electric field is maximized in an intermediate portion of the bipolar multilayer crystal H,
the electric field is decreased on the second reflector multilayer film $K_2$ side of the bipolar multilayer crystal H,
the electric field is decreased in the second reflector multilayer film $K_2$, and
a transmitted wave having substantially the same intensity as that of the fundamental wave having entered therein is emitted from the other end face.

**16.** A laser processing device comprising:

a laser for generating a fundamental wave having a wavelength $\lambda$;
the wavelength conversion element according to one of claims 13 to 15; and
an optical system for converging the second harmonic and irradiating an object therewith.

**17.** A wave conversion element comprising:

a bipolar multilayer crystal H formed by alternately laminating a plurality of sets of an active layer having a nonlinear effect for converting a fundamental wave at a wavelength $\lambda$ into a second harmonic at a wavelength $\lambda/2$, a refractive index n with respect to the fundamental wave, and a thickness d and an inactive layer, free of the nonlinear effect, having a refractive index m with respect to the fundamental wave and a thickness e, the plurality of laminated sets being joined together such as to invert layers in an intermediate portion located near a center; and
first and second reflector multilayer films $K_1$, $K_2$, each formed by laminating a plurality of sets of two kinds of thin films having different refractive indexes and being free of the nonlinear effect, for reflecting the fundamental wave;
wherein the first and second reflector multilayer films $K_1$, $K_2$ are connected to both sides of the bipolar multilayer crystal H, so as to constitute a $K_1HK_2$ structure;
wherein the bipolar multilayer crystal H and the first and second reflector multilayer films $K_1$, $K_2$ are constructed such that, when the fundamental wave enters from one of end faces, an electric field is increased in the first reflector multilayer film $K_1$, the electric field is increased on the first reflector multilayer film $K_1$ side of the bipolar multilayer crystal H, the electric field is maximized in the intermediate portion of the bipolar multilayer crystal H, the electric field is decreased on the second reflector multilayer film $K_2$ side of the bipolar multilayer crystal H, the electric field is decreased in the second reflector multilayer film $K_2$, and a transmitted wave having substantially the same intensity as that of the fundamental wave having entered therein is emitted from the other end face; and
wherein the fundamental wave enhanced in the active layer in the bipolar multilayer crystal H is caused to generate the second harmonic, and the second harmonic is taken out from the other end face.

**18.** A wave conversion element according to claim 17, wherein the phase change of the fundamental wave per active layer $p = 2\pi nd/\lambda$, the phase change of the fundamental wave per inactive layer $q = 2\pi me/\lambda$, and the refractive index difference square fraction $b = (m - n)^2/mn$ obtained by dividing the square of the refractive index difference by the product of the refractive indexes satisfy $\cos(p + q) > 1 + (b/2)\sin p \sin q$ or $\cos(p + q) < -1 + (b/2)\sin p \sin q$.

**19.** A wave conversion element according to claim 18, wherein the sum (p + q) of the phase changes p and q is near an integer multiple of $2\pi$ ($2\pi v$ where v is a positive integer); and
wherein the absolute value of the difference $(p + q) - 2\pi v)|$ between the sum (p + q) and $2\pi v$ is smaller than the square root $b^{1/2}$ of the refractive index difference square fraction b.

**20.** A wave conversion element according to claim 19, wherein the sum (p + q) of the phase changes p and q is near $2\pi$;
wherein the phase change p is near $3\pi/2$;
wherein the phase change q is near $\pi/2$;
wherein the absolute value of the difference between the phase change p and $3\pi/2$ satisfies $|p - 3\pi/2 < b^{1/2}$; and
wherein the absolute value of the difference between the phase change q and $\pi/2$ satisfies $|q-\pi/2|< b^{1/2}$.

**21.** A wave conversion element according to claim 19, wherein the sum (p + q) of the phase changes p and q is near $4\pi$;
wherein the phase change p is near $7\pi/2$ or $5\pi/2$;
wherein the phase change q is near $\pi/2$ or $3\pi/2$;
wherein the absolute value of the difference between the phase change p and $7\pi/2$ or $5\pi/2$ is less than the square root $b^{1/2}$; and
wherein the absolute value of the difference between the phase change q and $\pi/2$ or $3\pi/2$ is less than the square root $b^{1/2}$.

**22.** A wave conversion element according to claim 18, wherein the sum (p + q) of the phase changes p and q is near a half-integer multiple of $2\pi$ ($(2v + 1)\pi$ where v is 0 or a positive integer); and
wherein the absolute value of the difference $|(p + q) - (2v + 1)\pi|$ between the sum (p + q) and $(2v + 1)\pi$ is less than the square root $b^{1/2}$ of the refractive index difference square fraction b.

**23.** A wave conversion element according to claim 22, wherein the sum (p + q) of the phase changes p and q is near $\pi$;
wherein the phase change p is near $\pi/2$;
wherein the phase change q is near $\pi/2$;
wherein the absolute value of the difference between the phase change p and $\pi/2$ satisfies $|p - \pi/2| < b^{1/2}$; and
wherein the absolute value of the difference between the phase change q and $\pi/2$ satisfies $|q - \pi/2| < b^{1/2}$.

**24.** A wave conversion element according to claim 22, wherein the sum (p + q) of the phase changes p and q is near $3\pi$;
wherein the phase change p is near $3\pi/2$ or $5\pi/2$;
wherein the phase change q is near $3\pi/2$ or $\pi/2$;
wherein the absolute value of the difference between the phase change p and $3\pi/2$ or $5\pi/2$ is less than the square root $b^{1/2}$; and
wherein the absolute value of the difference between the phase change q and $3\pi/2$ or $\pi/2$ is less than the square root $b^{1/2}$.

**25.** A wave conversion element according to one of claims 17 to 24, wherein combinations of two kinds of thin films in the first and second reflector multilayer films $K_1$, $K_2$ are in reverse to each other;
wherein the combination of two kinds of thin films is reversed in the intermediate portion of the bipolar multilayer crystal;
wherein the first reflector multilayer film $K_1$ and the bipolar multilayer crystal have a common order of higher and lower refractive indexes in a front portion located closer to the first reflector multilayer $K_1$ than the intermediate portion;
wherein the second reflector multilayer film $K_2$ and the bipolar multilayer crystal have a common order of higher and lower refractive indexes in a rear portion located closer to the second reflector multilayer $K_2$ than the intermediate portion; and
wherein the relationship between the higher and lower refractive indexes is reversed between the front and rear portions.

**26.** A laser processing device comprising:

a laser for generating a fundamental wave having a wavelength $\lambda$;
the wavelength conversion element according to one of claims 17 to 25; and
an optical system for converging the second harmonic and irradiating an object therewith.

*Fig.1*

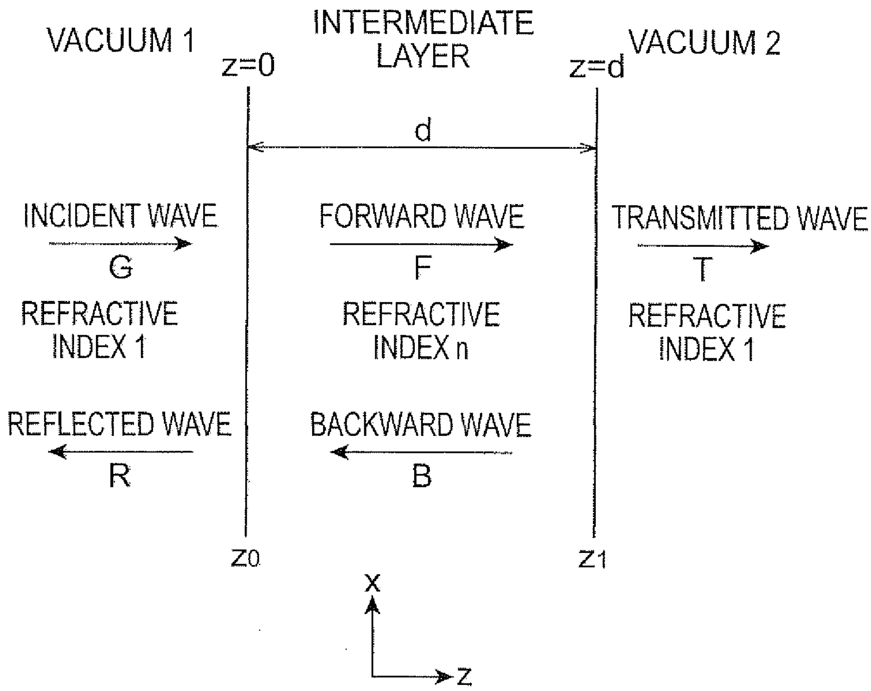
VACUUM 1
INTERMEDIATE LAYER
VACUUM 2
z=0
z=d
d
INCIDENT WAVE
G
FORWARD WAVE
F
TRANSMITTED WAVE
T
REFRACTIVE INDEX 1
REFRACTIVE INDEX n
REFRACTIVE INDEX 1
REFLECTED WAVE
R
BACKWARD WAVE
B
z0
z1
x
z

Fig.2

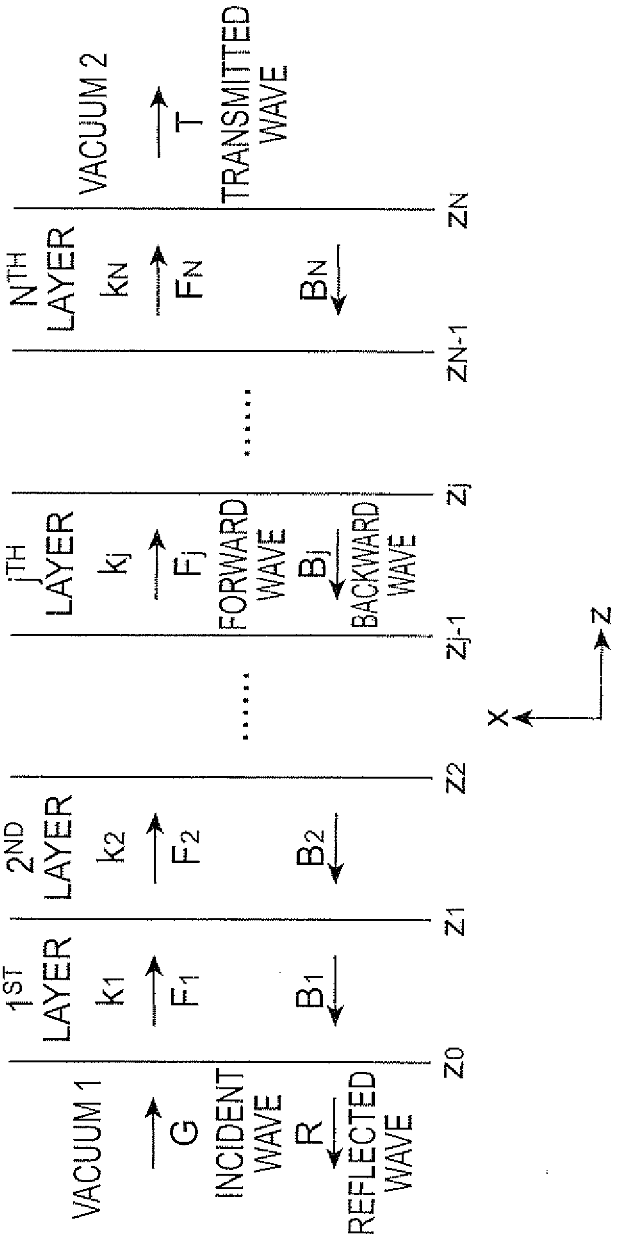
VACUUM 1
G
INCIDENT WAVE
R
REFLECTED WAVE
1ST LAYER
k1
F1
B1
2ND LAYER
k2
F2
B2
jTH LAYER
kj
Fj
FORWARD WAVE
Bj
BACKWARD WAVE
NTH LAYER
kN
FN
BN
VACUUM 2
T
TRANSMITTED WAVE
Z0
Z1
Z2
Zj-1
Zj
ZN-1
ZN
X
Z

Fig.3

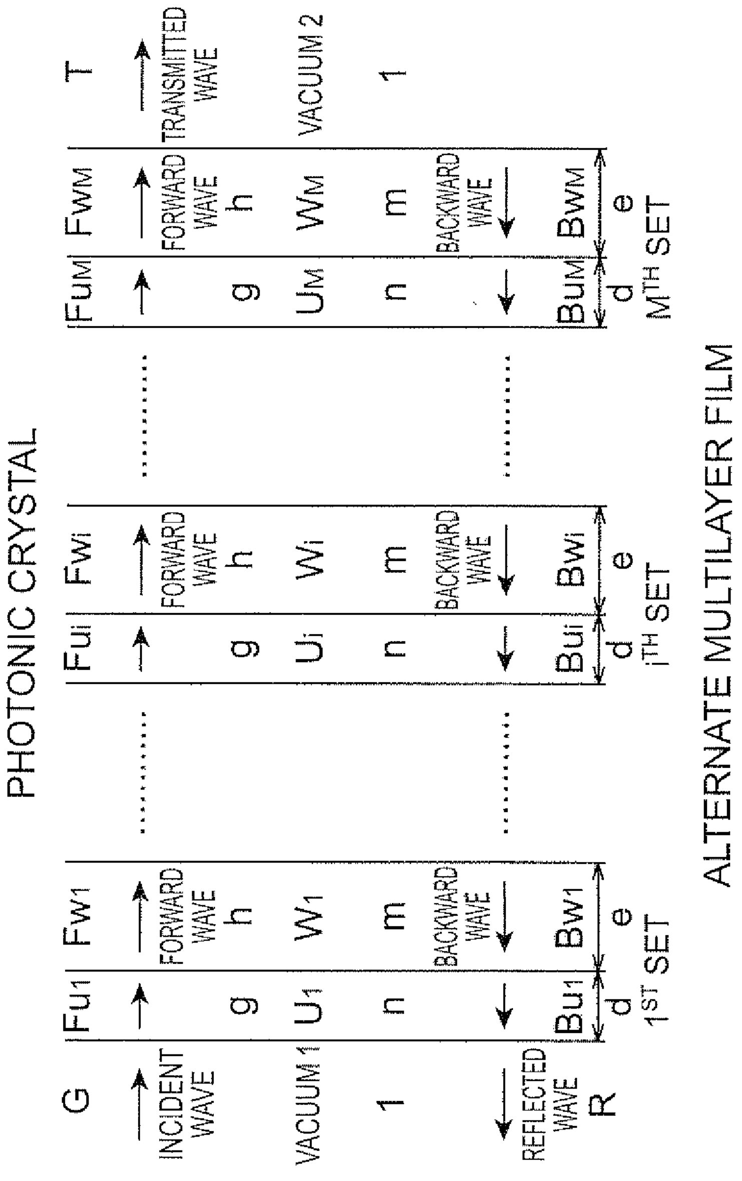
PHOTONIC CRYSTAL
G
INCIDENT WAVE
VACUUM 1
1
REFLECTED WAVE
R
Fu1
Fw1
FORWARD WAVE
g
h
U1
W1
n
m
BACKWARD WAVE
Bu1
Bw1
d
e
1ST SET
Fui
Fwi
FORWARD WAVE
g
h
Ui
Wi
n
m
BACKWARD WAVE
Bui
Bwi
d
e
iTH SET
FuM
FwM
FORWARD WAVE
g
h
UM
WM
n
m
BACKWARD WAVE
BuM
BwM
d
e
MTH SET
T
TRANSMITTED WAVE
VACUUM 2
1
ALTERNATE MULTILAYER FILM

# Fig.4

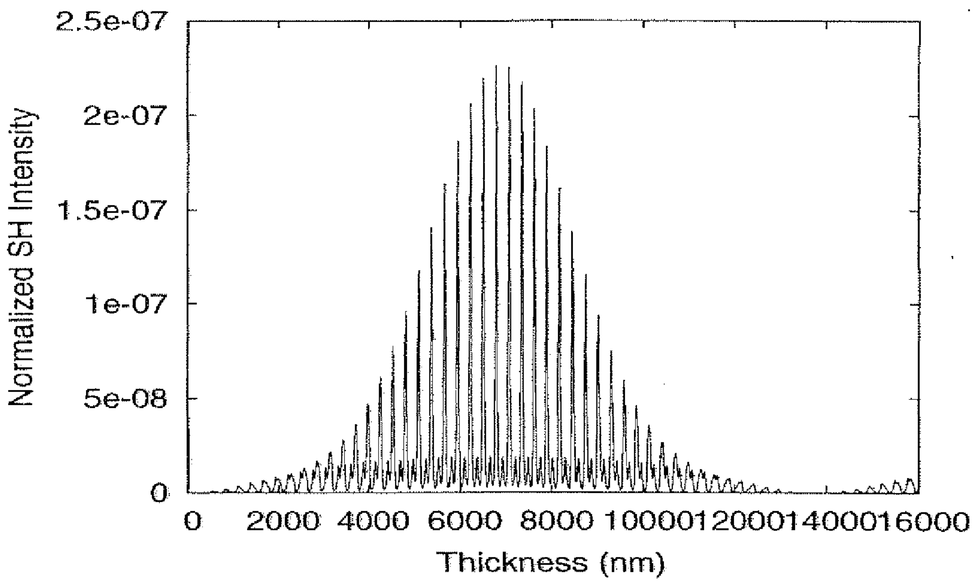
2.5e-07
2e-07
1.5e-07
1e-07
5e-08
0
Normalized SH Intensity
0
2000
4000
6000
8000
10000
12000
14000
16000
Thickness (nm)

*Fig.5*

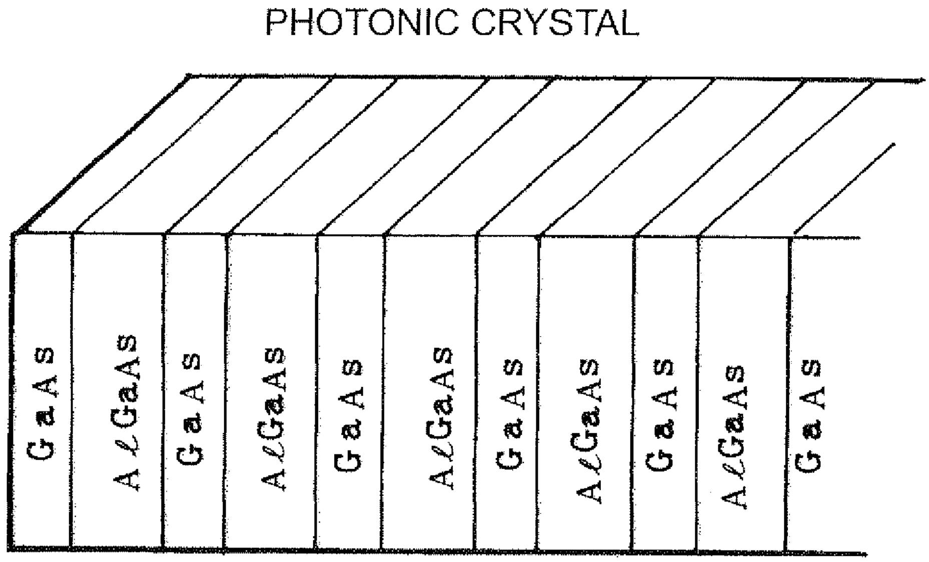
PHOTONIC CRYSTAL
GaAs
AℓGaAs
GaAs
AℓGaAs
GaAs
AℓGaAs
GaAs
AℓGaAs
GaAs
AℓGaAs
GaAs

*Fig.6*

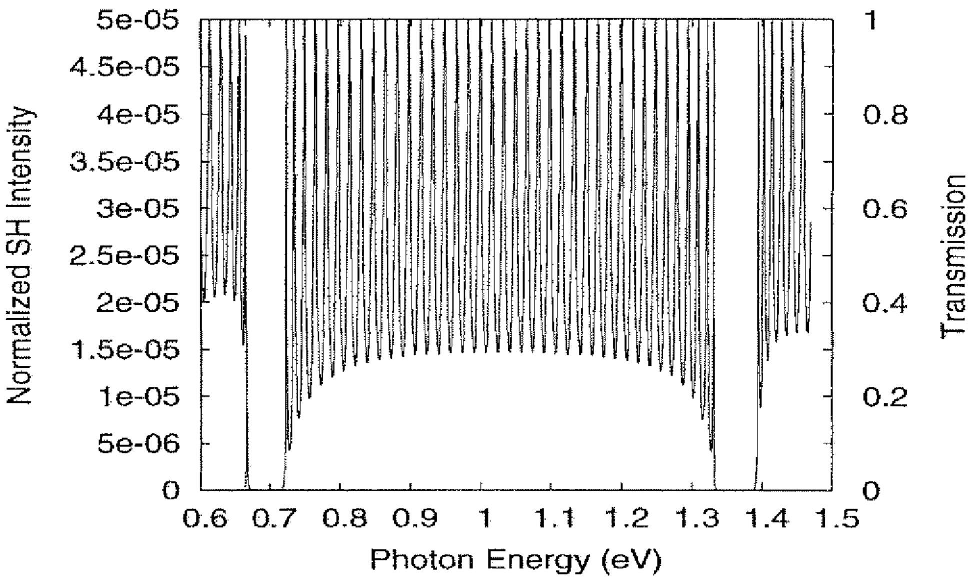
5e-05
4.5e-05
4e-05
3.5e-05
3e-05
2.5e-05
2e-05
1.5e-05
1e-05
5e-06
0
Normalized SH Intensity
1
0.8
0.6
0.4
0.2
0
Transmission
0.6 0.7 0.8 0.9 1 1.1 1.2 1.3 1.4 1.5
Photon Energy (eV)

Fig.7

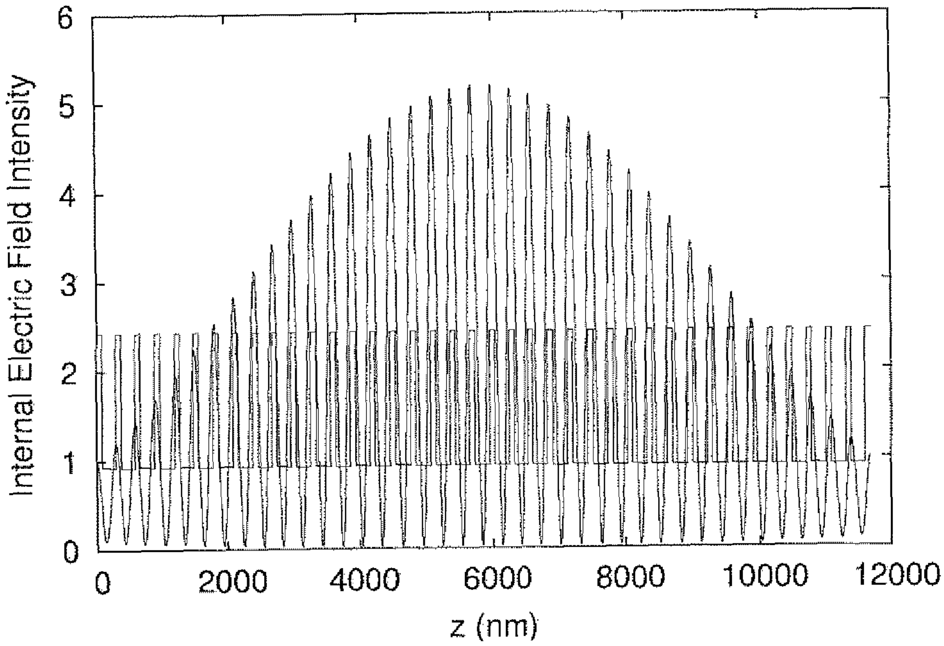
Internal Electric Field Intensity
0
1
2
3
4
5
6
0
2000
4000
6000
8000
10000
12000
z (nm)

*Fig.8*

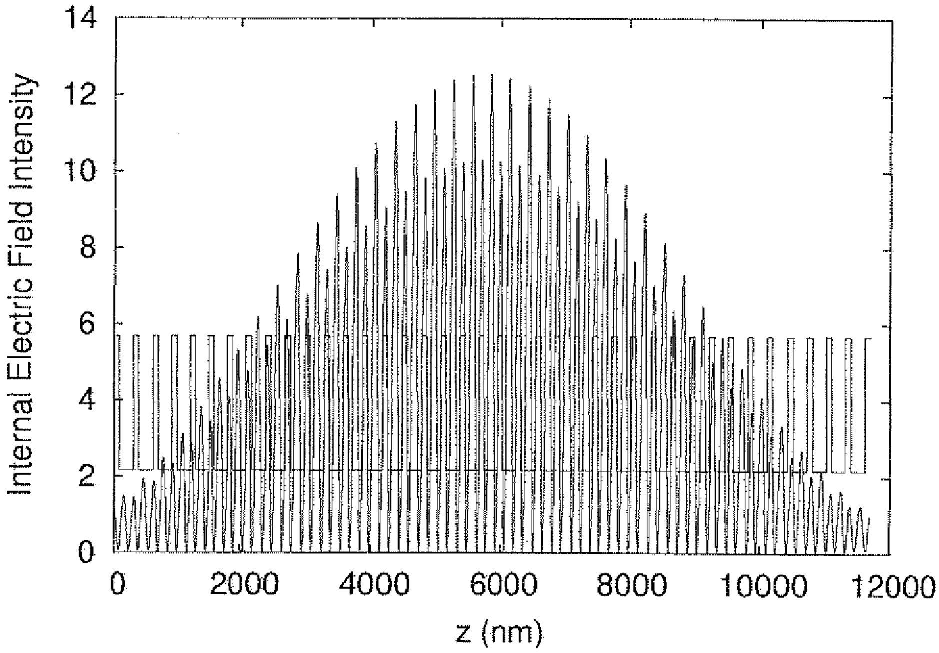
14
12
10
8
6
4
2
0
Internal Electric Field Intensity
0
2000
4000
6000
8000
10000
12000
z (nm)

Fig.9

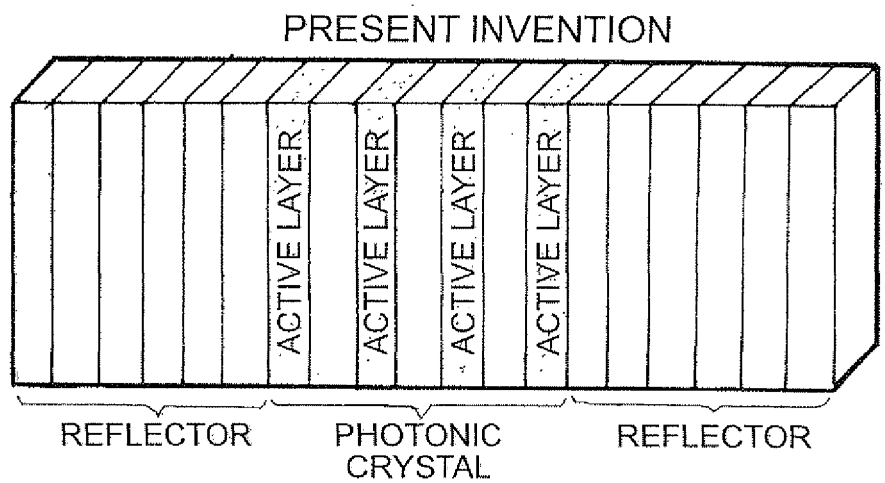
PRESENT INVENTION
ACTIVE LAYER
ACTIVE LAYER
ACTIVE LAYER
ACTIVE LAYER
REFLECTOR
PHOTONIC CRYSTAL
REFLECTOR

*Fig.10*

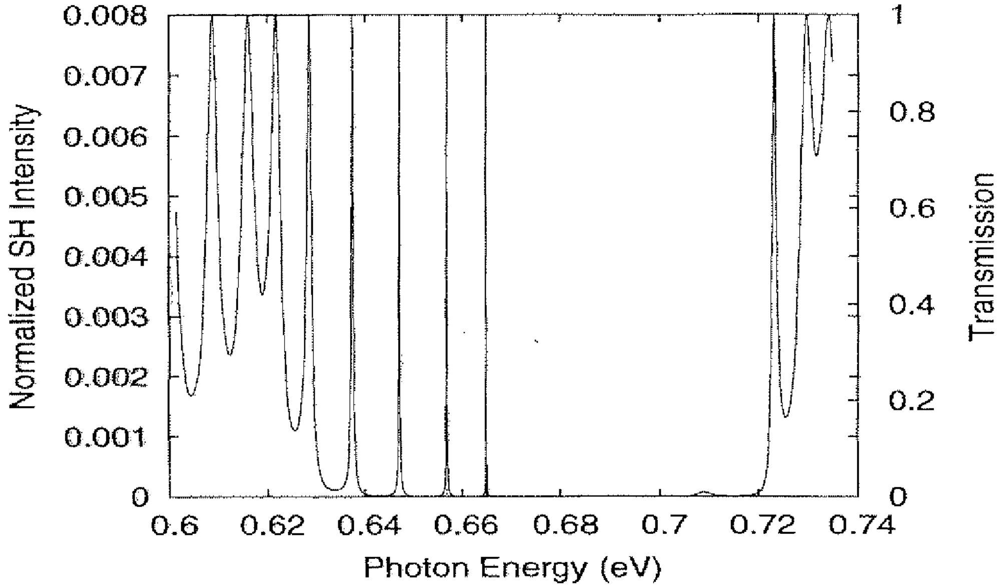
0.008
0.007
0.006
0.005
0.004
0.003
0.002
0.001
0
Normalized SH Intensity
1
0.8
0.6
0.4
0.2
0
Transmission
0.6 0.62 0.64 0.66 0.68 0.7 0.72 0.74
Photon Energy (eV)

Fig.11

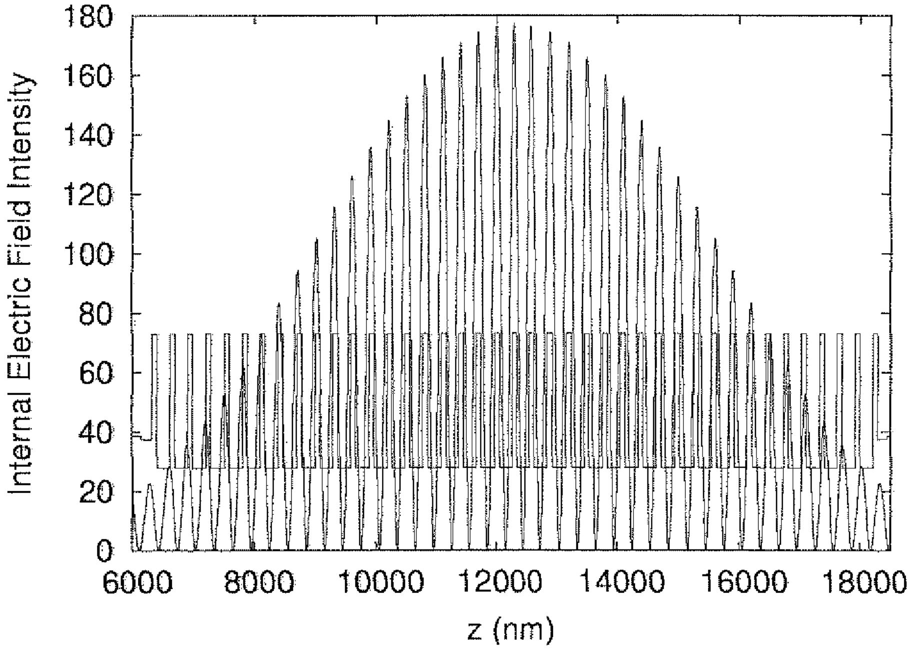
180
160
140
120
100
80
60
40
20
0
Internal Electric Field Intensity
6000
8000
10000
12000
14000
16000
18000
z (nm)

*Fig.12*

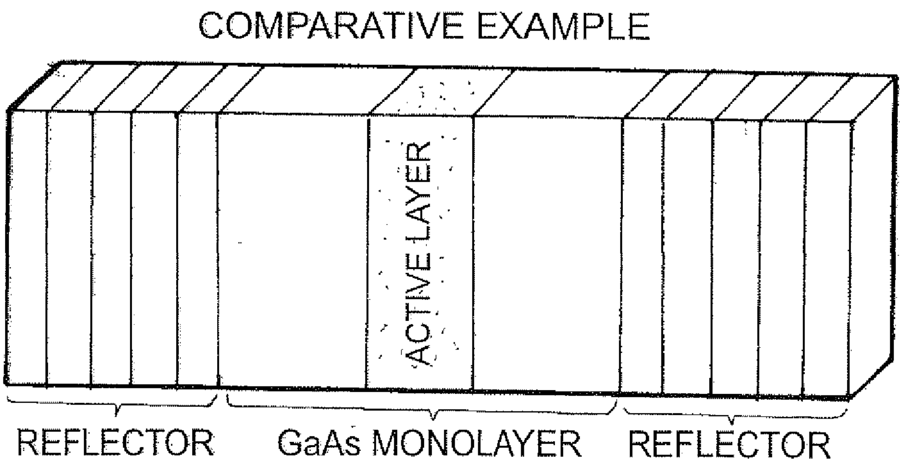
COMPARATIVE EXAMPLE
ACTIVE LAYER
REFLECTOR
GaAs MONOLAYER
REFLECTOR

*Fig.13*

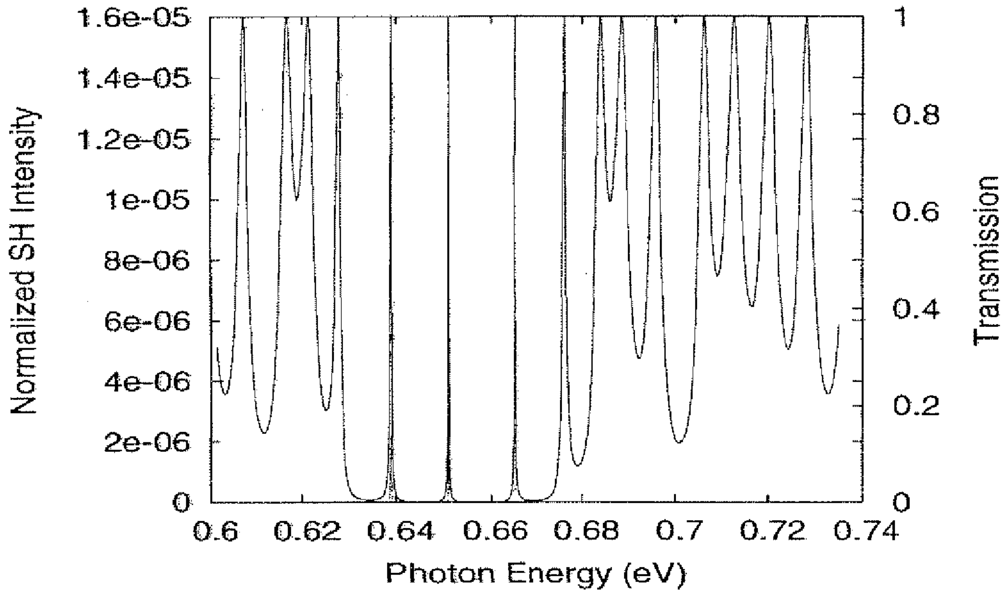
1.6e-05
1.4e-05
1.2e-05
1e-05
8e-06
6e-06
4e-06
2e-06
0
Normalized SH Intensity
1
0.8
0.6
0.4
0.2
0
Transmission
0.6
0.62
0.64
0.66
0.68
0.7
0.72
0.74
Photon Energy (eV)

Fig.14

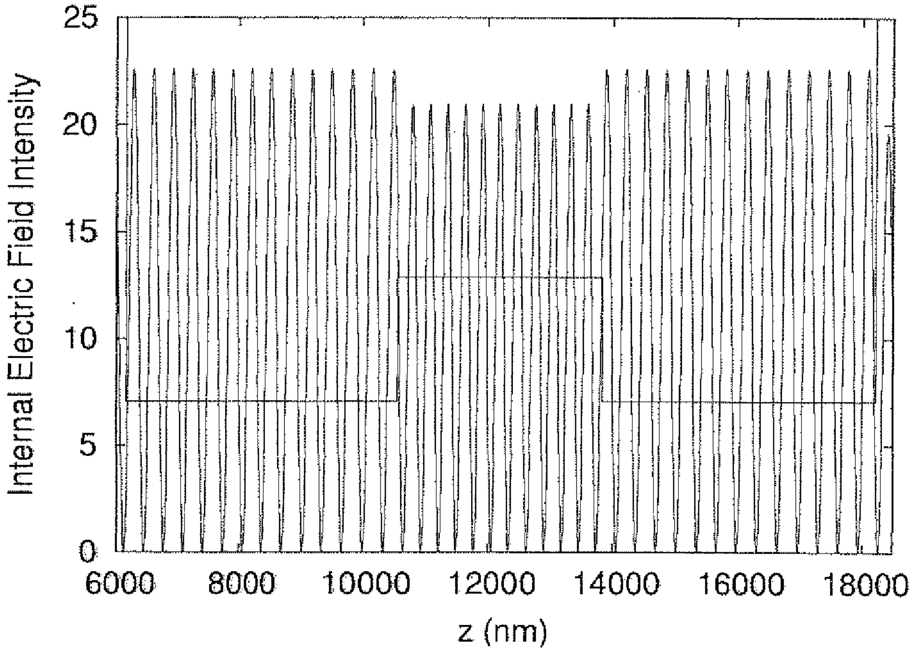
25
20
15
10
5
0
Internal Electric Field Intensity
6000
8000
10000
12000
14000
16000
18000
z (nm)

*Fig.15*

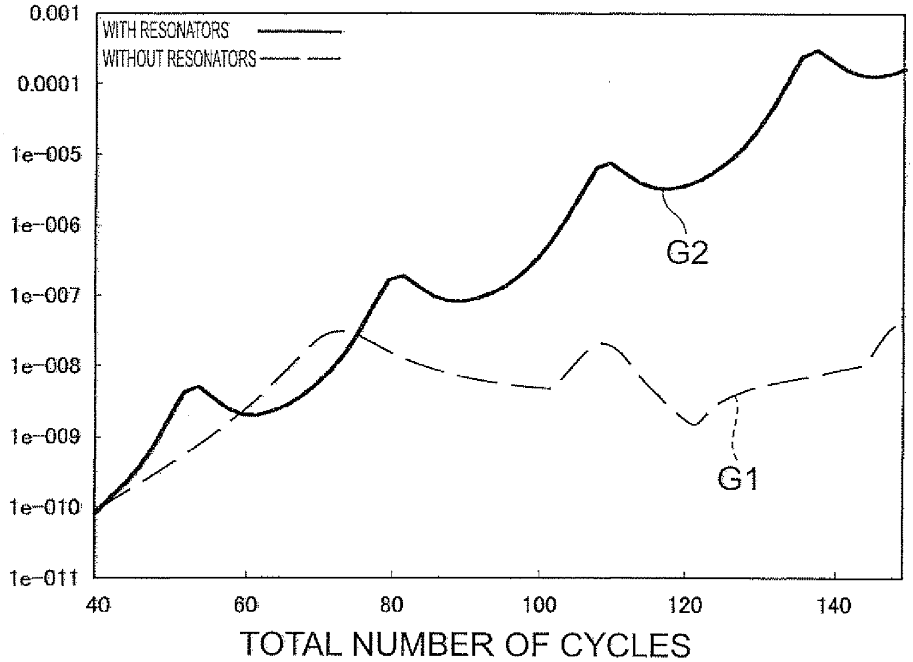
0.001
0.0001
1e-005
1e-006
1e-007
1e-008
1e-009
1e-010
1e-011
WITH RESONATORS
WITHOUT RESONATORS
G2
G1
40
60
80
100
120
140
TOTAL NUMBER OF CYCLES

*Fig.16*

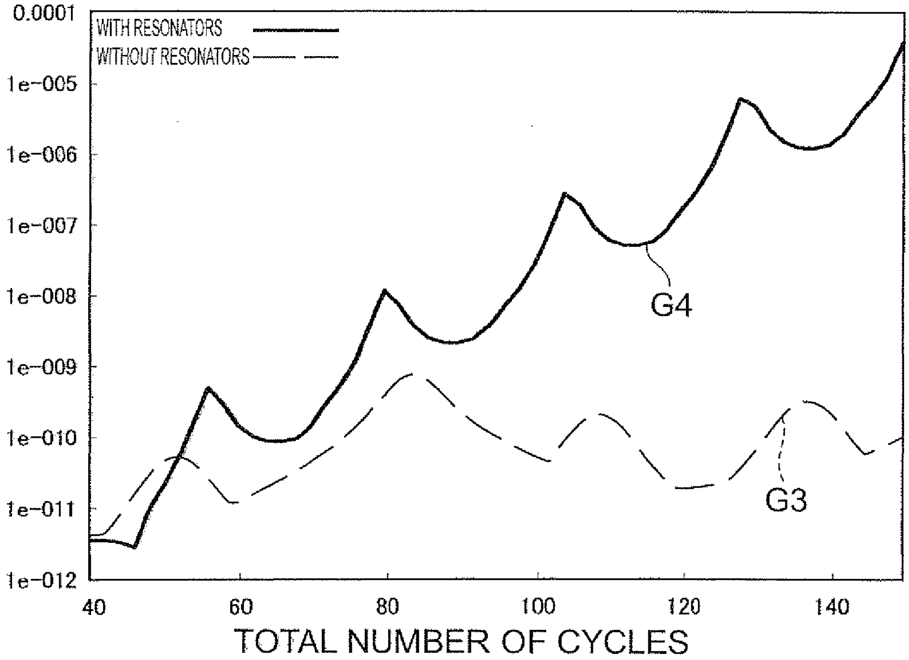
0.0001
1e-005
1e-006
1e-007
1e-008
1e-009
1e-010
1e-011
1e-012
WITH RESONATORS
WITHOUT RESONATORS
G4
G3
40
60
80
100
120
140
TOTAL NUMBER OF CYCLES

*Fig.17*

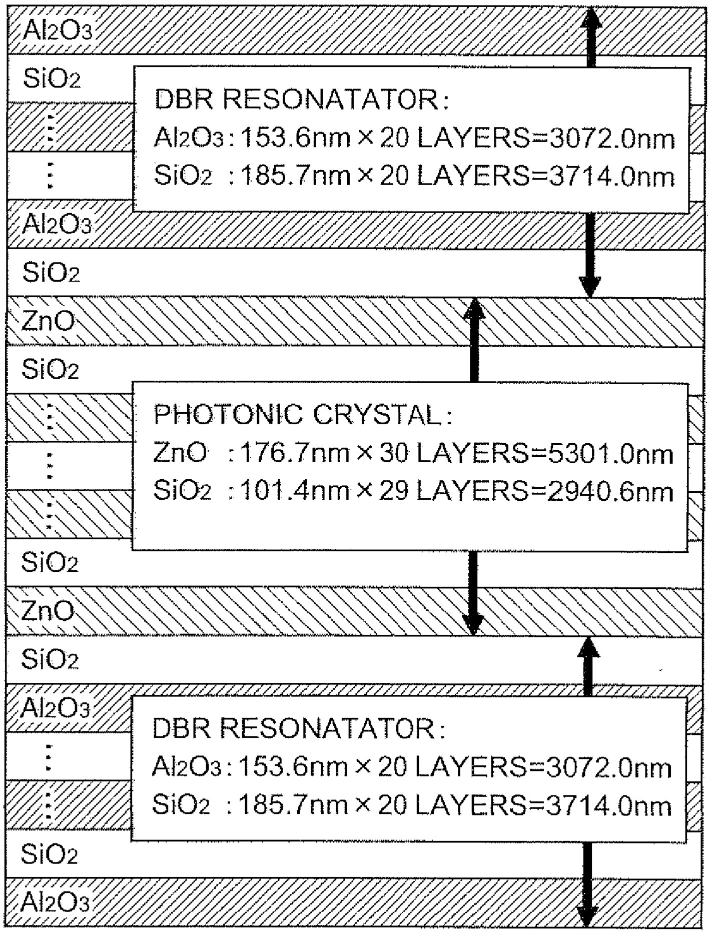
Al2O3
SiO2
DBR RESONATATOR:
Al2O3 : 153.6nm × 20 LAYERS=3072.0nm
SiO2 : 185.7nm × 20 LAYERS=3714.0nm
Al2O3
SiO2
ZnO
SiO2
PHOTONIC CRYSTAL:
ZnO : 176.7nm × 30 LAYERS=5301.0nm
SiO2 : 101.4nm × 29 LAYERS=2940.6nm
SiO2
ZnO
SiO2
Al2O3
DBR RESONATATOR:
Al2O3 : 153.6nm × 20 LAYERS=3072.0nm
SiO2 : 185.7nm × 20 LAYERS=3714.0nm
SiO2
Al2O3

*Fig.18*

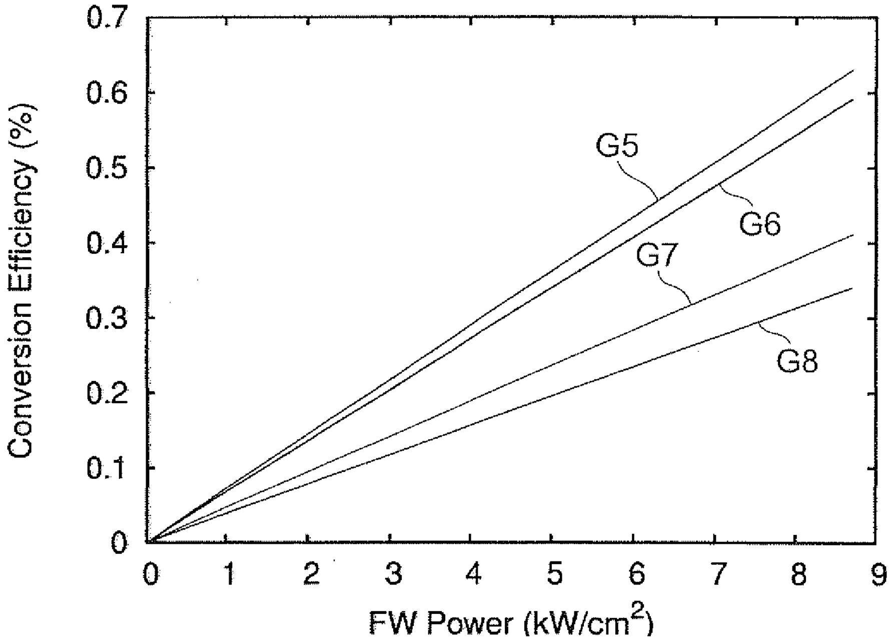
0.7
0.6
0.5
0.4
0.3
0.2
0.1
0
Conversion Efficiency (%)
G5
G6
G7
G8
0
1
2
3
4
5
6
7
8
9
FW Power (kW/cm2)

*Fig.19*

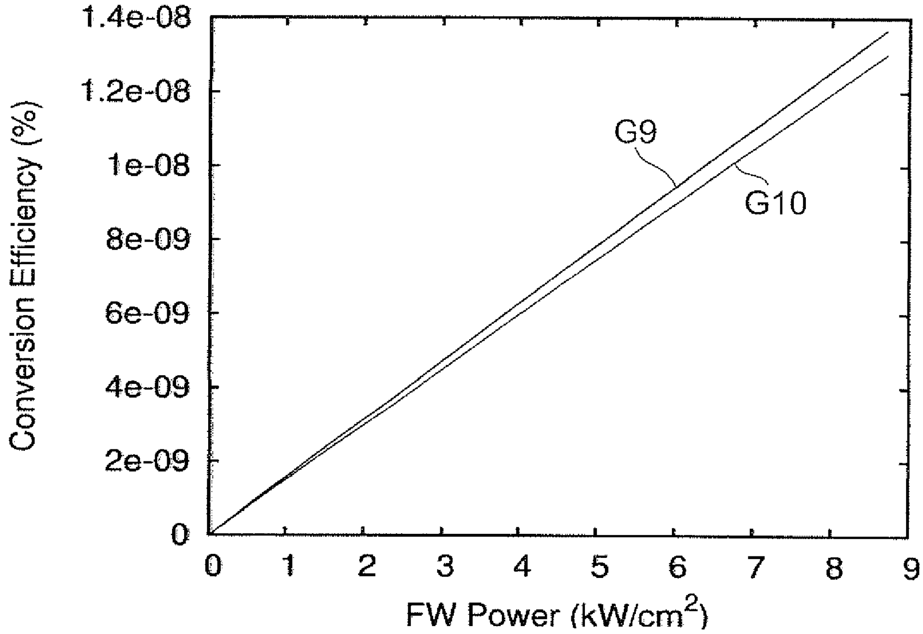
1.4e-08
1.2e-08
1e-08
8e-09
6e-09
4e-09
2e-09
0
Conversion Efficiency (%)
0
1
2
3
4
5
6
7
8
9
FW Power (kW/cm2)
G9
G10

*Fig.20*

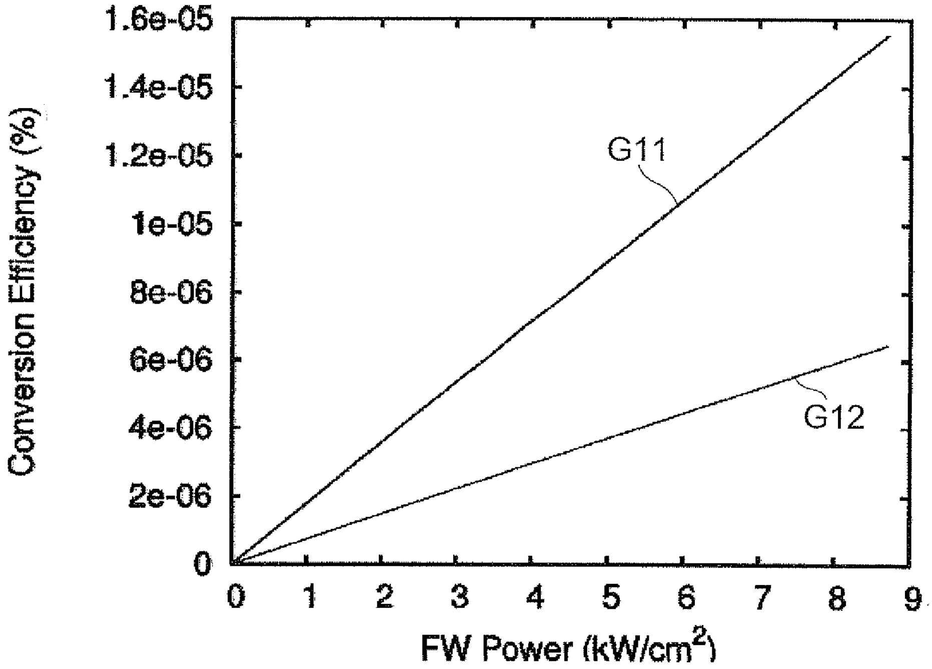
Conversion Efficiency (%)
1.6e-05
1.4e-05
1.2e-05
1e-05
8e-06
6e-06
4e-06
2e-06
0
0 1 2 3 4 5 6 7 8 9
FW Power (kW/cm$^2$)
G11
G12

*Fig.21*

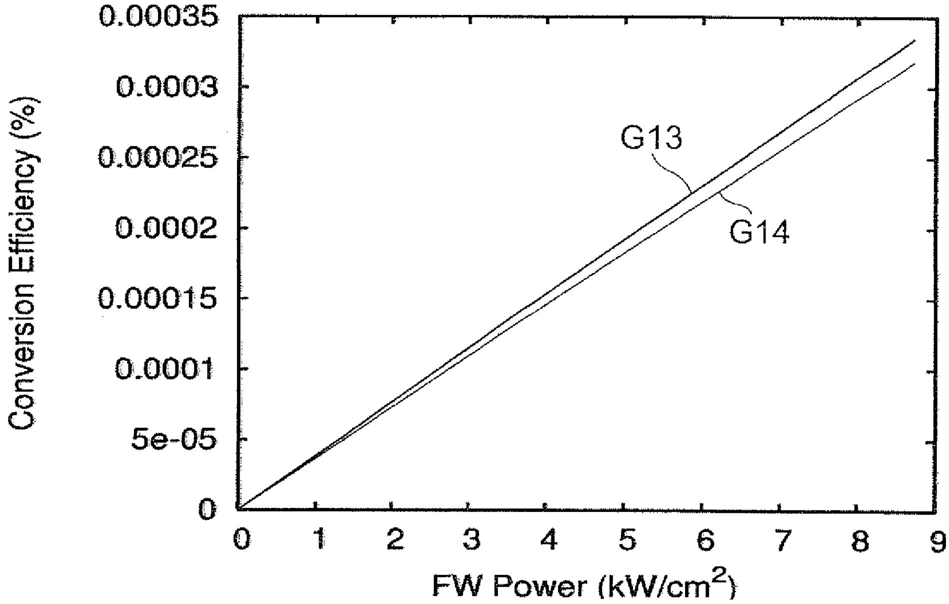
0.00035
0.0003
0.00025
0.0002
0.00015
0.0001
5e-05
0
0 1 2 3 4 5 6 7 8 9
Conversion Efficiency (%)
FW Power (kW/cm2)
G13
G14

Fig.22

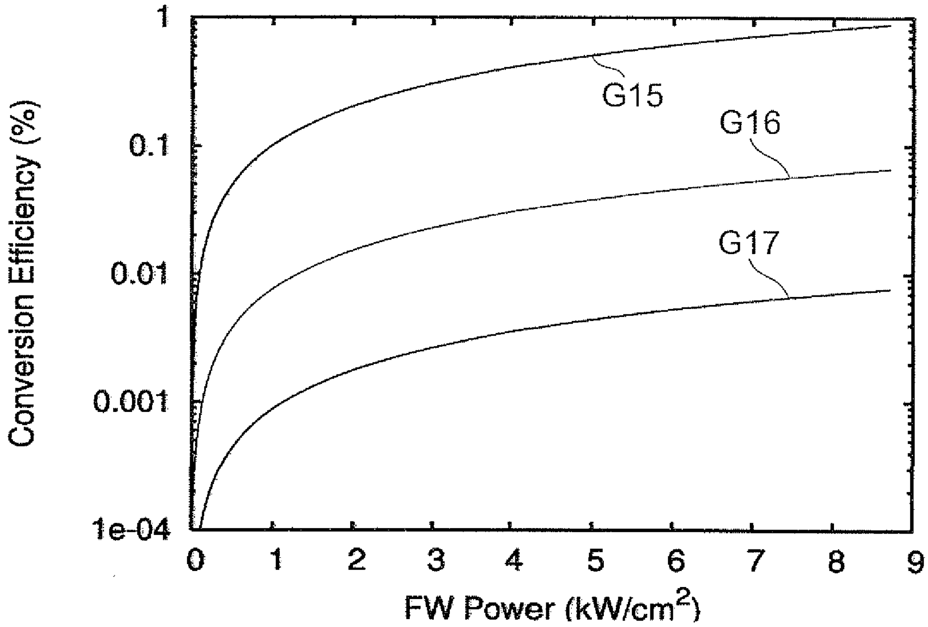
Conversion Efficiency (%)
1
0.1
0.01
0.001
1e-04
0
1
2
3
4
5
6
7
8
9
FW Power (kW/cm2)
G15
G16
G17

*Fig.23*

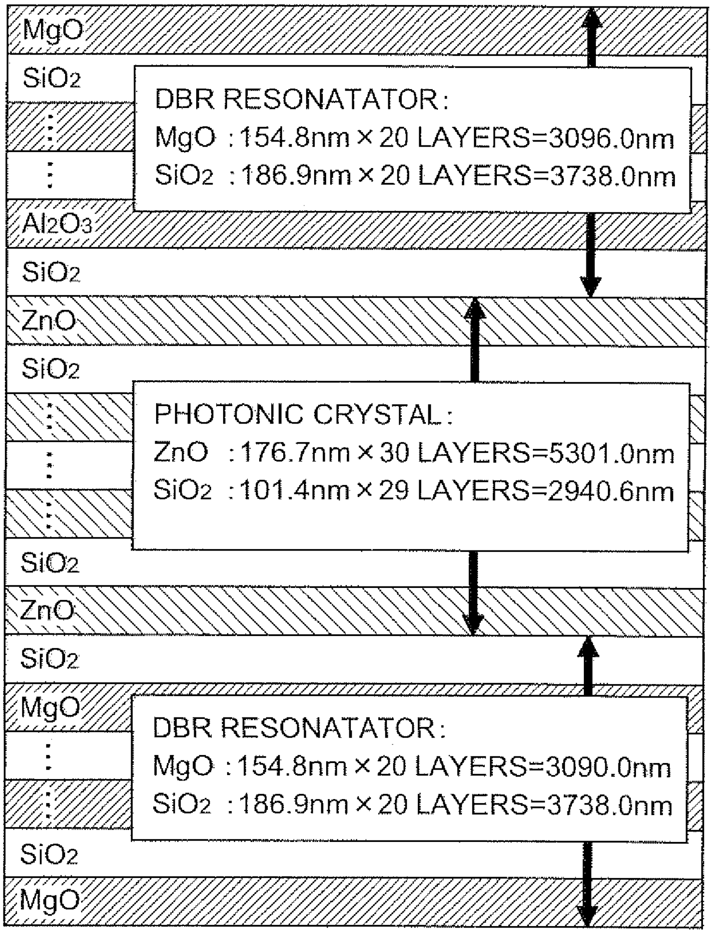
MgO
SiO2
DBR RESONATATOR:
MgO : 154.8nm × 20 LAYERS=3096.0nm
SiO2 : 186.9nm × 20 LAYERS=3738.0nm
Al2O3
SiO2
ZnO
SiO2
PHOTONIC CRYSTAL:
ZnO : 176.7nm × 30 LAYERS=5301.0nm
SiO2 : 101.4nm × 29 LAYERS=2940.6nm
SiO2
ZnO
SiO2
MgO
DBR RESONATATOR:
MgO : 154.8nm × 20 LAYERS=3090.0nm
SiO2 : 186.9nm × 20 LAYERS=3738.0nm
SiO2
MgO

*Fig.24*

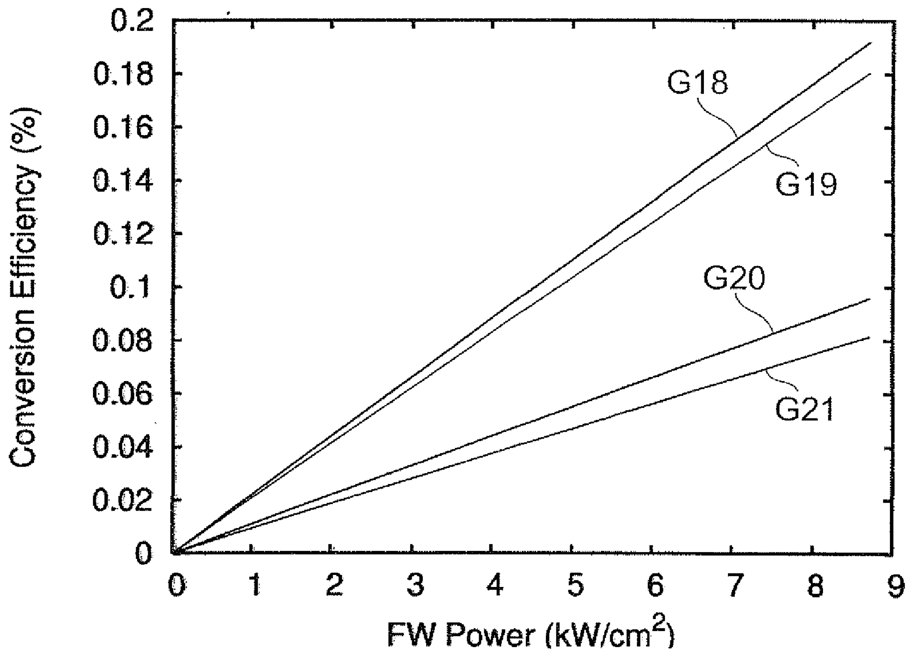
G18
G19
G20
G21
Conversion Efficiency (%)
0
0.02
0.04
0.06
0.08
0.1
0.12
0.14
0.16
0.18
0.2
0
1
2
3
4
5
6
7
8
9
FW Power (kW/cm2)

*Fig.25*

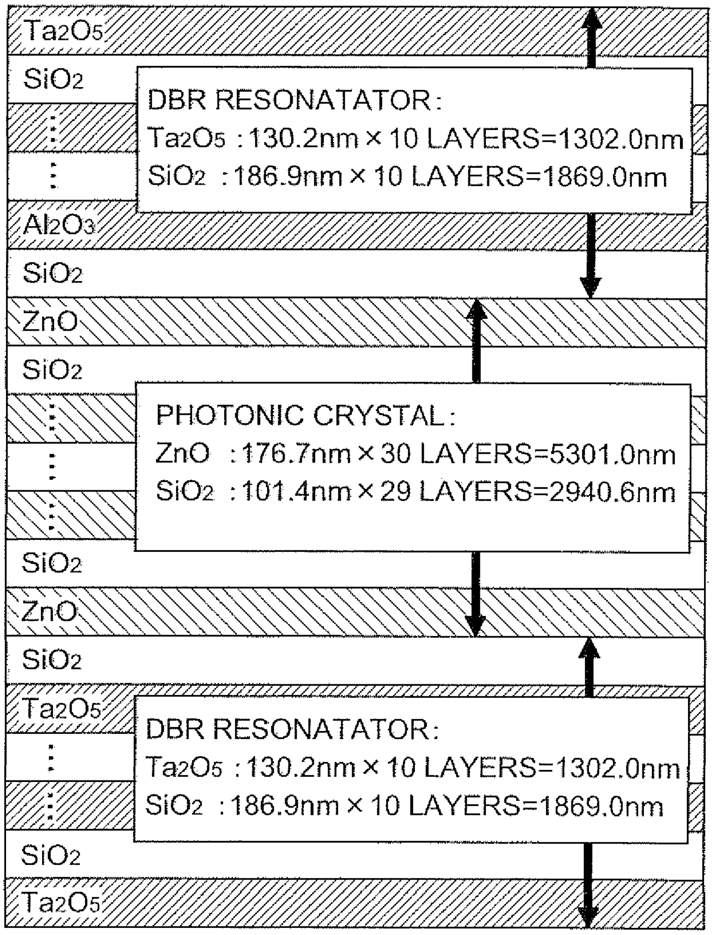
Ta2O5
SiO2
DBR RESONATATOR:
Ta2O5 : 130.2nm × 10 LAYERS=1302.0nm
SiO2 : 186.9nm × 10 LAYERS=1869.0nm
Al2O3
SiO2
ZnO
SiO2
PHOTONIC CRYSTAL:
ZnO : 176.7nm × 30 LAYERS=5301.0nm
SiO2 : 101.4nm × 29 LAYERS=2940.6nm
SiO2
ZnO
SiO2
Ta2O5
DBR RESONATATOR:
Ta2O5 : 130.2nm × 10 LAYERS=1302.0nm
SiO2 : 186.9nm × 10 LAYERS=1869.0nm
SiO2
Ta2O5

*Fig.26*

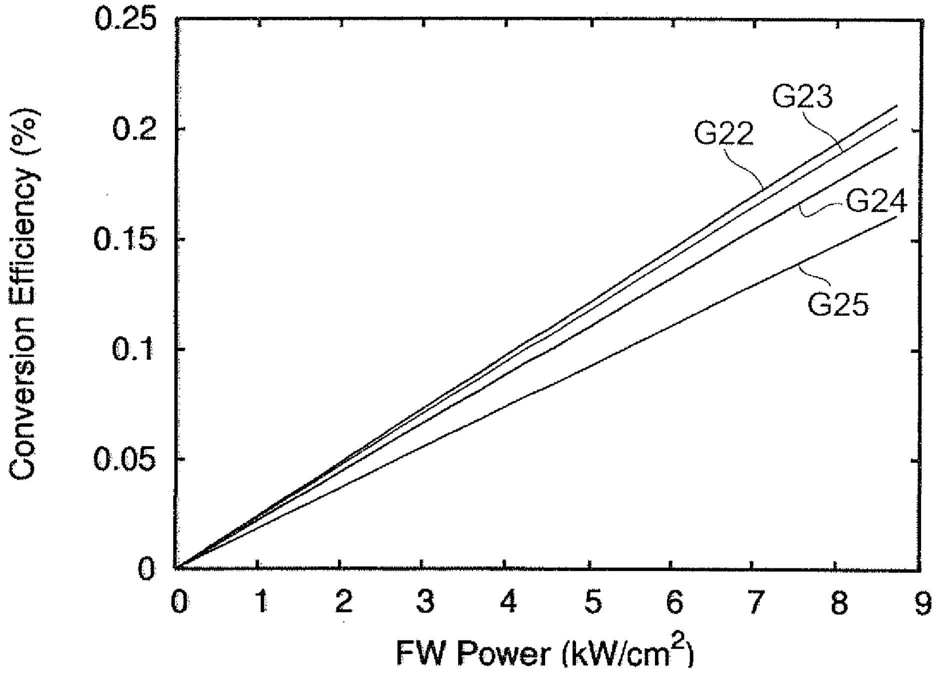

Conversion Efficiency (%)
0.25
0.2
0.15
0.1
0.05
0
0
1
2
3
4
5
6
7
8
9
FW Power (kW/cm$^2$)
G22
G23
G24
G25

Fig.27

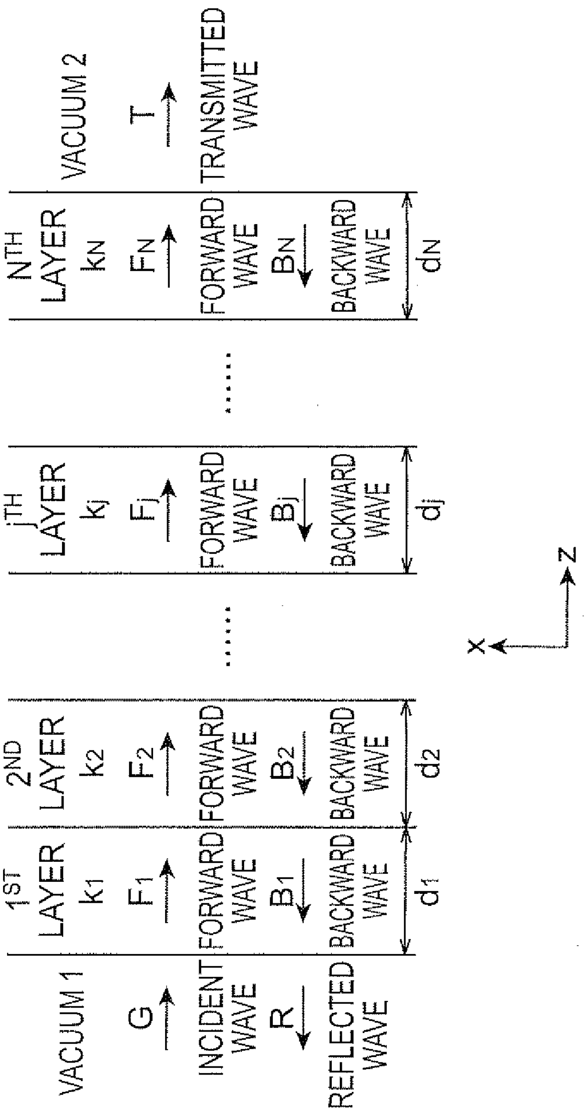
VACUUM 1
G
INCIDENT WAVE
R
REFLECTED WAVE
1ST LAYER
k1
F1
FORWARD WAVE
B1
BACKWARD WAVE
d1
2ND LAYER
k2
F2
FORWARD WAVE
B2
BACKWARD WAVE
d2
jTH LAYER
kj
Fj
FORWARD WAVE
Bj
BACKWARD WAVE
dj
NTH LAYER
kN
FN
FORWARD WAVE
BN
BACKWARD WAVE
dN
VACUUM 2
T
TRANSMITTED WAVE
x
z

Fig.28

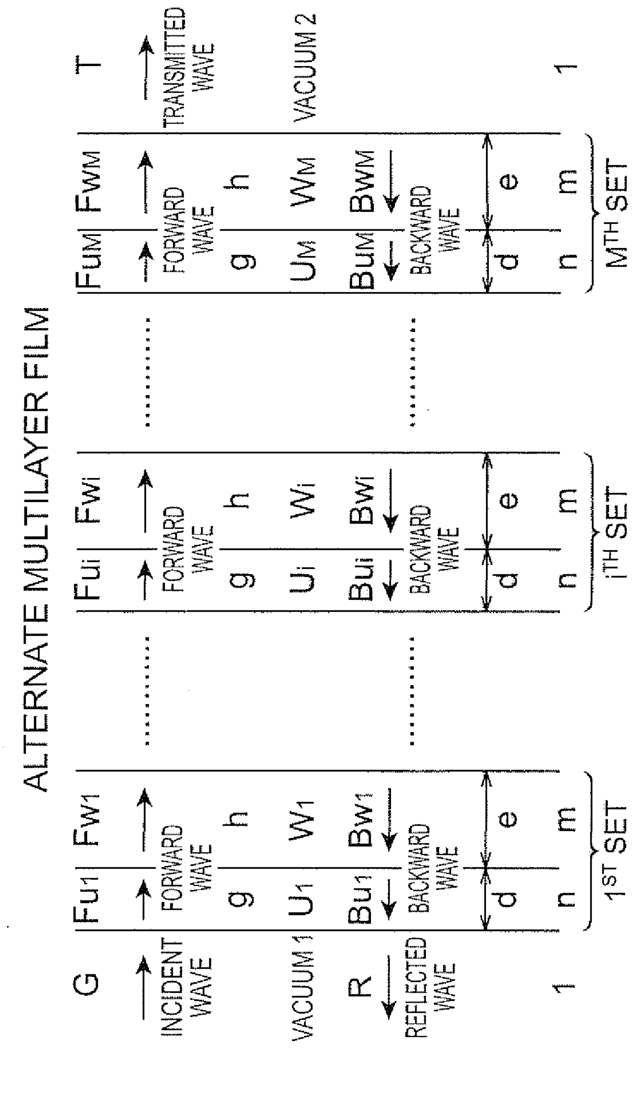
ALTERNATE MULTILAYER FILM
G
INCIDENT WAVE
VACUUM 1
R
REFLECTED WAVE
1
Fu1
Fw1
FORWARD WAVE
g
h
U1
W1
Bu1
Bw1
BACKWARD WAVE
d
e
n
m
1ST SET
Fui
Fwi
Ui
Wi
Bui
Bwi
iTH SET
FuM
FwM
UM
WM
BuM
BwM
MTH SET
T
TRANSMITTED WAVE
VACUUM 2
1

*Fig.29*

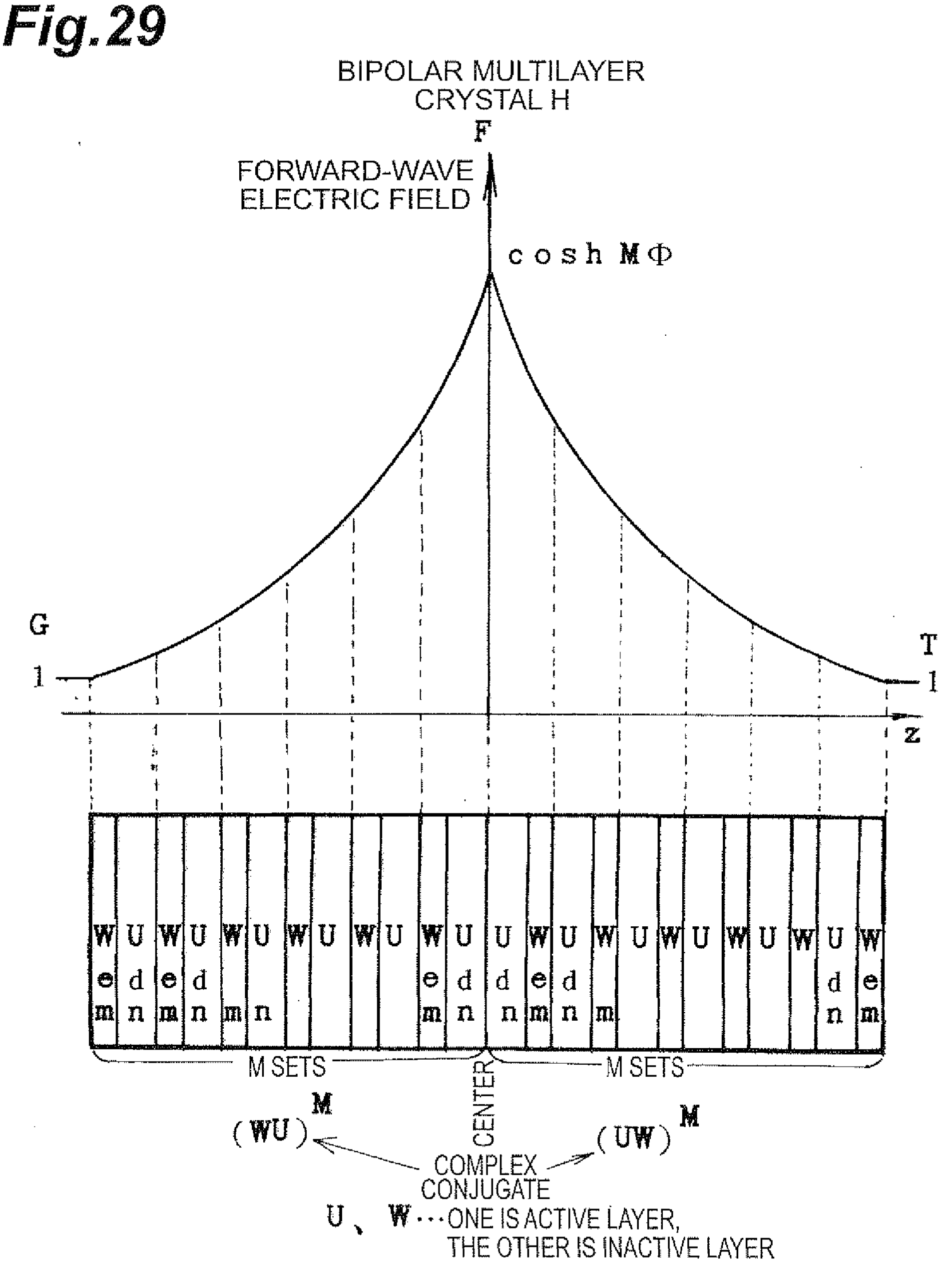
BIPOLAR MULTILAYER
CRYSTAL H
F
FORWARD-WAVE
ELECTRIC FIELD
cosh MΦ
G
1
T
1
z
W U W U W U W U W U W U U W U W U W U W U W U W
e d e d e d d e d d e
m n m n m n m n n m n m n m
M SETS
CENTER
M SETS
(WU)^M
(UW)^M
COMPLEX
CONJUGATE
U、W···ONE IS ACTIVE LAYER,
THE OTHER IS INACTIVE LAYER

*Fig.30*

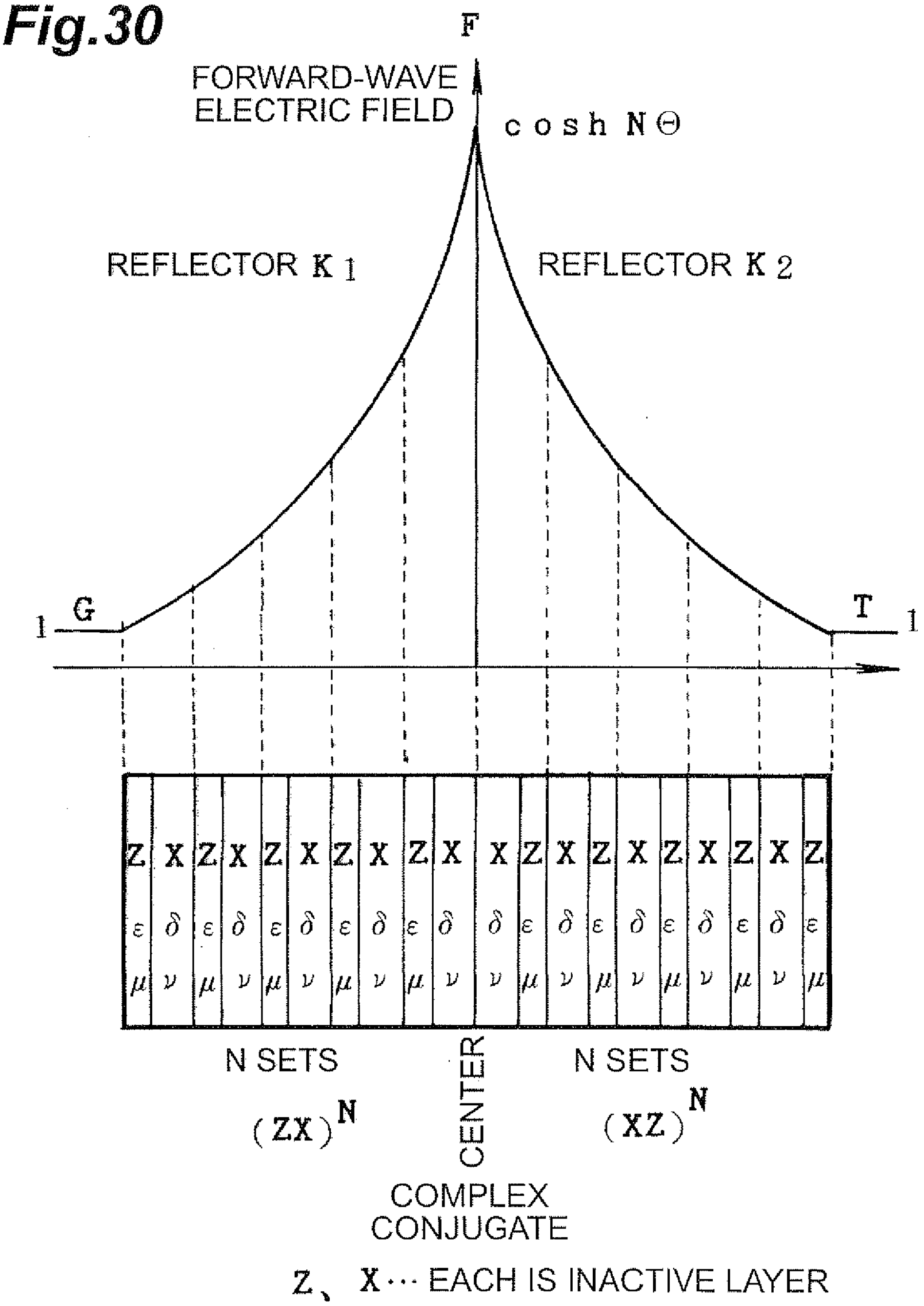
F
FORWARD-WAVE
ELECTRIC FIELD
cosh NΘ
REFLECTOR K1
REFLECTOR K2
G
T
1
1
Z X Z X Z X Z X Z X X Z X Z X Z X Z X Z
ε δ ε δ ε δ ε δ ε δ δ ε δ ε δ ε δ ε δ ε
μ ν μ ν μ ν μ ν μ ν ν μ ν μ ν μ ν μ ν μ
N SETS
(ZX)^N
CENTER
N SETS
(XZ)^N
COMPLEX
CONJUGATE
Z、 X··· EACH IS INACTIVE LAYER

*Fig.31*

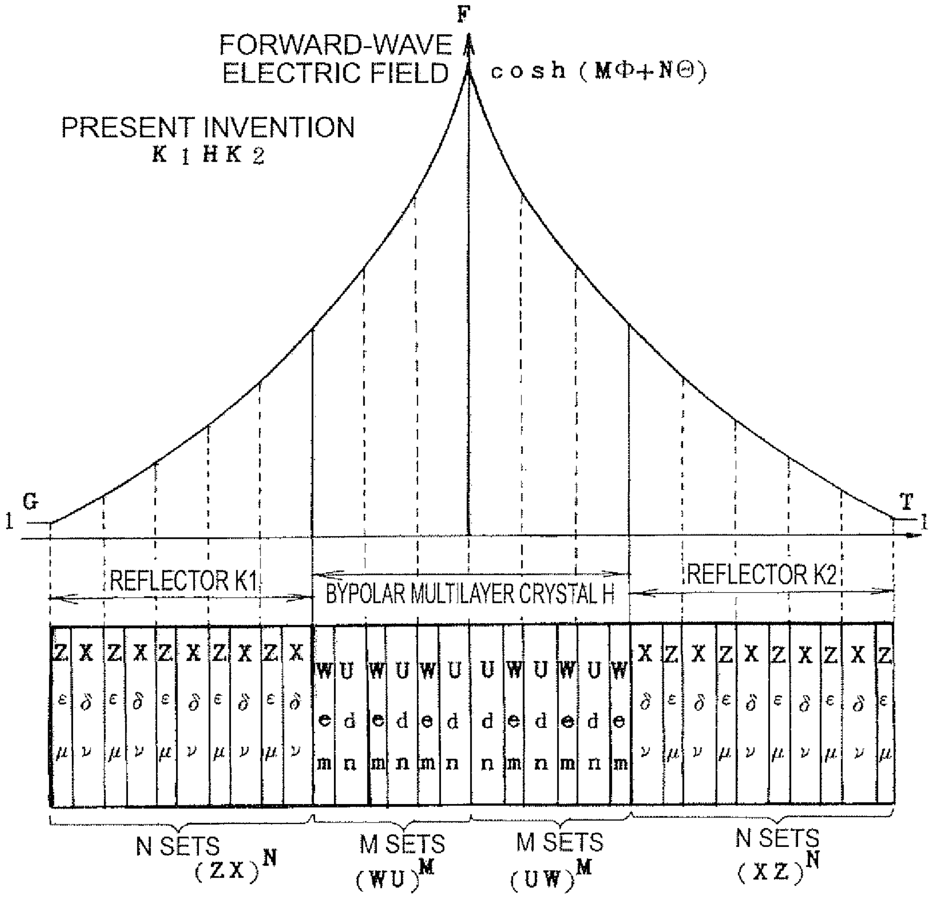
F
FORWARD-WAVE ELECTRIC FIELD
cosh (MΦ+NΘ)
PRESENT INVENTION
K1HK2
G
T
REFLECTOR K1
BYPOLAR MULTILAYER CRYSTAL H
REFLECTOR K2
N SETS (ZX)N
M SETS (WU)M
M SETS (UW)M
N SETS (XZ)N

Fig.32

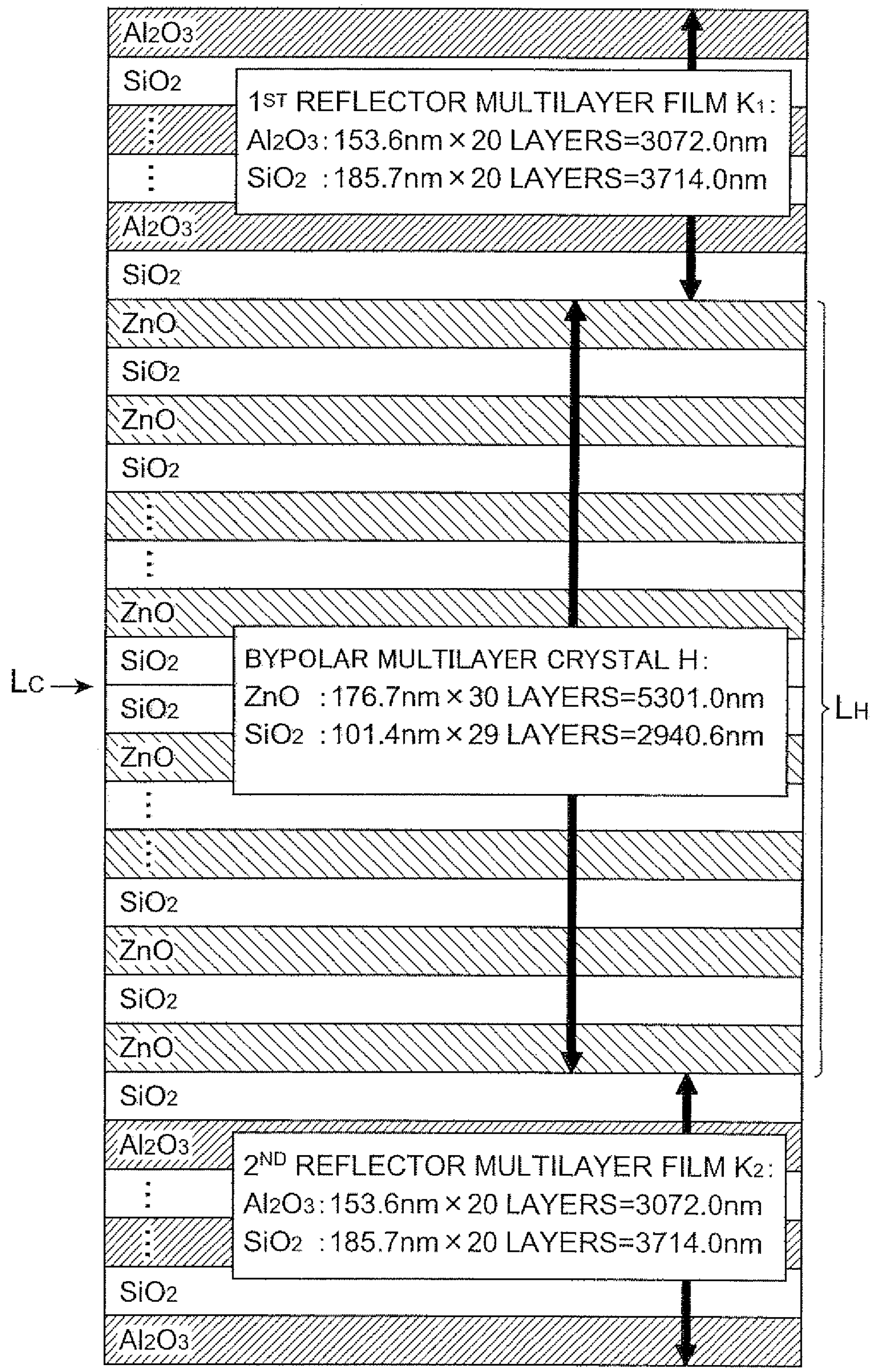
Al2O3
SiO2
1ST REFLECTOR MULTILAYER FILM K1:
Al2O3: 153.6nm × 20 LAYERS=3072.0nm
SiO2 : 185.7nm × 20 LAYERS=3714.0nm
Al2O3
SiO2
ZnO
SiO2
ZnO
SiO2
ZnO
SiO2
BYPOLAR MULTILAYER CRYSTAL H:
ZnO : 176.7nm × 30 LAYERS=5301.0nm
SiO2 : 101.4nm × 29 LAYERS=2940.6nm
LC
SiO2
ZnO
LH
SiO2
ZnO
SiO2
ZnO
SiO2
Al2O3
2ND REFLECTOR MULTILAYER FILM K2:
Al2O3: 153.6nm × 20 LAYERS=3072.0nm
SiO2 : 185.7nm × 20 LAYERS=3714.0nm
SiO2
Al2O3

*Fig.33*

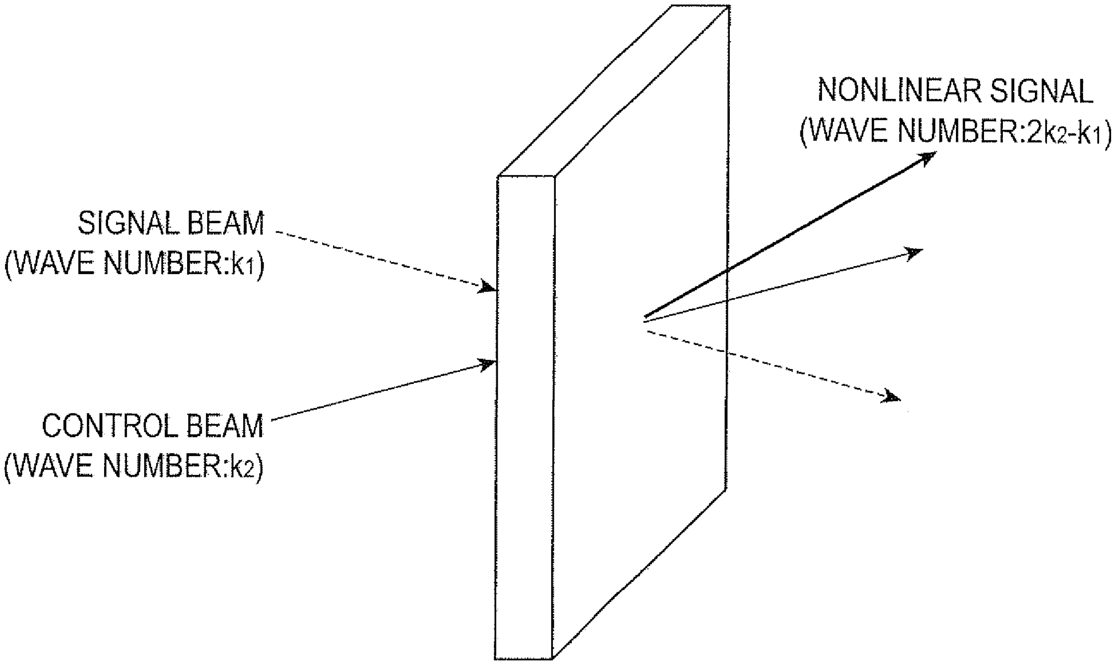
NONLINEAR SIGNAL
(WAVE NUMBER:2k2-k1)
SIGNAL BEAM
(WAVE NUMBER:k1)
CONTROL BEAM
(WAVE NUMBER:k2)

*Fig.34*

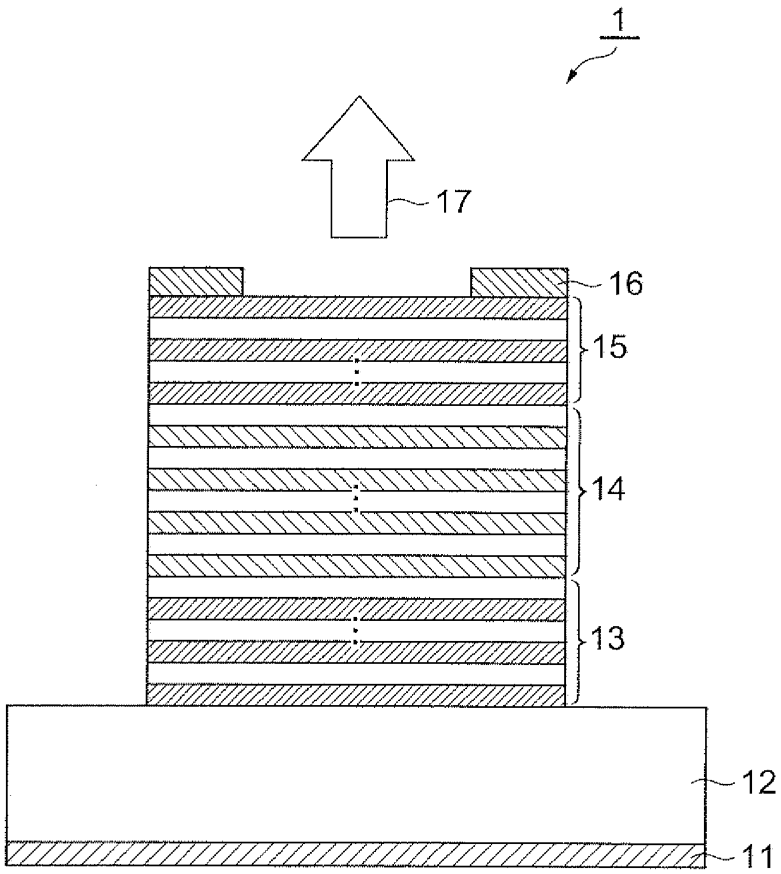

Fig.35

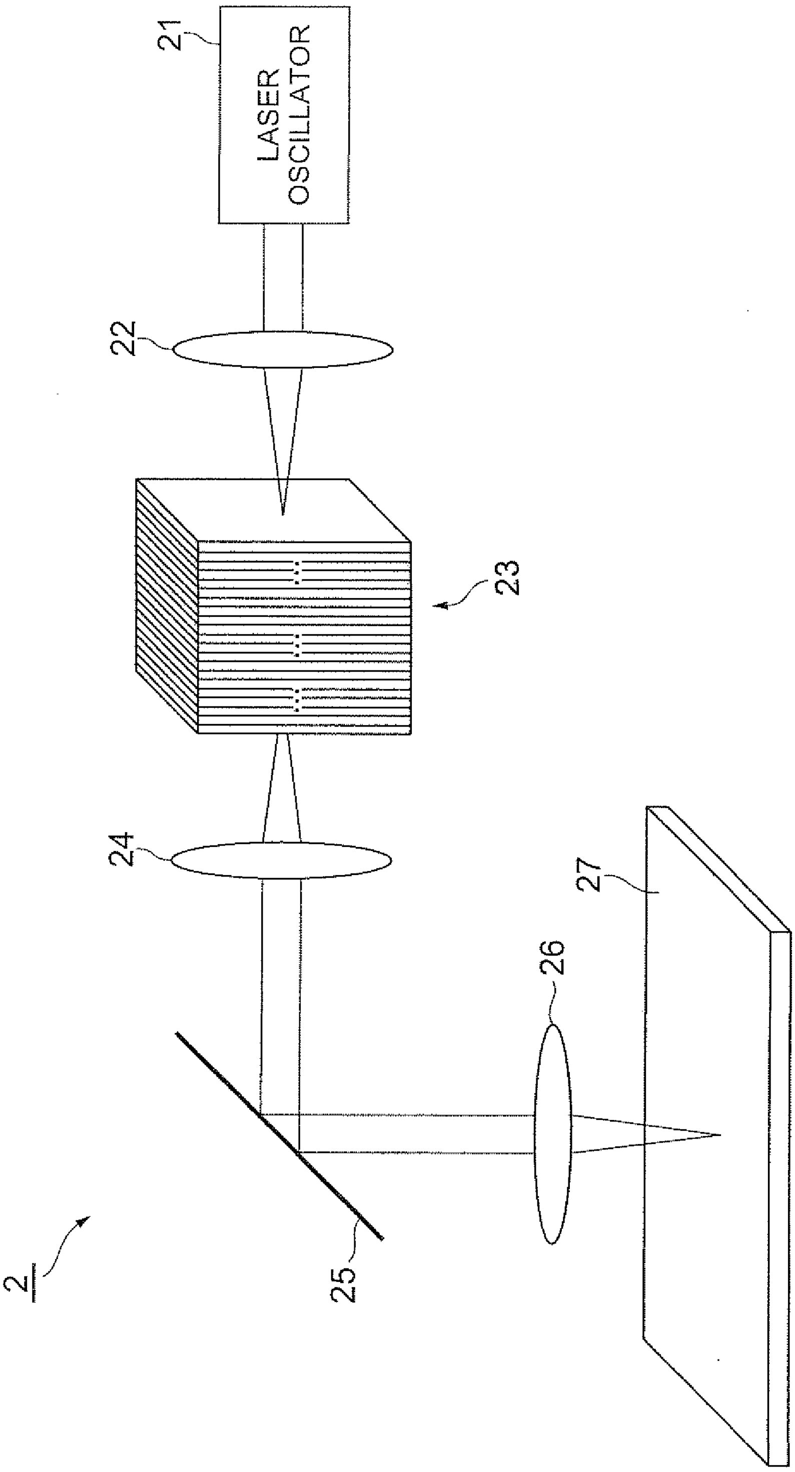

**INTERNATIONAL SEARCH REPORT**

International application No.
PCT/JP2008/072695

A. CLASSIFICATION OF SUBJECT MATTER
*G02F1/37*(2006.01)i

According to International Patent Classification (IPC) or to both national classification and IPC

B. FIELDS SEARCHED

Minimum documentation searched (classification system followed by classification symbols)
G02F1/35-1/39

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | Masaru MINAGUCHI et al., 'Handotai/Yudentai Tasomaku ni Okeru Giji Iso Seigo Daini Ko Choha Hassei to Photonic Band Koka III', Abstracts of the Meeting of the Physical Society of Japan, Vol.59, No.2, 2004 Nen Shuki Taikai, separate Vol.2, 25 August, 2004 (25.08.04), page 137, 15aXC-6 | 1-12<br>13-26 |
| Y<br>A | SCALORA M. et al., 'Pulsed second-harmonic generation in nonlinear, one-dimensional, periodic structures', PHYSICAL REVIEW A, Vol.56, No.4, October 1997, p.3166-3174 | 1-12<br>13-26 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 March, 2009 (09.03.09) | 24 March, 2009 (24.03.09) |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/072695

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2004-279882 A (National Institute of Advanced Industrial Science and Technology), 07 October, 2004 (07.10.04), Par. Nos. [0013] to [0016]; Fig. 17 (Family: none) | 1-12<br>13-26 |
| Y<br>A | HAIDAR R. et al., 'Optical Parametric Oscillation in Microcavirties Based on Isotropic Semiconductors: A Theoretical Study', IEEE JOURNAL OF QUANTUM ELECTRONICS, Vol.39, No.4, April 2003, p.569-576 | 1-12<br>13-26 |
| P,X | Satoru KATSUHARA et al., 'Fukugo Photonic Kozo no Denba Zofuku ni yoru Daini Ko Choha Zokyo Koka', Abstracts of the Meeting of the Physical Society of Japan, Vol.63, No.1, Dai 63 Kai Nenji Taikai, separate Vol.4, 29 February, 2008 (29.02.08), page 738, 26aPS-26 | 1-26 |
| P,X | Satoru KATSUHARA et al., 'Photonic Danba Zofukuho to Giji Iso Seigoho ni Okeru Daini Ko Choha Hassei no Hikaku', Abstracts of the Meeting of the Physical Society of Japan, Vol.63, No.2, 2008 Nen Shuki Taikai, separate Vol.4, 25 August, 2008 (25.08.08), page 660, 22aPS-46 | 1-26 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007206439 A

### Non-patent literature cited in the description


- **Jun Sakuma.** Wavelength conversion to infrared and deep UV regions. *Journal of Japan Laser Processing Society,* 2001, vol. 8 (2), 129-134
- **Takashi Kondo.** Wavelength conversion using nonlinear optical crystal. *Journal of Japan Laser Processing Society,* 2001, vol. 8 (2), 139-143
- **Yusuke Mori ; Masashi Yoshimura ; Tomosumi Kamimura ; Yap Yoke Khin ; Takatomo Sasaki.** Present state and problems of wavelength conversion crystal for generating UV laser beam. *Journal of Japan Laser Processing Society,* 2001, vol. 8 (2), 109-113
- **Naotada Okada ; Michio Nakayama ; Ryuichi Togawa ; Hiroshi Yuasa.** SHG-YAG laser and its application. *Journal of Japan Laser Processing Society,* 2001, vol. 8 (2), 114-118
- **Tetsuo Kojima ; Susumu Konno ; Shuichi Fujikawa ; Koji Yasui.** THG and FHG lasers for fine processing. *Journal of Japan Laser Processing Society,* 2001, vol. 8 (2), 119-123
- **Sunao Kurimura ; Martin M. Fejer ; Takunori Taira ; Yoshiaki Uesu ; Hirochika Nakajima.** Twin-controlled crystal quartz for quasi-phase-matched wavelength conversion in ultraviolet region. *OYO BUTURI,* 2000, vol. 69 (5), 548-552
- **H.Yang ; P.Xie ; S.K. Chan ; Z.Q. Zhang ; LK. Sou ; G.K.L. Wong ; K.S. Wong.** Efficient second harmonic generation from large band gap II-VI semiconductor phtonic crystal. *Appl. Phys. Lett.,* 2005, vol. 87, 131106
- **Aref Chowdhury ; Hock M. Ng ; Manish Bhardwaj ; Nils G. Weimann.** Second-harmonic generation in periodically poled GaN. *Appl. Phys. Lett.,* 11 August 2003, vol. 83 (6), 1077-1079
- **Eli Yablonovitch.** Inhibited Spontaneous Emission in Solid-State Physics and Electronics. *Phy. Rev. Lett.,* May 1987, vol. 58 (20), 2059-2062